# EUROPÄISCHE PATENTSCHRIFT

(11) **EP 3 297 823 B1**
(45) Veröffentlichungstag und Bekanntmachung des Hinweises auf die Patenterteilung: **23.01.2019**
(21) Anmeldenummer: 16725059.6
(22) Anmeldetag: 12.05.2016
(51) Int. Cl.: B32B 5/30, A41D 31/00, A41D 13/00, A62B 17/00, A62B 23/00, A62D 5/00, B32B 7/14, B32B 33/00, C09J 5/08

(54) **NEUARTIGES TEXTILES SCHUTZMATERIAL UND VERFAHREN ZU DESSEN HERSTELLUNG**
TEXTILE PROTECTIVE MATERIAL OF A NEW TYPE AND METHOD FOR PRODUCING SAME
MATÉRIAU TEXTILE PROTECTEUR INNOVANT ET PROCÉDÉ DE FABRICATION DE CELUI-CI

(30) Priorität: 25.07.2015 DE 102015009687; 29.07.2015 DE 102015112381; 11.08.2015 DE 102015113213
(43) Veröffentlichungstag der Anmeldung: 28.03.2018
(73) Patentinhaber: Blücher GmbH, 40699 Erkrath (DE)
(72) Erfinder: BOEHRINGER, Bertram, 42115 Wuppertal (DE); CARSTENSEN, Anna, 40476 Düsseldorf (DE); NGUYEN,Cong Minh, 42277 Wuppertal (DE)
(74) Vertreter: Von Rohr Patentanwälte Partnerschaft mbB
(86) Internationale Anmeldenummer: PCT/EP2016/060688
(87) Internationale Veröffentlichungsnummer: WO 2017/016694

(56) Entgegenhaltungen:
- EP-A2- 0 137 299
- EP-A2- 0 982 119

## Beschreibung

Die vorliegende Erfindung betrifft das technische Gebiet textiler Schutzmaterialien, wie sie beispielsweise für Schutzbekleidung oder für Filter im zivilen oder militärischen Bereich, beispielsweise zur Herstellung von Schutzanzügen oder dergleichen, eingesetzt werden können.

In diesem Zusammenhang betrifft die vorliegende Erfindung ein textiles Schutzmaterial als solches, welches mit einer Schutzfunktion gegenüber radioaktiven bzw. biologischen bzw. chemischen Schad- bzw. Giftstoffen ausgerüstet ist bzw. eine entsprechende Schutzfunktion bereitstellt, wobei das textile Schutzmaterial nach der Erfindung einen speziellen schichtförmigen Aufbau aufweist.

Darüber hinaus betrifft die vorliegende Erfindung auch ein Verfahren zur Herstellung des textilen Schutzmaterials nach der Erfindung sowie spezielle Verwendungen des erfindungsgemäßen textilen Schutzmaterials insbesondere zur Herstellung von Schutzausrüstungen bzw. Schutzgegenständen sowie zur Herstellung von Filtern und Filtermaterialien aller Art. Zudem betrifft die vorliegende Erfindung auch Verwendungen des erfindungsgemäßen textilen Schutzmaterials als Schutzausrüstungen bzw. Schutzgegenstände sowie als Filter und Filtermaterialien.

Von chemischen, biologischen und nuklearen Gift- bzw. Kampfstoffen geht im Allgemeinen ein hohes Gefährdungspotential für mit solchen Substanzen in Kontakt kommenden Personen, wie beispielsweise sich im Kampfeinsatz befindende Soldaten, einher, zumal bereits geringe Mengen bzw. Konzentrationen derartiger Substanzen zu einer nachhaltigen gesundheitlichen Beeinträchtigung bis hin zum Tod von mit diesen Substanzen konfrontierten Personen führen können.

So gibt es eine Reihe von Substanzen bzw. Stoffen, die bei Kontakt von der Haut aufgenommen werden und bereits in geringen Mengen bzw. Konzentrationen zu schwerwiegenden körperlichen Schäden führen. Im Bereich der chemischen Gift- bzw. Kampfstoffe können hierzu insbesondere das blasenziehende Lost (Gelbkreuz) und das Nervengift Sarin genannt werden. Personen, die mit solchen hochtoxischen Giften in Kontakt kommen können, müssen demnach eine geeignete Schutzbekleidung tragen bzw. durch geeignete Schutzmaterialien gegen diese Substanzen bzw. Gifte geschützt werden.

Dies gilt grundsätzlich auch für biologische Kampf- bzw. Giftstoffe, wie Bakterien, Viren oder Toxine biologischen Ursprungs, welche gleichermaßen bei Kontakt und insbesondere direkt oder indirekt (d.h. durch nachfolgende Aufnahme in den Körper, beispielsweise über Schleimhäute oder dergleichen) zu nachhaltigen gesundheitlichen Problemen führen. Schließlich ist auch ein direkter Kontakt bzw. eine Kontamination mit radioaktiven Substanzen, insbesondere auch in Form von radioaktiven Partikeln oder dergleichen, zu vermeiden.

Was die angeführten Schad- bzw. Giftstoffe, insbesondere chemischen Kampfstoffe, zudem anbelangt, so können diese zum einen gasförmig aber auch in Form von mitunter fein verteilten Partikeln, beispielsweise als Aerosol oder dergleichen, vorliegen, was eine weitere Herausforderung für bereitzustellende Schutzmaterialien hinsichtlich der Unschädlichmachung der in Rede stehenden Gift- bzw. Kampfstoffe darstellt.

Zur Gewährleistung einer gewissen Schutzfunktion gegenüber den vorgenannten Gift- bzw. Kampfstoffen sind im Allgemeinen beispielsweise luft- und wasserdampfundurchlässige Schutzanzüge oder dergleichen bekannt, welche mit einer gegenüber Gift- bzw. Kampfstoffen, insbesondere der vorgenannten Art, undurchlässigen Gummischicht ausgestattet sind. Derartige Schutzsysteme sind jedoch mit dem zentralen Nachteil verbunden, dass hieraus hergestellte Schutzausrüstungen, beispielsweise in Form von Schutzanzügen, im Trage- bzw. Anwendungszustand, (beispielsweise im Rahmen eines Kampfeinsatzes mit hoher körperlicher Belastung des Trägers) sehr schnell zu einem Hitzestau führen, da derartige Systeme aufgrund der fehlenden Luft- und Wasserdampfdurchlässigkeit keine feuchtigkeits- und thermoregulativen Eigenschaften aufweisen, insbesondere da weder eine Atmungsaktivität noch ein effizienter Luftaustausch vorhanden ist.

Darüber hinaus kommen im Stand der Technik beispielsweise zur Herstellung von Schutzanzügen solche Schutzmaterialien zum Einsatz, welche mit einer luftundurchlässigen, jedoch wasserdampfdurchlässig ausgebildeten Membran ausgerüstet sind, welche als Sperrschicht gegenüber toxischen Substanzen fungieren soll. Ein derartiges Schutzmaterial ist beispielsweise in der WO 96/37365 A1 sowie in der zu derselben Patentfamilie gehörenden US 5 743 775 A bzw. der DE 195 18 683 A1 beschrieben. Schutzanzüge mit einer für Wasserdampf durchlässigen, aber für Gifte, insbesondere Hautgifte, undurchlässigen Membran besitzen den grundsätzlichen Nachteil, dass an undichten Stellen, welche beispielsweise durch mechanische Beschädigungen hervorgerufen werden, eingedrungene Gifte im Inneren des Schutzanzugs verbleiben und folglich durch die Haut des Trägers aufgenommen werden können. Zudem ist der Tragekomfort aufgrund des insgesamt beschränkten Luftaustauschs nicht immer zufriedenstellend.

Zur Verbesserung insbesondere des Tragekomforts sind im Stand der Technik zudem auch luftdurchlässige, permeable Schutzmaterialien bekannt, welche im Allgemeinen eine Adsorptionsfilterschicht auf Basis von Aktivkohle aufweisen, wobei die Aktivkohle die zugrundeliegenden Gift- bzw. Kampfstoffe, insbesondere die zugrundeliegenden chemischen Gifte, dauerhaft zu binden imstande ist, so dass auch von stark kontaminierten Anzügen für den Träger kein Gefahr ausgeht. Wie zuvor angeführt, weisen derartige Schutzsysteme durch den effektiven Austausch von Luft und Wasser bzw. Wasserdampf einen hohen Tragekomfort bei grundsätzlich guter Schutzfunktion gegenüber den zugrundeliegenden Gift- bzw. Kampfstoffen auf, zumal ein Vorteil darin liegt, dass die eingesetzte Aktivkohle auch an der Innenseite, d.h. auf der dem Träger zugewandten Seite des Schutzmaterials, zugänglich ist, so dass an Beschädigungen oder sonstigen undichten Stellen eingedrungene Gifte schnell adsorbiert und unschädlich gemacht werden können.

In diesem Zusammenhang sind beispielsweise luftdurchlässige, permeable Schutzanzüge bekannt, bei denen insbesondere pulverförmige Aktivkohle in einer Dispersion unter Einsatz eines Bindemittels auf eine Trägerschicht aufgebracht wird. Hierbei ist jedoch im Allgemeinen nachteilig, dass die Zugänglichkeit der Aktivkohle für zu adsorbierende Substanzen beschränkt ist.

Die EP 0 137 299 A2 betrifft ein luft- und wasserdampfdurchlässiges, toxische Dämpfe absorbierendes textiles Material, welches in übereinander angeordneter Form ein erstes inaktives Textilmaterial, eine erste luft- und wasserdampfdurchlässige Klebstoffschicht, eine zweite luft- und wasserdampfdurchlässige Klebstoffschicht und ein zweites inaktives Textilmaterial aufweist. Die erste Klebstoffschicht soll zudem auf der dem ersten Textilmaterial gegenüberliegenden Seite eine Beflockung mit Aktivkohlefasern aufweisen. Zudem soll Aktivkohlepulver in den durch die Beflockung gebildeten Zwischenräume angeordnet sein.

Weiterhin betrifft die EP 0 982 119 A2 (ein windfestes und wasserdampfdurchlässiges Kompositmaterial, welches eine erste und eine zweite textile Schicht und eine Zwischenschicht in Form einer Dampfsperre aufweist, wobei die Dampfsperre einen variablen Wasserdampfdurchgangswiderstand aufweisen soll, welcher bei zunehmender und auf das Kompositmaterial gerichteter Windgeschwindigkeit abnehmen soll.

Zudem ist es im Stand der Technik in Bezug auf luftdurchlässige bzw. permeable Schutzanzüge bekannt, hierzu eingesetzte Aktivkohle durch Verwendung eines sozusagen punktförmig bzw. diskontinuierlich (diskontinuierlich-punktförmig) auf einem Träger aufgetragenen Bindemittels punktförmig zu fixieren, was im Allgemeinen die Luftdurchlässigkeit solcher Systeme verbessert. Unter extremen Bedingungen, insbesondere wenn ein Tropfen eines eingedickten Gift- bzw. Kampfstoffes aus größerer Höhe auf das Schutzmaterial auftrifft und bis zur Aktivkohle durchschlägt, kann die Aktivkohleschicht jedoch lokal überfordert sein. Zudem kann es bei solchen Materialien mitunter vorkommen, dass der punktförmig aufgetragene Klebstoff bei der Herstellung des Materials teilweise zwischen das Garnsystem des Trägers fällt, was der Fixierung der Adsorbentien abträglich ist und zu Fehlstellen führen kann.

Vor diesem Hintergrund besteht damit die Aufgabe der vorliegenden Erfindung darin, ein Schutzmaterial bzw. ein Adsorptionsfiltermaterial bereitzustellen, welches die zuvor geschilderten Nachteile des Standes der Technik zumindest weitgehend vermeidet oder aber wenigstens abschwächt. Insbesondere soll sich ein solches Schutzmaterial bzw. Adsorptionsfiltermaterial auch für die Herstellung von Schutzausrüstungen bzw. Schutzgegenständen mit Schutzfunktion gegenüber chemischen bzw. biologischen bzw. nuklearen Gift- bzw. Kampfstoffen sowie von Filtern und Filtermaterialien eignen.

Eine weitere Aufgabe der vorliegenden Erfindung liegt darin, ein solches Schutzmaterial bereitzustellen, welches neben einer hohen Luftdurchlässigkeit und einer hohen Wasserdampfdurchlässigkeit auch eine effektive Schutzfunktion gegenüber chemischen, biologischen sowie radioaktiven bzw. nuklearen Schad- bzw. Giftstoffen, wie insbesondere chemischen Kampfstoffen, gewährleistet. Dabei soll insbesondere eine gegenüber dem Stand der Technik verbesserte Schutzfunktion gegenüber den in Rede stehenden Schad- bzw. Giftstoffen bei gleichzeitiger Gewährleistung einer hohen Luftdurchlässigkeit, einhergehend mit einem hohen Tragekomfort im Fall der Verwendung für Schutzbekleidung oder dergleichen, bereitgestellt werden.

Eine nochmals weitere Aufgabe der vorliegenden Erfindung ist zudem darin zu sehen, ein entsprechendes Schutzmaterial bereitzustellen, welches sich insbesondere zur Verwendung in Schutzausrüstungen bzw. Schutzgegenständen (wie z. B. Schutzanzügen, Schutzhandschuhen, Schutzschuhen und anderen Schutzbekleidungsstücken sowie Schutzabdeckungen, Schlafsäcken und dergleichen) eignet.

Schließlich besteht eine wiederum weitere Aufgabe der vorliegenden Erfindung in der Bereitstellung eines Schutzmaterials bzw. Adsorptionsfiltermaterials, welches sich insbesondere zur Verwendung in Filtern und Filtermaterialien (wie z. B. zur Entfernung von Schad-, Geruchs- und Giftstoffen aller Art, insbesondere aus Luft- und/oder Gasströmen, wie Schutzmaskenfiltern, Geruchsfiltern, Flächenfiltern, Luftfiltern, adsorptionsfähigen Trägerstrukturen und Filtern für den medizinischen Bereich) eignet und dabei bei guter Durchströmbarkeit in Bezug auf das aufzureinigende Medium eine gute Filtereffizienz gewährleistet.

Zudem soll das erfindungsgemäß bereitgestellte Schutzmaterial bzw. Adsorptionsfiltermaterial eine hohe Dauerhaftigkeit und Stabilität und zudem ein optimiertes bzw. geringes Flächengewicht aufweisen.

Zur Lösung der zuvor geschilderten Aufgabe schlägt die vorliegende Erfindung somit - gemäß einem **ersten** Aspekt der vorliegenden Erfindung - ein textiles Schutzmaterial mit Schutzfunktion gegenüber radioaktiven Schad- bzw. Giftstoffen und/oder gegenüber biologischen Schad- bzw. Giftstoffen und/oder gegenüber chemischen Schad- bzw. Giftstoffen, insbesondere ein textiles Adsorptionsfiltermaterial, gemäß Patentanspruch 1 vor; jeweils vorteilhafte Weiterbildungen und Ausgestaltungen dieses Erfindungsaspekts sind Gegenstand der entsprechenden Unteransprüche.

Wiederum weiterer Gegenstand der vorliegenden Erfindung - gemäß einem **zweiten** Aspekt der vorliegenden Erfindung - ist ein Verfahren zur Herstellung des textilen Schutzmaterials nach der Erfindung gemäß dem diesbezüglichen unabhängigen Verfahrensanspruch. Weitere vorteilhafte Ausgestaltungen des erfindungsgemäßen Verfahrens sind Gegenstand der diesbezüglichen Verfahrensunteransprüche.

Ein weiterer Gegenstand der vorliegenden Erfindung - gemäß einem **dritten** Aspekt der vorliegenden Erfindung - ist zudem die Verwendung des erfindungsgemäßen textilen Schutzmaterials zur Herstellung von Schutzausrüstungen bzw. Schutzgegenständen aller Art bzw. zur Herstellung von Filtern und Filtermaterialien aller Art gemäß dem unabhängigen Verwendungsanspruch.

Weiterer Gegenstand der vorliegenden Erfindung - gemäß einem **vierten** Aspekt der vorliegenden Erfindung - ist zudem die erfindungsgemäße Verwendung des textilen Schutzmaterials nach der Erfindung als Schutzausrüstungen bzw. Schutzgegenstände gemäß dem diesbezüglichen unabhängigen, diese erfindungsgemäße Verwendung betreffenden Anspruch.

Schließlich ist weiterer Gegenstand der vorliegenden Erfindung - gemäß einem **fünften** Aspekt der vorliegenden Erfindung - die erfindungsgemäße Verwendung des textilen Schutzmaterials nach der Erfindung als Filter und Filtermaterialien gemäß dem diesbezüglichen unabhängigen, diese erfindungsgemäße Verwendung betreffenden Anspruch.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es hierzu einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d.h. insbesondere bei einer Temperatur von 20 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben und erläutert, und zwar auch anhand von bevorzugte Ausführungsformen bzw. Ausführungsbeispiele darstellenden Zeichnungen bzw. Figurendarstellungen.

Gegenstand der vorliegenden Erfindung - gemäß einem **ersten** Aspekt der vorliegenden Erfindung - ist somit ein textiles Schutzmaterial mit Schutzfunktion gegenüber radioaktiven Schad- bzw. Giftstoffen und/oder gegenüber biologischen Schad- bzw. Giftstoffen und/oder gegenüber chemischen Schad- bzw. Giftstoffen, bevorzugt chemischen Kampfstoffen, vorzugsweise textiles Adsorptionsfiltermaterial, wobei das textile Schutzmaterial umfasst:
(a) einen zweidimensionalen und/oder flächigen, luftdurchlässigen textilen Träger in Form eines textilen Flächenmaterials;
(b) eine auf den textilen Träger aufgebrachte Klebstoffschicht, wobei die Klebstoffschicht eine luftdurchlässige und/oder diskontinuierlich ausgebildete Schicht auf Basis eines getrockneten und ausgehärteten, insbesondere vernetzten, gebrochenen (zerfallenen) Klebstoffpolymerschaums ist und wobei die Klebstoffschicht ein Flächengewicht im Bereich von 5 g/m² bis 60 g/m² aufweist; und
(c) eine an der Klebstoffschicht zum Haften gebrachte Adsorptionsschicht, wobei die Adsorptionsschicht eine Vielzahl einzelner Adsorberpartikel umfasst oder hieraus gebildet ist, wobei die Adsorberpartikel in einer Menge im Bereich von 5 g/m² bis 150 g/m² eingesetzt sind.

Denn die Anmelderin hat nun in völlig überraschender Weise herausgefunden, dass in Bezug auf das textile Schutzmaterial bzw. das textile Adsorptionsfiltermaterial nach der Erfindung bei gleichzeitiger Bereitstellung einer hohen Luftdurchlässigkeit eine effiziente Schutzfunktion gegenüber radioaktiven, biologischen sowie chemischen Schad- bzw. Giftstoffen, insbesondere chemischen Kampfstoffen, bereitgestellt werden kann, indem in zweckgerichteter Art und Weise in Bezug auf das textile Schutzmaterial nach der Erfindung eine spezielle Schichtstruktur bzw. ein spezieller Schichtaufbau vorgesehen ist, wonach nämlich ein partikuläres Adsorbens bzw. eine Vielzahl einzelner Adsorberpartikel auf eine auf einen textilen Träger aufgebrachte Klebstoffschicht fixiert sind, wobei die Klebstoffschicht luftdurchlässig ausgebildet ist und in Form eines getrockneten bzw. ausgehärteten, insbesondere vernetzten, gebrochenen bzw. zerfallenen Klebstoffpolymerschaums vorliegt.

Durch die erfindungsgemäße Konzeption auf Basis der Verwendung einer speziellen, im Allgemeinen vollflächig auf dem Träger aufgebrachten, Klebstoffschicht für Adsorbentien in Form eines gebrochenen bzw. zerfallenen Schaums wird zum einen eine vollflächige bzw. homogene Belegung der Oberfläche der Schaumstoffschicht mit den Adsorbentien gewährleistet, was zu hervorragenden Adsorptionseigenschaften des textilen Schutzmaterials nach der Erfindung führt. Zum anderen führt der zweckgerichtete Einsatz eines gebrochenen Klebstoffpolymerschaums gleichzeitig auch zur Bereitstellung einer hohen Luftdurchlässigkeit der zugrundeliegenden Klebstoffschicht, einhergehend mit einer verbesserten Tragephysiologie infolge der resultierenden hohen Atmungsaktivität des Schutzmaterials insgesamt. Im Rahmen der vorliegenden Erfindung ist es dabei auch gelungen, textile Schutzmaterialien nach der Erfindung bereitzustellen, welche gegenüber dem Stand der Technik über ein weiterführend verringertes Flächengewicht verfügen, da aufgrund der hervorragenden Fixierbarkeit der Adsorbentien auf dem gebrochenen Schaum kleinere Partikelgrößen in Bezug auf die Adsorbentien und insgesamt geringere Klebstoffmengen eingesetzt werden können. Aufgrund der homogenen Ausbildung der Adsorptionsschicht kann auch die Auftragsmenge an Adsorbentien selbst reduziert werden, und zwar ohne die Leistungsfähigkeit des Materials zu beeinflussen. In diesem Zusammenhang kann auch die Dicke der Klebstoffschicht und folglich die Dicke des resultierenden (Schutz-)Materials insgesamt verringert werden.

Das erfindungsgemäß bereitgestellte Schutzmaterial weist zudem hervorragende haptische Eigenschaften auf, was gleichermaßen mit der Verwendung einer flächig ausgebildeten Klebstoffschicht auf Basis eines gebrochenen Schaums mit der diesbezüglichen Fixierung relativ kleiner Adsorptionspartikel zusammenhängt. In diesem Zusammenhang weist das Schutzmaterial nach der Erfindung auch hervorragende Eigenschaften hinsichtlich seiner Flexibilität und seines Biegeverhaltens auf, zumal der ausgehärtete bzw. getrocknete, gebrochene Klebstoffpolymerschaum bzw. die entsprechende Klebstoffschicht als solche flexibel bzw. reversibel dehnbar (elastisch) ausgebildet ist. Erfindungsgemäß ist es somit insbesondere vorgesehen, dass der ausgehärtete bzw. getrocknete, gebrochene Klebstoffpolymerschaum bzw. die Klebstoffschicht flexibel und/oder elastisch und/oder reversibel dehnbar ausgebildet ist.

Wie zuvor angeführt, besteht eine zentrale Idee der vorliegenden Erfindung darin, dass die Klebstoffschicht als gebrochener Schaum vorliegt. Im Rahmen der vorliegenden Erfindung ist der Begriff "gebrochen" (synonym auch als "zerfallen" bzw. "zerstört" bezeichnet), wie er in Bezug auf den getrockneten bzw. ausgehärteten, insbesondere vernetzten, Klebstoffpolymerschaum bzw. die Klebstoffschicht als solche verwendet wird, insbesondere so zu verstehen, dass es sich bei dem gebrochenen Klebstoffpolymerschaum im Rahmen der vorliegenden Erfindung um ein insgesamt luftdurchlässiges System handelt, welches - insbesondere infolge einer speziellen Verfahrensführung zur Herstellung des Materials ausgehend von einer zuvor aufgeschäumten und auf den textilen Träger aufgebrachten nichtgetrockneten Dispersion bzw. Lösung mit nachfolgender Trocknung bzw. Aushärtung zur Brechung bzw. Zerstörung der Schaumstrukturen - im getrockneten bzw. ausgehärteten Zustand eine Vielzahl zerstörter bzw. geplatzter bzw. kollabierter Schaumblasen aufweist. Dementsprechend kann in Bezug auf den getrockneten bzw. ausgehärteten, insbesondere vernetzten, gebrochenen Klebstoffpolymerschaum bzw. die Klebstoffschicht auch von einem zerfallenen Schaum gesprochen werden. Wie nachfolgend noch angeführt, weist der gebrochene Klebstoffpolymerschaum bzw. weisen die zugrundeliegenden zerstörten Schaumblasen dabei eine Vielzahl an zerstörten bzw. gebrochenen bzw. kollabierten Wandungen, Lamellen bzw. Stegen aus dem zugrundeliegenden Klebstoffpolymer auf.

Infolge des zerstörten bzw. gebrochenen bzw. zerfallenen Schaums resultiert, wie nachfolgend noch angeführt, zudem eine Vielzahl an Durchbrechungen, Poren, Kanälen bzw. Öffnungen in dem zerstörten bzw. gebrochenen bzw. zerfallenen Schaumsystem der Klebstoffschicht, welche sich insbesondere durch die gesamte Schicht ziehen, was zu der sozusagen im Rahmen der Brechung bzw. des Zerfalls des Schaums entstehenden Luftdurchlässigkeit der Klebstoffschicht und des textilen Schutzmaterials insgesamt führt.

Wie nachfolgend noch in Bezug auf das erfindungsgemäße Verfahren angeführt, wird erfindungsgemäß bei der Herstellung des Schutzmaterials nach der Erfindung insbesondere derart vorgegangen, dass ein zunächst intakter nichtgetrockneter bzw. nicht (vollständig) ausgehärteter Schaum zur Bereitstellung der Klebstoffschicht auf einen textilen Träger aufgebracht wird, gefolgt von einem Aufbringen der Adsorbentien bzw. der Adsorberpartikel auf die (Schaum-)Schicht mit wiederum nachfolgender Aushärtung der so beaufschlagten Klebstoffschicht unter (Auf-)Brechung bzw. Zerstörung bzw. Zerfalls des Schaumsystems zum Erhalt des gebrochenen Klebstoffpolymerschaums im getrockneten bzw. ausgehärteten Zustand, wobei der schichtartige, zusammenhängende Aufbau der Klebstoffschicht als solcher grundsätzlich erhalten bleibt.

Die erfindungsgemäße Verfahrensweise ermöglicht zudem eine homogene bzw. gleichmäßige, großflächige Beaufschlagung mit den Adsorberpartikeln bei gleichzeitig geringen Flächengewichten des aufgetragenen und zur Fixierung eingesetzten Klebstoffpolymers.

Insgesamt resultiert somit ein Schutzmaterial mit hoher Luftdurchlässigkeit, welches sich aufgrund seiner hohen Schutzfunktion gegenüber Schad- bzw. Giftstoffen der vorgenannten Art, insbesondere chemischen Kampfstoffen, für den Einsatz im Bereich des ABC-Schutzes bzw. NBC-Schutzes (*nuclear, biological, chemical*) eignet.

Im Nachfolgenden wird die vorliegende Erfindung anhand von bevorzugte Ausführungsformen bzw. Ausführungsbeispiele darstellenden Zeichnungen bzw. Figurendarstellungen beschrieben, wobei die diesbezüglichen Ausführungen für sämtliche erfindungsgemäße Aspekte gelten und wobei die entsprechenden bevorzugten Ausführungsformen keinesfalls beschränkend sind.

In den Figurendarstellungen zeigt
- Fig. 1A: eine Querschnittsdarstellung eines erfindungsgemäßen textilen Schutzmaterials bzw. textilen Adsorptionsfiltermaterials, wobei das Schutzmaterial einen textilen Träger mit einer darauf aufgebrachten Klebstoffschicht in Form eines luftdurchlässigen, getrockneten bzw. ausgehärteten gebrochenen Klebstoffpolymerschaums aufweist, wobei auf der Klebstoffschicht eine Vielzahl einzelner Adsorberpartikel zur Ausbildung einer Adsorptionsschicht zum Haften gebracht sind;
- Fig. 1B: eine vergrößerte Querschnittsdarstellung des erfindungsgemäßen textilen Schutzmaterials bzw. textilen Adsorptionsfiltermaterials mit mehrschichtigem Aufbau, wobei sich die Klebstoffschicht teilweise in den textilen Träger hineinerstreckt und wobei sich die Adsorptionsschicht teilweise in die Klebstoffschicht hineinerstreckt;
- Fig. 2A: eine Querschnittsdarstellung eines erfindungsgemäßen textilen Schutzmaterials bzw. textilen Adsorptionsfiltermaterials gemäß einer erfindungsgemäßen Ausführungsform mit mehrschichtigem Aufbau mit ergänzender textiler Abdeckschicht;
- Fig. 2B: eine weitere schematische Darstellung des Aufbaus eines textilen Schutzmaterials bzw. textilen Adsorptionsfiltermaterials nach der Erfindung gemäß einer weiteren erfindungsgemäßen Ausführungsform, wonach das Schutzmaterial zwei Abdeckschichten aufweist, wobei die zwischen der äußeren Abdeckschicht und der Adsorptionsschicht angeordnete Abdeckschicht beispielsweise als Partikel- bzw. Aerosolfilter ausgebildet sein kann;
- Fig. 3A: eine fotographische Draufsicht auf die Klebstoffschicht in Form des luftdurchlässigen sowie getrockneten bzw. ausgehärteten gebrochenen Klebstoffpolymerschaums;
- Fig. 3B: eine Ausschnittvergrößerung der fotographischen Draufsicht gemäß Fig. 3A;
- Fig. 4: eine fotographische Draufsicht auf die Adsorptionsschicht mit einer vollflächigen und homogenen Anordnung bzw. Verteilung der einzelnen Adsorberpartikel auf der Klebstoffschicht in Form des getrockneten bzw. ausgehärteten gebrochenen Klebstoffpolymerschaums;
- Fig. 5: eine graphische Darstellung des für ein erfindungsgemäßes textiles Schutzmaterial im Rahmen eines dynamischen Adsorptionstests ermittelten Durchbruchverhaltens;
- Fig. 6: eine Vergleichsdarstellung in Form einer fotographischen Draufsicht eines Materials, bei welchem die eingesetzten Adsorbentien mittels diskontinuierlich-punktförmigen Auftrags eines homogen ausgebildeten, nichtgeschäumten Klebstoffs auf einem Träger fixiert sind (nicht erfindungsgemäß).

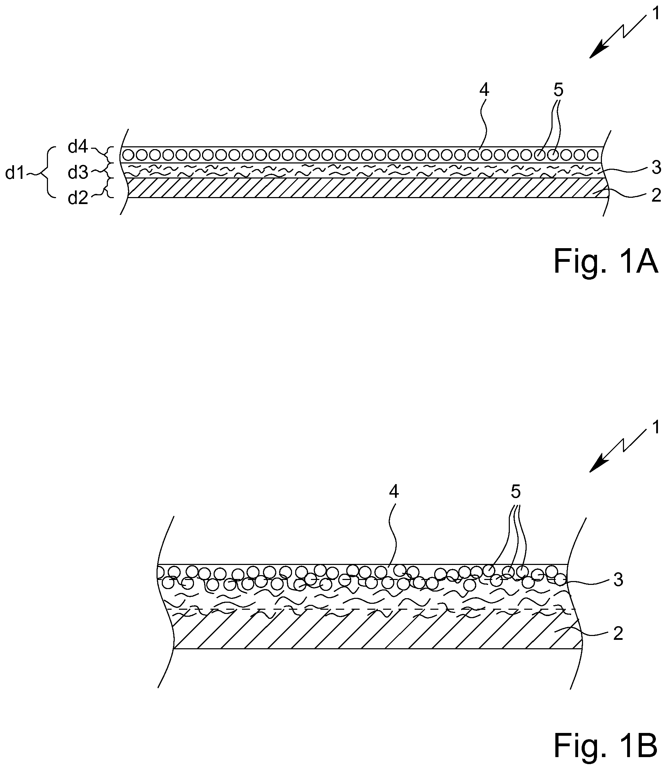

Die die vorliegende Erfindung betreffenden Figurendarstellungen, insbesondere die Figuren 1A, 1B sowie 2A, 2B und Fig. 3A, 3B sowie Fig. 4, verdeutlichen dabei insbesondere auch den ersten erfindungsgemäßen Aspekt der vorliegenden Erfindung, wonach nämlich ein textiles Schutzmaterial 1 mit Schutzfunktion gegenüber radioaktiven Schad- bzw. Giftstoffen und/oder gegenüber biologischen Schad- bzw. Giftstoffen und/oder gegenüber chemischen Schad- bzw. Giftstoffen, vorzugsweise textiles Adsorptionsfiltermaterial, bereitgestellt wird, wobei das textile Schutzmaterial 1 umfasst:
(a) einen zweidimensionalen und/oder flächigen, luftdurchlässigen textilen Träger 2 in Form eines textilen Flächenmaterials;
(b) eine auf den textilen Träger 2 aufgebrachte Klebstoffschicht 3, wobei die Klebstoffschicht 3 eine luftdurchlässige und/oder diskontinuierlich ausgebildete Schicht auf Basis eines getrockneten und ausgehärteten, insbesondere vernetzten, gebrochenen Klebstoffpolymerschaums ist und wobei die Klebstoffschicht 3 ein Flächengewicht im Bereich von 5 g/m² bis 60 g/m² aufweist; und
(c) eine an der Klebstoffschicht 3 zum Haften gebrachte Adsorptionsschicht 4, wobei die Adsorptionsschicht 4 eine Vielzahl einzelner Adsorberpartikel 5 umfasst oder hieraus gebildet ist, wobei die Adsorberpartikel (5) in einer Menge im Bereich von 5 g/m² bis 150 g/m² eingesetzt sind.

Wie zuvor angeführt, wird im Rahmen der vorliegenden Erfindung ein Schutzmaterial bereitgestellt, welches die diametralen Eigenschaften einer hohen Schutzfunktion gegenüber den in Rede stehenden Schad- bzw. Giftstoffen, insbesondere Kampfstoffen, einerseits und einer hohen Luftdurchlässigkeit bzw. im Fall der Verwendung für Schutzbekleidung oder dergleichen eines hohen Tragekomforts andererseits in ein und demselben Material vereint. Die speziellen Eigenschaften des textilen Schutzmaterials resultieren dabei aus der erfindungsgemäßen Konzeption, wonach nämlich in zweckgerichteter Weise, wie zuvor angeführt, als Klebstoffschicht für die auf dem Schutzmaterial bzw. auf dem Träger des Schutzmaterials zu fixierenden Adsorbentien ein flächig auf dem Träger aufgebrachtes Material in Form eines getrockneten bzw. ausgehärteten gebrochenen Klebstoffpolymerschaums eingesetzt wird, was eine homogene flächenmäßige Bedeckung des Materials mit den Adsorberpartikeln bei gleichzeitiger Bereitstellung einer hohen Luftdurchlässigkeit ermöglicht. Dabei weisen die fixierten Adsorbentien auch eine hohe Zugänglichkeit für das aufzureinigende Medium auf.

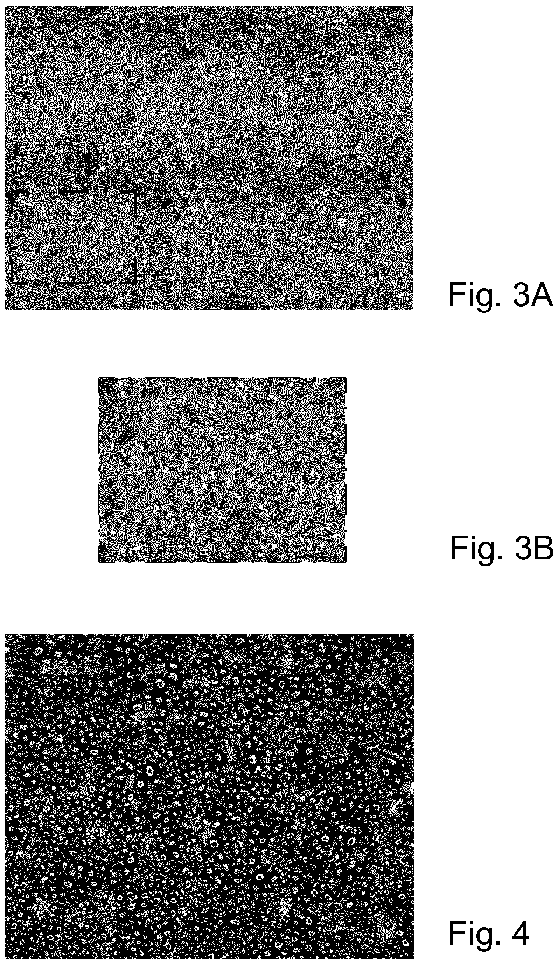

In diesem Zusammenhang ist es im Rahmen der vorliegenden Erfindung insbesondere vorgesehen, dass der gebrochene Klebstoffpolymerschaum eine Vielzahl getrockneter bzw. ausgehärteter, insbesondere vernetzter, zerstörter bzw. geplatzter bzw. kollabierter Schaumblasen aufweist (vgl. Fig. 3A bzw. 3B).

Insbesondere weist bzw. weisen der gebrochene Klebstoffpolymerschaum, insbesondere die getrockneten, insbesondere vernetzten, zerstörten bzw. geplatzten bzw. kollabierten Schaumblasen des gebrochenen Klebstoffschaums, eine Vielzahl an zerstörten bzw. gebrochenen bzw. kollabierten Wandungen, Lamellen bzw. Stegen aus dem zugrundeliegenden Klebstoffpolymer auf.

Auf Basis der erfindungsgemäßen Konzeption, wonach die Schaumstruktur sozusagen aufgebrochen bzw. insbesondere nach Maßgabe der obigen Ausführungen zerstört ist, resultiert - ohne sich auf diese Theorie beschränken zu wollen - bei gleichzeitiger Integrität und Flexibilität der Gesamtschicht innerhalb des gebrochenen Klebstoffpolymerschaums der Klebstoffschicht ein luftdurchlässiges System, was den Durchtritt von Luft quer zur Haupterstreckungsebene der Klebstoffschicht ermöglicht, so dass auf dieser Basis ein insgesamt luftdurchlässiges Material resultiert. Im Rahmen der vorliegenden Erfindung kann es dabei vorgesehen sein, dass in Bezug auf den gebrochenen Klebstoffpolymerschaum insbesondere die (Schaumblasen-)Wandungen bzw. die (Schaumblasen-)Lamellen zerstört bzw. gebrochen sind, während die grundsätzlich stabiler ausgebildeten Stege des Schaumsystems nicht bzw. weniger stark zerstört sein können, was zur Aufrechterhaltung einer stabilisierenden Matrixstruktur des zugrundeliegenden gebrochenen Klebstoffpolymerschaums führt, wobei gleichzeitig ein Luftdurchtritt durch die zerstörten Blasenwandungen entlang des gebrochenen Schaums bzw. quer zur Erstreckungsebene der resultierenden Klebstoffschicht ermöglicht wird.

Im Rahmen der vorliegenden Erfindung kann es insbesondere vorgesehen sein, dass der gebrochene Klebstoffpolymerschaum einen Anteil an zerstörten bzw. geplatzten bzw. kollabierten Schaumblasen von mindestens 10 %, insbesondere mindestens 30 %, vorzugsweise mindestens 50 %, bevorzugt mindestens 70 %, besonders bevorzugt mindestens 90 %, ganz besonders bevorzugt mindestens 95 %, bezogen auf die Gesamtanzahl an Schaumblasen in dem gebrochenen Klebstoffpolymerschaum, aufweist.

Insbesondere kann der gebrochene Klebstoffpolymerschaum einen Anteil an zerstörten bzw. geplatzten bzw. kollabierten Schaumblasen im Bereich von 10 % bis 100%, insbesondere im Bereich von 30% bis 99,9%, vorzugsweise im Bereich von 50 % bis 99 %, bevorzugt im Bereich von 70 % bis 99 %, besonders bevorzugt im Bereich von 90 % bis 98 %, bezogen auf die Gesamtanzahl an Schaumblasen in dem gebrochenen Klebstoffpolymerschaum, aufweisen.

Auf Basis der individuellen Einstellung des Brechungsgrades bzw. des Anteils an zerstörten Schaumblasen können die Materialeigenschaften des Klebstoffpolymerschaums bzw. der Klebstoffschicht 3 des erfindungsgemäßen Schutzmaterials 1 insbesondere im Hinblick auf die resultierenden Luftdurchlässigkeit gezielt eingestellt bzw. maßgeschneidert werden. Zudem gewährleisten die vorliegenden (Durch-)Brechungsgrade weiterhin eine hohe Stabilität der flächig ausgebildeten zusammenhängenden Klebstoffschicht 3.

Was die Klebstoffschicht 3 bzw. den der Klebstoffschicht 3 zugrundeliegenden gebrochenen Klebstoffpolymerschaum weiterhin anbelangt, so kann es erfindungsgemäß somit vorgesehen sein, dass der gebrochene Klebstoffpolymerschaum nicht geschlossen ausgebildet ist. Insbesondere kann es erfindungsgemäß vorgesehen sein, dass der gebrochene Klebstoffpolymerschaum eine Vielzahl von insbesondere sich in dem bzw. sich durch den gebrochenen Klebstoffpolymerschaum erstreckenden Durchbrechungen, Poren, Kanäle bzw. Öffnungen bzw. eine Vielzahl von insbesondere die jeweiligen Außenseiten des gebrochenen Klebstoffpolymerschaums bzw. der Klebstoffschicht 3 verbindenden Durchbrechungen, Poren, Kanäle bzw. Öffnungen aufweist. Die in Rede stehenden Strukturen auf Basis der Durchbrechungen, Poren, Kanäle bzw. Öffnungen führen somit durch die Bereitstellung von Verbindungen bzw. Luftkanälen zwischen den jeweiligen Außenschichten der Klebstoffschicht 3 zu der in Rede stehenden Luftdurchlässigkeit des Materials. Bei den angeführten Außenseiten der Klebstoffschicht 3 handelt es sich dabei insbesondere um die jeweiligen Seiten des Materials in der Haupterstreckungsebene.

Was die erfindungsgemäß vorgesehene Klebstoffschicht 3 zudem betrifft, so kann es gemäß einer erfindungsgemäß besonders bevorzugten Ausführungsform vorgesehen sein, dass der gebrochene Klebstoffpolymerschaum zusammenhängend bzw. kohärent ausgebildet ist. Mit anderen Worten verhält es sich im Rahmen der vorliegenden Erfindung insbesondere derart, dass die Klebstoffschicht insgesamt als zusammenhängendes Material bzw. als Schicht mit insgesamt zusammenhängender Matrix- bzw. Gerüststruktur, ausgebildet ist, so dass im Rahmen der vorliegenden Erfindung die der Schicht als solche zugrundeliegende Integrität bzw. Stabilität zumindest im Wesentlichen nicht beeinträchtigt ist. Hierzu kann insbesondere auch auf Fig. 3A mit der diesbezüglichen Ausschnittvergrößerung gemäß Fig. 3B verwiesen werden. In diesem Zusammenhang bilden die gebrochenen Bestandteile des Klebstoffpolymerschaums - ohne sich auf diese Theorie beschränken zu wollen - gewissermaßen einen zusammenhängenden Verbund aus, d.h. die jeweiligen Bestandteile des gebrochenen Klebstoffpolymerschaums stehen insgesamt zur Ausbildung einer stabilen Schicht miteinander in Verbindung. Hieraus resultiert eine hohe Festigkeit der Klebstoffschicht 3 auf Basis des gebrochenen Klebstoffpolymerschaums, was auch einer effizienten Fixierung der aufgebrachten Adsorberpartikel 5 zur Ausbildung der Adsorptionsschicht 4 zuträglich ist.

Im Rahmen der vorliegenden Erfindung ist es gemäß einer weiteren bevorzugten Ausführungsform zudem vorgesehen, dass die Klebstoffschicht 3 bzw. der gebrochene Klebstoffpolymerschaum zumindest im Wesentlichen vollflächig bzw. ganzseitig auf dem Träger 2 aufgebracht ist. Erfindungsgemäß kann es somit vorgesehen sein, dass die Klebstoffschicht 3 den textilen Träger 2 des Schutzmaterials 1 nach der Erfindung vollständig bedeckt. In diesem Zusammenhang verhält es sich erfindungsgemäß insbesondere derart, dass die Klebstoffschicht 3 auf der im Tragezustand des Schutzmaterials (beispielsweise in Form eines Schutzanzugs oder dergleichen) auf der dem Träger abgewandten Seite des textilen Trägers 2 angeordnet ist. Durch die zumindest im Wesentlichen vollständige Aufbringung bzw. Bedeckung des textilen Trägers 2 mit der Klebstoffschicht 3 auf Basis des gebrochenen Klebstoffpolymerschaums wird eine zumindest im Wesentlichen vollständige bzw. vollflächige Belegung der Klebstoffschicht 3 bzw. des Schutzmaterials 1 mit den Adsorberpartikeln 5 gewährleistet, was die Schutzfunktion gegenüber den in Rede stehenden Schad- bzw. Giftstoffen weiterführend erhöht (vgl. z. B. Fig. 4). Was den gebrochenen Klebstoffpolymerschaum der Klebstoffschicht 3 weiterhin anbelangt, so kann es erfindungsgemäß vorgesehen sein, dass dieser im Vergleich zu einem entsprechenden nichtgeschäumten Klebstoffpolymer eine bzw. ein um mindestens 5 %, insbesondere mindestens 10 %, vorzugsweise mindestens 15 %, bevorzugt mindestens 20 %, besonders bevorzugt mindestens 25 %, verringerte Dichte und/oder verringertes insbesondere flächenbezogenes Volumengewicht, bezogen auf das nichtgeschäumte und/oder kontinuierlich ausgebildete Klebstoffpolymer, aufweist. Bei dem zuvor zu Vergleichszwecken angeführten nichtgeschäumten Klebstoffpolymer handelt es sich insbesondere um dasselbe Material, wie es für den gebrochenen Klebstoffpolymerschaum eingesetzt ist, wobei das diesbezügliche Vergleichsmaterial gleichermaßen im ausgehärteten bzw. getrockneten Zustand, jedoch ohne Hohlräume oder dergleichen vorliegt. Insbesondere handelt es sich bei dem Vergleichsmaterial dabei um ein zumindest im Wesentlichen luft- bzw. blasenfreies System, was vorliegend zu Vergleichszwecken angeführt ist.

Insbesondere kann der gebrochene Klebstoffpolymerschaum im Vergleich zu einem entsprechenden nichtgeschäumten und/oder kontinuierlich ausgebildeten Klebstoffpolymer eine bzw. ein im Bereich von 5 % bis 80 %, insbesondere im Bereich von 10 % bis 70 %, vorzugsweise im Bereich von 15 % bis 60 %, bevorzugt im Bereich von 20 % bis 55 %, verringerte Dichte und/oder verringertes insbesondere flächenbezogenes Volumengewicht, bezogen auf das nichtgeschäumte und/oder kontinuierlich ausgebildete Klebstoffpolymer, aufweisen.

Im Rahmen der vorliegenden Erfindung geht somit mit der Bereitstellung der Klebstoffschicht 3 in Form eines speziellen gebrochenen Klebstoffpolymerschaums auch eine entsprechende Verringerung des Flächengewichts einher, so dass auch auf dieser Basis im Rahmen der vorliegenden Erfindung ein insgesamt und im Vergleich zum Stand der Technik leichteres Material (d.h. Schutzmaterial 1 mit verringertem Flächengewicht) bereitgestellt wird, was gleichermaßen auch dem Tragekomfort zuträglich ist.

Erfindungsgemäß kann es zudem vorgesehen sein, dass der gebrochene Klebstoffpolymerschaum im Vergleich zu einem entsprechenden intakten und/oder nichtgebrochenen Klebstoffpolymerschaum eine bzw. ein um höchstens 10 %, insbesondere höchstens 5 %, vorzugsweise höchstens 1 %, erhöhte Dichte und/oder erhöhtes insbesondere flächenbezogenes Volumengewicht, bezogen auf den intakten und/oder nichtgebrochenen Klebstoffpolymerschaum, aufweist. Bei dem vorliegend zu Vergleichszwecken angeführten entsprechenden intakten bzw. nichtgebrochenen Klebstoffpolymerschaum handelt es sich um einen dasselbe Klebstoffpolymer aufweisenden Schaum mit intakter Blasen-, Steg- bzw. Lamellenstruktur. Die gegebenenfalls vorhandene, jedoch insgesamt nur geringfügige Erhöhung der Dichte bzw. des flächenbezogenen Volumengewichts zeigt, dass die sonstigen Eigenschaften eines Schaums in Bezug auf die Klebstoffschicht 3 grundsätzlich erhalten bleiben, was gleichermaßen vorteilhaft ist.

Zudem kann es erfindungsgemäß vorgesehen sein, dass der gebrochene Klebstoffpolymerschaum im Vergleich zu einem entsprechenden intakten und/oder nichtgebrochenen Klebstoffpolymerschaum eine um höchstens 30 %, insbesondere höchstens 20 %, vorzugsweise höchstens 10 %, bevorzugt höchstens 5 %, verringerte Elastizität und/oder reversible Dehnbarkeit, bezogen auf den intakten und/oder nichtgebrochenen Klebstoffpolymerschaum, aufweist. Insbesondere kann der gebrochene Klebstoffpolymerschaum im Vergleich zu einem entsprechenden intakten und/oder nichtgebrochenen Klebstoffpolymerschaum eine im Bereich von 5 % bis 30 %, insbesondere im Bereich von 10 % bis 20 %, verringerte Elastizität und/oder reversible Dehnbarkeit, bezogen auf den intakten und/oder nichtgebrochenen Klebstoffpolymerschaum, aufweisen.

Erfindungsgemäß kann die (Auftrags-)Menge bzw. das Flächengewicht der Klebstoffschicht 3 in weiten Bereichen variieren. Erfindungsgemäß werden jedoch besonders gute Ergebnisse hinsichtlich der Luftdurchlässigkeit einerseits und der Fixierung der Adsorberpartikel 5 andererseits erhalten, wenn die Klebstoffschicht 3 in einer Menge im Bereich von 5 g/m² bis 60 g/m², insbesondere im Bereich von 10 g/m² bis 50 g/m², vorzugsweise im Bereich von 20 g/m² bis 40 g/m², bevorzugt im Bereich von 25 g/m² bis 35 g/m², auf den textilen Träger 2 aufgebracht ist und/oder vorliegt. Die Klebstoffschicht 3 weist ein Flächengewicht im Bereich von 5 g/m² bis 60 g/m², insbesondere im Bereich von 10 g/m² bis 50 g/m², vorzugsweise im Bereich von 20 g/m² bis 40 g/m², bevorzugt im Bereich von 25 g/m² bis 35 g/m², auf. Die zuvor angeführten Mengen bzw. Flächengewichte beziehen sich auf die Klebstoffschicht 3 im getrockneten bzw. ausgehärteten und gebrochenen Zustand des zugrundeliegenden Schaums (Trockengewicht).

Die Klebstoffschicht 3 kann in einer zumindest im Wesentlichen gleich großen flächenbezogenen Menge wie die Adsorptionsschicht aufgetragen sein. Zudem kann die Klebstoffschicht 3 ein zumindest im Wesentlichen gleich großes Flächengewicht wie die Adsorptionsschicht 4 aufweisen. Im Allgemeinen kann es erfindungsgemäß aber auch vorgesehen sein, dass die Klebstoffschicht 3 in einer geringeren flächenbezogenen Menge als die Adsorptionsschicht aufgetragen ist bzw. dass die Klebstoffschicht 3 ein geringeres Flächengewicht als die Adsorptionsschicht 4 aufweist. Denn durch den Einsatz eines gebrochenen Klebstoffpolymerschaums können die eingesetzten Adsorberpartikel 5 in effektiver Weise auf der Klebstoffschicht fixiert werden, so dass nur geringe Mengen an Klebstoff erforderlich sind.

Was in diesem Zusammenhang die Klebstoffschicht 3 im Allgemeinen anbelangt, so kann diese im Rahmen der vorliegenden Erfindung eine Dicke d₃ (Querschnittsdicke) von höchstens 1 mm, insbesondere höchstens 0,5 mm, vorzugsweise höchstens 0,3 mm, bevorzugt höchstens 0,2 mm, aufweisen. Insbesondere kann die Klebstoffschicht 3 eine Dicke d₃ im Bereich von 0,01 mm bis 1 mm, insbesondere im Bereich von 0,05 mm bis 0,75 mm, vorzugsweise im Bereich von 0,08 mm bis 0,5 mm, bevorzugt im Bereich von 0,1 mm bis 0,3 mm, aufweisen.

Zudem kann die Klebstoffschicht 3 eine Dichte bzw. ein Schaumlitergewicht im Bereich von 100 g/l bis 500 g/l, insbesondere im Bereich von 150 g/l bis 400 g/l, vorzugsweise im Bereich von 200 g/l bis 350 g/l, aufweisen. Insbesondere wird die Dichte der Klebstoffschicht durch die poröse bzw. luftgefüllte Struktur des gebrochenen Klebstoffpolymerschaums verringert, was in der Folge auch zu reduzierten Flächengewichten der Klebstoffschicht 3 bzw. des erfindungsgemäßen Schutzmaterials 1 insgesamt führt.

Erfindungsgemäß kann es sich zudem derart verhalten, dass die Klebstoffschicht 3 teilweise in den Träger 2 eingedrungen vorliegt bzw. dass die Klebstoffschicht 3 sich in den textilen Träger 2 hineinerstreckt. Diesbezüglich kann insbesondere auch auf Fig. 1B verwiesen werden. Hierdurch resultiert ein besonders fester Verbund zwischen textilem Träger 2 einerseits und Klebstoffschicht 3 andererseits. Das Eindringen der Klebstoffschicht 3 in den textilen Träger 2 kann insbesondere im Rahmen des erfindungsgemäßen Verfahrens gesteuert bzw. eingestellt werden, wonach nämlich zunächst eine aufgeschäumte wässrige bzw. organische Lösung und/oder Dispersion des Klebstoffpolymers auf den Träger aufgebracht wird, gefolgt von einer entsprechenden Aushärtung und Brechung des Schaumes. Die Eindringtiefe kann in nicht beschränkender Weise beispielsweise über die Viskosität der aufgebrachten Lösung bzw. Dispersion, den Materialeigenschaften des textilen Trägers 2 und und/oder den Anpressdruck beim Auftragen der Klebstoffschicht 3 auf den Träger gesteuert bzw. maßgeschneidert werden.

In diesem Zusammenhang kann die Klebstoffschicht 3 sich beispielsweise über mindestens 5 %, insbesondere mindestens 10 %, vorzugsweise mindestens 20 %, bevorzugt mindestens 30 %, besonders bevorzugt mindestens 40 %, der Dicke d₂ des textilen Trägers 2 in den textilen Träger 2 hineinerstrecken. Insbesondere kann sich die Klebstoffschicht 3 über höchstens 95 %, insbesondere höchstens 90 %, vorzugsweise höchstens 80 %, bevorzugt höchstens 70 %, der Dicke d₂ des textilen Trägers 2 in den textilen Träger 2 hineinerstrecken. Bei der Dicke d₂ des textilen Trägers handelt es sich insbesondere um die entsprechende Querschnittsdicke des Trägers.

Erfindungsgemäß kann es aber auch vorgesehen sein, dass die Klebstoffschicht 3 zumindest im Wesentlichen nicht in den Träger 2 eingedrungen vorliegt bzw. dass die Klebstoffschicht 3 sich zumindest im Wesentlichen nicht in den textilen Träger 2 hineinerstreckt. In diesem Zusammenhang kann die Klebstoffschicht 3 auf den Träger 2 aufgelegt sein.

Erfindungsgemäß ist es insbesondere, wie zuvor ausgeführt, vorgesehen, dass der gebrochene Klebstoffpolymerschaum bzw. die Klebstoffschicht als solche erhältlich ist durch Trocknung und/oder Aushärtung, insbesondere Vernetzung, einer insbesondere zuvor auf den Träger 2 aufgebrachten, aufgeschäumten, vorzugsweise unter mechanischem Energieeintrag aufgeschäumten, wässrig oder organisch basierten, vorzugsweise wässrig basierten, Lösung und/oder Dispersion des Klebstoffpolymers, insbesondere einhergehend mit einer zumindest teilweisen Brechung des durch die aufgeschäumte Lösung und/oder Dispersion des Klebstoffpolymers bereitgestellten Schaums. Was in diesem Zusammenhang den Begriff "Klebstoffpolymer" anbelangt, wie er im Rahmen der vorliegenden Erfindung insbesondere für die insbesondere aufgeschäumte Lösung bzw. Dispersion des Klebstoffpolymers verwendet wird, so umfasst dieser Begriff insbesondere auch Klebstoffpräpolymere, welche im Allgemeinen einer Nachvernetzung zugänglich sind, wie sie beispielsweise bei der Trocknung bzw. Aushärtung zur Herstellung des gebrochenen Schaums durchgeführt bzw. realisiert sein kann.

In diesem Zusammenhang kann die Trocknung bzw. Aushärtung, insbesondere Vernetzung, in Gegenwart mindestens eines Schaumbildners und gegebenenfalls mindestens eines Schaumstabilisators und gegebenenfalls mindestens eines Vernetzers und gegebenenfalls mindestens eines Emulgators und gegebenenfalls mindestens eines Verdickers durchgeführt sein. Entsprechendes gilt für die vorangehende Schaumbildung auf Basis der eingesetzten Dispersion bzw. Lösung.
Im Rahmen der vorliegenden Erfindung wird zur Herstellung der Klebstoffschicht 3 somit im Allgemeinen eine wässrig basierte Lösung bzw. Dispersion des Klebstoffpolymers eingesetzt, welche insbesondere keine bzw. zumindest im Wesentlichen keine organischen Lösemittel und/oder keine bzw. zumindest im Wesentlichen keine Co-Lösemittel enthält.

Was das im Rahmen der vorliegenden Erfindung zur Ausbildung der Klebstoffschicht 3 eingesetzte Klebstoffpolymer im Allgemeinen anbelangt, so kann dieses ausgewählt sein aus der Gruppe von Polyacrylat (PA), Polymethacrylat (PMA), Polymethylmethacrylat (PMMA), Polycarbonat (PC), Polyurethan (PU), und Silikonen sowie Mischungen oder Kombinationen von mindestens zwei der vorgenannten Verbindungen, vorzugsweise Polyurethan (PU). Im Rahmen der vorliegenden Erfindung werden besonders gute Materialeigenschaften in Bezug auf das resultierende Schutzmaterial nach der Erfindung erhalten, wenn das Klebstoffpolymer ein Polyurethan (PU) enthält bzw. wenn das Klebstoffpolymer ein Polyurethan (PU) ist. Im Allgemeinen können die vorgenannten Klebstoffpolymere auch in Form sogenannter *High Solids* eingesetzt werden.

Was die zur Herstellung des gebrochenen Klebstoffpolymerschaums eingesetzte Lösung bzw. Dispersion des Klebstoffpolymers anbelangt, so kann diese eine wässrig oder organisch basierte, vorzugsweise wässrig basierte, Ausgangslösung bzw. -dispersion des Klebstoffpolymers enthalten, insbesondere in Mengen im Bereich von 50 Gewichtsteilen bis 150 Gewichtsteilen, insbesondere im Bereich von 70 Gewichtsteilen bis 130 Gewichtsteilen, vorzugsweise im Bereich von 90 Gewichtsteilen bis 110 Gewichtsteilen, bezogen auf die Lösung bzw. Dispersion des Klebstoffpolymers. Insbesondere kann die Ausgangslösung bzw. -dispersion des Klebstoffpolymers und/oder die nach Zugabe der weiteren Komponenten erhaltene Lösung bzw. Dispersion als solche einen Feststoffgehalt, insbesondere in Form des Klebstoffpolymers, im Bereich von 20 Gew.-% bis 80 Gew.-%, insbesondere im Bereich von 30 Gew.-% bis 70 Gew.-%, vorzugsweise im Bereich von 40 Gew.-% bis 60 Gew.-%, bezogen auf die Lösung bzw. Dispersion, aufweisen. In diesem Zusammenhang kann die erfindungsgemäß zur Herstellung des gebrochenen Klebstoffpolymerschaums eingesetzte Lösung bzw. Dispersion des Klebstoffpolymers als solche das Klebstoffpolymer in Mengen im Bereich von 40 Gewichtsteilen bis 160 Gewichtsteilen, insbesondere 60 Gewichtsteilen bis 120 Gewichtsteilen, bezogen auf die Lösung bzw. Dispersion des Klebstoffpolymers, enthalten.

Was die Lösung bzw. Dispersion des Klebstoffpolymers weiterhin anbelangt, so kann diese das Löse- bzw. Dispergiermittel, insbesondere Wasser, in Mengen im Bereich von 50 bis 200 Gewichtsteilen, insbesondere im Bereich von 80 bis 160 Gewichtsteilen, bezogen auf die Lösung bzw. Dispersion des Klebstoffpolymers, enthalten.

Gegebenenfalls kann die Lösung bzw. Dispersion des Klebstoffpolymers zudem den Schaumbildner in Mengen im Bereich von 0,25 Gewichtsteilen bis 10 Gewichtsteilen, insbesondere im Bereich von 0,5 Gewichtsteilen bis 5 Gewichtsteilen, vorzugsweise im Bereich von 0,75 Gewichtsteilen bis 2 Gewichtsteilen, bezogen auf die Lösung bzw. Dispersion des Klebstoffpolymers, enthalten. Die im Rahmen der vorliegenden Erfindung einsetzbaren Schaumbildner sind dem Fachmann als solche wohlbekannt, so dass es diesbezüglich keiner weiterführenden Ausführungen bedarf. Insbesondere ist der Fachmann jederzeit in der Lage, den in Rede stehenden Schaumbildner im Hinblick auf das zugrundeliegende Klebstoffpolymer und die gewünschten Eigenschaften des resultierenden Schaums bzw. gebrochenen Schaums auszuwählen und mengenmäßig abzustimmen.

Was weiterhin den Schaumstabilisator anbelangt, so kann dieser ein insbesondere anionisches Fettsäuresalz sein. Insbesondere kann die Lösung bzw. Dispersion des Klebstoffpolymers den Schaumstabilisator in Mengen im Bereich von 2 Gewichtsteilen bis 25 Gewichtsteilen, insbesondere im Bereich von 3 Gewichtsteilen bis 20 Gewichtsteilen, vorzugsweise im Bereich von 5 Gewichtsteilen bis 10 Gewichtsteilen, bezogen auf die Lösung bzw. Dispersion des Klebstoffpolymers, enthalten.

Was weiterhin den Vernetzer anbelangt, so kann dieser ein insbesondere blockiertes Isocyanat sein, vorzugsweise ein insbesondere blockiertes aliphatisches Polyisocyanat, und zwar insbesondere im Hinblick auf die erfindungsgemäße Ausgestaltung, wonach als Klebstoffpolymer ein Polyurethan eingesetzt wird. Die Lösung bzw. Dispersion des Klebstoffpolymers kann dabei den Vernetzer in Mengen im Bereich von 0,5 Gewichtsteilen bis 15 Gewichtsteilen, insbesondere im Bereich von 1 Gewichtsteil bis 10 Gewichtsteilen, vorzugsweise im Bereich von 3 Gewichtsteilen bis 8 Gewichtsteilen, bezogen auf die Lösung bzw. Dispersion des Klebstoffpolymers, enthalten.

Was den erfindungsgemäß einsetzbaren Emulgator anbelangt, so kann dieser ein insbesondere nichtionischer Polyglykolether, vorzugsweise ein insbesondere nichtionischer Arylpolyglykolether, sein. Insbesondere kann die Lösung und/oder Dispersion des Klebstoffpolymers den Emulgator in Mengen im Bereich von 0,25 Gewichtsteilen bis 10 Gewichtsteilen, insbesondere im Bereich von 0,5 Gewichtsteilen bis 5 Gewichtsteilen, vorzugsweise im Bereich von 1 Gewichtsteil bis 3 Gewichtsteilen, bezogen auf die Lösung bzw. Dispersion des Klebstoffpolymers, enthalten.

Zudem kann die Lösung bzw. Dispersion des Klebstoffpolymers den Verdicker in Mengen im Bereich von 0,05 Gewichtsteilen bis 5 Gewichtsteilen, insbesondere im Bereich von 0,1 Gewichtsteilen bis 3 Gewichtsteilen, vorzugsweise im Bereich von 0,2 Gewichtsteilen bis 1 Gewichtsteil, bezogen auf die Lösung bzw. Dispersion des Klebstoffpolymers, enthalten. Beispielsweise kann es sich bei dem Verdicker um ein Acrylat handeln.

Weiterhin kann die zugrundeliegende Lösung bzw. Dispersion des Klebstoffpolymers bzw. der gebrochene Klebstoffpolymerschaum bzw. die Klebstoffschicht zudem Füllstoffe, insbesondere anorganische Füllstoffe, oder dergleichen enthalten.

Durch die gezielte Auswahl und Abstimmung der zuvor angeführten Komponenten können die resultierenden Materialeigenschaften der auf dieser Basis erhältlichen Klebstoffschicht in Form des ausgehend von der eingesetzten Lösung bzw. Dispersion des Klebstoffpolymers getrockneten bzw. ausgehärteten gebrochenen Klebstoffpolymerschaums eingestellt bzw. maßgeschneidert werden.

Darüber hinaus kann das Schutzmaterial nach der Erfindung, insbesondere der gebrochene Klebstoffpolymerschaum bzw. die Klebstoffschicht, flamm- und/oder feuerbeständige, antimikrobielle, insbesondere antibakterielle, bzw. biostatische und/oder antistatische Eigenschaften aufweisen. Hierzu kann das Schutzmaterial nach der Erfindung, insbesondere der gebrochene Klebstoffpolymerschaum bzw. die Klebstoffschicht, mindestens einen Zusatzstoff, ausgewählt aus der Gruppe von Flamm- und/oder Feuer- bzw. Brandschutzmitteln; antimikrobiellen, insbesondere antibakteriellen, bzw. biostatischen Mitteln; und Antistatika sowie deren Mischungen oder Kombinationen, enthalten. Zudem kann das Schutzmaterial nach der Erfindung, insbesondere der gebrochene Klebstoffpolymerschaum bzw. die Klebstoffschicht, mindestens einen Farbstoff enthalten.

Was darüber hinaus die Adsorptionsschicht 4 des erfindungsgemäßen Schutzmaterials 1 anbelangt, so kann diese diskontinuierlich ausgebildet sein. Insbesondere kann die Adsorptionsschicht 4 als ein Adsorptionsflächenfilter ausgebildet sein. Wie zuvor angeführt, können die erfindungsgemäß eingesetzten Adsorberpartikel 5 der Adsorptionsschicht 4 die Klebstoffschicht 3 zumindest im Wesentlichen vollständig belegen bzw. zumindest im Wesentlichen vollflächig auf der Klebstoffschicht 3 aufgebracht sein (vgl. Fig. 4).

Im Allgemeinen kann die Adsorptionsschicht 4 eine Dicke d₄ (Querschnittsdicke) im Bereich von 0,01 mm bis 2,5 mm, insbesondere 0,02 mm bis 2 mm, bevorzugt 0,03 mm bis 1 mm, besonders bevorzugt 0,05 mm bis 0,5 mm, aufweisen.

Insbesondere befindet sich die Adsorptionsschicht 4 in Bezug auf den Tragezustand des erfindungsgemäßen Schutzmaterials (beispielsweise in Form von Schutzbekleidung) auf der dem Träger abgewandten Seite der Klebstoffschicht 3 (zum Schichtaufbau siehe auch Fig. 1A).

Im Rahmen der vorliegenden Erfindung können eine Vielzahl verschiedener Adsorptionsmaterialien für die Adsorberpartikel 5 zur Ausbildung der Adsorptionsschicht 4 eingesetzt werden:
Insbesondere können die Adsorberpartikel 5 der Adsorptionsschicht 4 ausgewählt sein aus der Gruppe von
(i) insbesondere partikulärer Aktivkohle und/oder Aktivkohlepartikeln, vorzugsweise in Form von Aktivkohleteilchen in Kornform ("Kornkohle") oder Kugelform ("Kugelkohle");
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) lonenaustauscherharzen, insbesondere polydispersen und/oder monodispersen Kationen- und/oder Anionenaustauschern, insbesondere vom Geltyp und/oder makroporösen Typ;
(vi) anorganischen Oxiden, insbesondere Siliciumdioxiden, Silicagelen und/oder Aluminiumoxiden;
(vii) porösen organischen Polymeren und/oder porösen organisch-anorganischen Hybridpolymeren und/oder metallorganischen Gerüstmaterialien, insbesondere MOFs (*Metall Organic Framework*), COFs (*Covalent Organic Framework*), ZIFs (*Zeolithe Imidazolate Framework*), POMs (*Polymer Organic Material*) und/oder OFCs;
(viii) mineralischen Granulaten;
(ix) Klathraten; sowie
(x) deren Mischungen und/oder Kombinationen.

Gemäß einer erfindungsgemäß besonders bevorzugten Ausführung können die Adsorberpartikel 5 der Adsorptionsschicht 4 aus insbesondere partikulärer Aktivkohle bzw. Aktivkohlepartikeln, vorzugsweise in Form von Aktivkohleteilchen in Kornform ("Kornkohle") oder Kugelform ("Kugelkohle"), gebildet sein bzw. hieraus bestehen.

Die jeweiligen partikelbildenden Materialien der erfindungsgemäß eingesetzten Adsorptionsmaterialien sind dem Fachmann als solche wohlbekannt, und der Fachmann ist jederzeit in der Lage, die jeweiligen partikelbildenden Materialien im Lichte der Ausrüstung des erfindungsgemäßen Schutzmaterials mit speziellen Eigenschaften, insbesondere Adsorptionseigenschaften, im Lichte der vorliegenden Erfindung auszuwählen und abzustimmen.

Für erfindungsgemäß einsetzbare Aktivkohlen kann auch auf die nachfolgenden Ausführungen verwiesen werden. Darüber hinaus kann zu weiterführenden Einzelheiten zu den erfindungsgemäß gleichermaßen einsetzbaren MOF-Materialien insbesondere verwiesen werden auf die internationale Patentanmeldung WO 2009/096184 A1 sowie auf die parallele deutsche Patentanmeldung DE 10 2008 005 218 A1, deren jeweilige Offenbarung hiermit durch Bezugnahme vollumfänglich eingeschlossen ist.

Was den Durchmesser bzw. mittleren Durchmesser D₅₀ der erfindungsgemäß eingesetzten Adsorberpartikel 5 anbelangt, so kann dieser gleichermaßen in weiten Bereichen variieren. Besondere gute Ergebnisse werden jedoch erhalten, wenn der Durchmesser der Adsorberpartikel 5, insbesondere der Aktivkohlepartikel, 0,005 mm bis 2,5 mm, vorzugsweise 0,01 mm bis 2 mm, bevorzugt 0,015 mm bis 0,5 mm, besonders bevorzugt 0,02 mm bis 0,3 mm, ganz besonders bevorzugt 0,03 mm bis 0,15 mm, beträgt. Zudem kann der mittlere Durchmesser, insbesondere der mittlere Durchmesser D₅₀, der Adsorberpartikel 5, insbesondere der Aktivkohlepartikel, 0,01 mm bis 2 mm, insbesondere 0,02 mm bis 1 mm, bevorzugt 0,03 mm bis 0,5 mm, besonders bevorzugt 0,04 mm bis 0,4 mm, ganz besonders bevorzugt 0,04 mm bis 0,2 mm, betragen. Im Rahmen der vorliegenden Erfindung können insbesondere auch aufgrund der guten Fixierung an der Klebstoffschicht in Form des gebrochenen Klebstoffpolymerschaums und der hohen Zugänglichkeit der Adsorbentien relativ kleine Adsorberpartikel 5 eingesetzt werden, was zu einer nochmaligen Verringerung des Flächengewichts des erfindungsgemäßen Schutzmaterials 1 führt und zudem die Belegung der Oberfläche der Klebstoffschicht verbessert, da die einzelnen Partikel dichter bzw. mit geringeren Zwischenräumen zueinander auf der Klebstoffschicht angebracht werden können (vgl. z. B. Fig. 4).

Die entsprechenden Teilchengrößen können insbesondere auf Basis der Methode nach ASTM D2862-97/04 bestimmt werden. Zudem können die vorgenannten Größen mit Bestimmungsmethoden auf Basis einer Siebanalyse, auf Basis von Röntgenbeugung, Laserdiffraktometrie oder dergleichen bestimmt werden. Die jeweiligen Bestimmungsmethoden sind dem Fachmann als solche wohlbekannt, so dass es diesbezüglich keiner weiteren Ausführungen bedarf.

Die Adsdorberpartikel 5, insbesondere die Aktivkohlepartikel, werden in einer Menge im Bereich von 5 g/m² bis 150 g/m², insbesondere 10 g/m² bis 90 g/m², vorzugsweise 15 g/m² bis 50 g/m², bevorzugt 20 g/m² bis 40 g/m², eingesetzt. Insbesondere kann das Schutzmaterial 1, insbesondere die Adsorptionsschicht 4, die Adsorberpartikel 5, insbesondere die Aktivkohlepartikel, in einer Menge im Bereich von 5 g/m² bis 150 g/m², insbesondere 10 g/m² bis 90 g/m², vorzugsweise 15 g/m² bis 50 g/m², bevorzugt 20 g/m² bis 40 g/m², aufweisen. Denn im Rahmen der vorliegenden Erfindung kann auch die Auftragsmenge der Adsorbentien aufgrund der gleichmäßigen und homogenen Verteilung der Adsorberpartikel 5 auf der Klebstoffschicht 3 verringert werden, was zu einer weiteren Minimierung des Flächengewichts führt.

Was die im Rahmen der vorliegenden Erfindung verwendete(n) bzw. eingesetzte(n) Aktivkohle bzw. Aktivkohlepartikel (nachfolgend auch nur als Aktivkohle bezeichnet) als solche anbelangt, so werden die vorliegend aufgeführten Parameterangaben bezüglich der zugrundeliegenden Aktivkohle bzw. Aktivkohlepartikel mit genormten oder explizit angegebenen Bestimmungsverfahren oder mit dem Fachmann an sich geläufigen Bestimmungsmethoden bestimmt. Insbesondere die Parameterangaben betreffend die Charakterisierung der Porosität der Porengrößenverteilung und andere Adsorptionseigenschaften ergeben sich im Allgemeinen jeweils aus den entsprechenden Stickstoffsorptionsisothermen der betreffenden Aktivkohle bzw. der vermessenen Produkte. Zudem kann die Porenverteilung, insbesondere auch im Hinblick auf den Gehalt an Mikroporen in Bezug auf das Gesamtporenvolumen, auf Basis der DIN 66135-1 bestimmt werden.

Gemäß einer erfindungsgemäß bevorzugten Ausführungsform, wonach als Adsorberpartikel 5 bzw. als Adsorptionsmaterial Aktivkohle bzw. Aktivkohlepartikel eingesetzt wird bzw. werden, kann die Aktivkohle erhältlich sein durch Carbonisierung und nachfolgende Aktivierung eines synthetischen und/oder nicht naturstoffbasierten Ausgangsmaterials, insbesondere auf Basis organischer Polymere.

In diesem Zusammenhang kann die Aktivkohle aus einem Ausgangsmaterial auf Basis organischer Polymere, insbesondere auf Basis sulfonierter organischer Polymere, vorzugsweise auf Basis von divinylbenzolvernetztem Polystyrol, bevorzugt auf Basis von Styrol/Divinylbenzol-Copolymeren, erhalten werden, insbesondere durch Carbonisierung und nachfolgende Aktivierung des Ausgangsmaterials. In diesem Zusammenhang kann der Gehalt an Divinylbenzol in dem Ausgangsmaterial im Bereich von 1 Gew.-% bis 20 Gew.-%, insbesondere 1 Gew.-% bis 15 Gew.-%, vorzugsweise 1,5 Gew.-% bis 12,5 Gew.-%, bevorzugt 2 Gew.-% bis 10 Gew.-%, bezogen auf das Ausgangsmaterial, liegen.

Erfindungsgemäß kann das Ausgangsmaterial für die Aktivkohle ein insbesondere sulfoniertes und/oder Sulfonsäuregruppen enthaltendes lonenaustauscherharz, insbesondere vom Geltyp, sein.

Gemäß einer erfindungsgemäß bevorzugten Ausführungsform kann als Aktivkohle eine polymerbasierte sphärische Aktivkohle (PBSAC; *Polymer-based Spherical Activated Carbon*) eingesetzt werden. Insbesondere kann die Aktivkohle eine polymerbasierte sphärische Aktivkohle (PBSAC) sein. Derartige Aktivkohlen zeichnen sich durch hervorragende Adsorptionseigenschaften gegenüber den zuvor genannten Schad- bzw. Giftstoffen und durch hervorragende mechanische Eigenschaften, wie eine hohe Materialhärte sowie eine hohe Abriebshärte, auf.

Die eingesetzte Aktivkohle kann dabei grundsätzlich nach bekannten Verfahren des Standes der Technik erhalten werden: Insbesondere werden zu diesem Zweck kugelförmige sulfonierte organische Polymere, insbesondere auf Basis von divinylbenzolvernetztem Polystyrol, carbonisiert und anschließend zu der betreffenden Aktivkohle aktiviert, insbesondere wie zuvor angeführt. Für weitergehende diesbezügliche Einzelheiten kann beispielsweise auf die Druckschriften DE 43 28 219 A1, DE 43 04 026 A1, DE 196 00 237 A1 sowie EP 1 918 022 A1 bzw. auf die parallele, zu derselben Patentfamilie gehörende US 7,737,038 B2 verwiesen werden, deren jeweiliger Inhalt hiermit durch Bezugnahme vollumfänglich eingeschlossen ist.

Im Rahmen der vorliegenden Erfindung zum Einsatz kommende Aktivkohlen bzw. Aktivkohlepartikel sind im Allgemeinen kommerziell erhältlich bzw. handelsüblich. Insbesondere können Aktivkohlen zum Einsatz kommen, welche beispielsweise von der Blücher GmbH, Erkrath, Deutschland, oder von der AdsorTech GmbH, Premnitz, Deutschland, vertrieben werden.

Im Rahmen der vorliegenden Erfindung hat es sich als vorteilhaft erwiesen, wenn die erfindungsgemäß eingesetzte Aktivkohle ein weiterführend spezifiziertes Gesamtporenvolumen, insbesondere ein Gesamtporenvolumen nach Gurvich, aufweist, wie im Folgenden angeführt.

In diesem Zusammenhang kann die Aktivkohle ein Gesamtporenvolumen, insbesondere ein Gesamtporenvolumen nach Gurvich, im Bereich von 0,3 cm³/g bis 3,8 cm³/g, insbesondere im Bereich von 0,4 cm³/g bis 3,5 cm³/g, vorzugsweise im Bereich von 0,5 cm³/g bis 3 cm³/g, besonders bevorzugt im Bereich von 0,6 cm³/g bis 2,5 cm³/g, ganz besonders bevorzugt im Bereich von 0,5 cm³/g bis 1,5 cm³/g, aufweisen. Insbesondere können mindestens 65 %, insbesondere mindestens 70 %, vorzugsweise mindestens 75 %, bevorzugt mindestens 80 %, des Gesamtporenvolumens, insbesondere des Gesamtporenvolumens nach Gurvich, der Aktivkohle durch Poren mit Porendurchmessern von höchstens 50 nm, insbesondere durch Mikro- und/oder Mesoporen, gebildet werden.

Insbesondere können 50 % bis 95 %, insbesondere 60 % bis 90 %, vorzugsweise 70 % bis 85 %, des Gesamtporenvolumens, insbesondere des Gesamtporenvolumens nach Gurvich, der Aktivkohle durch Poren mit Porendurchmessern von höchstens 50 nm, insbesondere durch Mikro- und/oder Mesoporen, gebildet werden. Zudem können 1 % bis 60 %, insbesondere 5 % bis 50 %, vorzugsweise 10 % bis 40 %, bevorzugt 15 % bis 35 %, des Gesamtporenvolumens, insbesondere des Gesamtporenvolumens nach Gurvich, der Aktivkohle durch Poren mit Porendurchmessern von mehr als 2 nm, insbesondere durch Meso- und/oder Makroporen, gebildet werden. Insbesondere kann die Aktivkohle ein durch Poren mit Porendurchmessern von höchstens 2 nm (d.h. ≤ 2 nm) gebildetes Porenvolumen, insbesondere Mikroporenvolumen nach Carbon Black, im Bereich von 0,05 cm³/g bis 2,5 cm³/g, insbesondere 0,15 cm³/g bis 2 cm³/g, vorzugsweise 0,3 cm³/g bis 1,5 cm³/g, aufweisen. In diesem Zusammenhang können insbesondere 15% bis 98 %, insbesondere 25 % bis 95 %, vorzugsweise 35 % bis 90 %, des Gesamtporenvolumens der Aktivkohle durch Poren mit Porendurchmessern von höchstens 2 nm, insbesondere durch Mikroporen, gebildet werden.

In Bezug auf erfindungsgemäß einsetzbare mikroporöse Aktivkohle kann zudem auf die auf die Anmelderin selbst zurückgehende europäische Patentanmeldung EP 1 918 022 A1 sowie auf die parallele US 2008/0107589 A1 verwiesen werden, deren jeweilige Offenbarung hiermit durch Bezugnahme vollumfänglich eingeschlossen ist.

Was die Bestimmung des Gesamtporenvolumens nach Gurvich anbelangt, so handelt es sich um eine dem Fachmann auf diesem Gebiet an sich wohlbekannte Mess-/Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805*,* sowie auf S. Lowellet al., Characterization of Porous Solids and Powders: Surface Area Pore Size and Density, Kluwer Academic Publishers, Article Technology Series, Seiten 111 ff. Insbesondere kann das Porenvolumen der Aktivkohle auf Basis der Gurvich-Regel gemäß der Formel V_{P} = Wₐ/ ρₗ bestimmt werden, wobei Wₐ die adsorbierte Menge eines zugrundeliegenden Adsorbats und ρₗ die Dichte des eingesetzten Adsorbats darstellt (vgl. auch Formel (8.20) gemäß Seite 111, Kapitel 8.4.) von S. Lowell et al.).

Die Bestimmungsmethode nach Carbon Black ist dem Fachmann an sich bekannt, wobei zudem für weitergehende Einzelheiten zur Bestimmung der Porenoberfläche und des Porenvolumens nach Carbon Black beispielsweise verwiesen werden kann auf R. W. Magee, Evaluation of the External Surface Area of Carbon Black by Nitrogen Adsorption, Presented at the Meeting of the Rubber Division of the American Chem. Soc., October 1994, z. B. referiert in: *Quantachrome Instruments,* AUTOSORB-1, AS1 WinVersion 1.50, Operating Manual, OM, 05061, Quantachrome Instruments 2004, Florida, USA, Seiten 71 ff. Insbesondere kann die diesbezügliche Auswertung mittels *t-plot-method* erfolgen.

Die Bestimmung der spezifischen Oberfläche gemäß BET ist dem Fachmann grundsätzlich als solche bekannt, so dass diesbezüglich keine weitergehenden Einzelheiten ausgeführt zu werden brauchen. Sämtliche BET-Oberflächenangaben beziehen sich auf die Bestimmung gemäß ASTM D6556-04. Im Rahmen der vorliegenden Erfindung wird zur Bestimmung der BET-Oberfläche - im Allgemeinen und sofern nicht ausdrücklich abweichend angegeben - die so genannte Multi-Point-BET-Bestimmungsmethode (MP-BET) in einem Partialdruckbereich p/p₀ von 0,05 bis 0,1 angewendet.

Für weitergehende Einzelheiten zu der Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968), verwiesen werden.

Im Rahmen der vorliegenden Erfindung bezeichnet der Begriff "Mikroporen" solche Poren mit Porendurchmessern von weniger als 2 nm, wohingegen der Begriff "Mesoporen" solche Poren mit Porendurchmessern im Bereich von 2 nm (d.h. 2 nm einschließlich) bis 50 nm einschließlich bezeichnet und der Begriff "Makroporen" solche Poren mit Porendurchmessern von mehr als 50 nm (d.h. > 50 nm) bezeichnet.

Weiterhin kann die Aktivkohle eine spezifische BET-Oberfläche im Bereich von 600 m²/g bis 4.000 m²/g, insbesondere 800 m²/g bis 3.500 m²/g, vorzugsweise 1.000 m²/g bis 3.000 m²/g, besonders bevorzugt 1.200 m²/g bis 2.750 m²/g, ganz besonders bevorzugt 1.300 m²/g bis 2.500 m²/g, aufweisen.

Zudem kann die Aktivkohle eine durch Poren mit Porendurchmessern von höchstens 2 nm, insbesondere durch Mikroporen, gebildete Oberfläche im Bereich von 400 bis 3.500 m²/g, insbesondere 500 bis 3.000 m²/g, vorzugsweise 600 bis 2.500 m²/g, bevorzugt 700 bis 2.000 m²/g, aufweisen. Insbesondere kann die Aktivkohle eine durch Poren mit Porendurchmessern im Bereich von 2 nm bis 50 nm, insbesondere durch Mesoporen, gebildete Oberfläche im Bereich von 200 bis 2.000 m²/g, insbesondere 300 bis 1.900 m²/g, vorzugsweise 400 bis 1.800 m²/g, bevorzugt 500 bis 1.700 m²/g, aufweisen.

Die erfindungsgemäß verwendbare Aktivkohle kann zudem einen mittleren Porendurchmesser im Bereich von 0,1 nm bis 55 nm, insbesondere 0,2 nm bis 50 nm, vorzugsweise 0,5 nm bis 45 nm, bevorzugt 1 nm bis 40 nm, aufweisen.

Was die Absorptionsschicht 4 als solche anbelangt, so kann es erfindungsgemäß vorgesehen sein, dass, wie in Fig. 1B dargestellt, sich die Absorptionsschicht 4 teilweise in die Klebstoffschicht 3 hineinerstreckt. In diesem Zusammenhang kann es erfindungsgemäß vorgesehen sein, dass sich einzelne Adsorberpartikel 5 in die Klebstoffschicht 3 hineinerstrecken bzw. auch vollständig in der Klebstoffschicht 3 vorliegen. Hierdurch wird zum einen die Fixierung der Adsorberpartikel 5 insgesamt verbessert und zum anderen auch die Belegungsdichte der Adsorberpartikel 5 auf der Klebstoffschicht 3 erhöht.

Erfindungsgemäß kann es dabei vorgesehen sein, dass sich die Adsorptionsschicht 4 sich über mindestens 10 %, insbesondere mindestens 15 %, vorzugsweise mindestens 20 %, der Dicke d₃ der Klebstoffschicht 3 in die Klebstoffschicht 3 hineinerstreckt. In diesem Zusammenhang kann die Adsorptionsschicht 4 sich über höchstens 60 %, insbesondere höchstens 50 %, vorzugsweise höchstens 40 %, der Dicke d₃ der Klebstoffschicht 3 in die Klebstoffschicht 3 hineinerstrecken.

Was zudem den erfindungsgemäß eingesetzten textilen Träger 2 anbelangt, so kann dieser als ein textiles Flächengebilde, vorzugsweise ein luftdurchlässiges Textilmaterial, bevorzugt ein Gewebe, Gewirke, Gestricke, Gelege, Vlies bzw. Nonwoven oder Textilverbundstoff, ausgebildet sein. Insbesondere kann der textile Träger 2 ein Flächengewicht im Bereich von 10 g/m² bis 400 g/m², insbesondere im Bereich von 20 g/m² bis 200 g/m², bevorzugt im Bereich von 30 g/m² bis 150 g/m², aufweisen. Im Allgemeinen kann der textile Träger 2 eine Dicke d₂ (Querschnittsdicke) im Bereich von 0,02 mm bis 5 mm, insbesondere im Bereich von 0,05 mm bis 3 mm, bevorzugt im Bereich von 0,1 mm bis 2 mm, besonders bevorzugt im Bereich von 0,2 mm bis 1 mm, aufweisen.

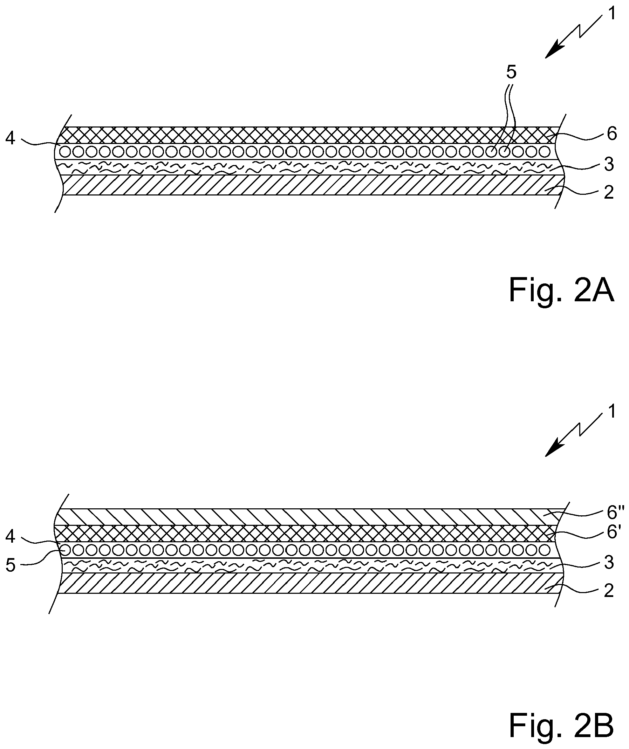

Wie insbesondere in Fig. 2A und Fig. 2B dargestellt, kann das Schutzmaterial zudem mindestens eine (äußere) Abdeckschicht 6 aufweisen. In diesem Zusammenhang kann die Abdeckschicht 6 auf der dem textilen Träger 2 und/oder der Klebstoffschicht 3 abgewandten Seite der Adsorptionsschicht 4 angeordnet sein. In diesem Zusammenhang kann die Abdeckschicht 6 an der Klebstoffschicht 3 und/oder der Adsorptionsschicht 4 befestigt bzw. zum Haften gebracht sein, beispielsweise infolge der Eigenklebrigkeit der Klebstoffschicht. Zudem kann die Fixierung auch durch Verwendung eines Haftklebstoffs, insbesondere Dispersionsklebstoffs, gewährleistet werden, insbesondere wobei der Haftklebstoff diskontinuierlich aufgebracht ist.

Insbesondere kann die Abdeckschicht 6 ein textiles Flächengebilde, vorzugsweise ein luftdurchlässiges Textilmaterial, insbesondere ein Gewebe, Gewirke, Gestricke, Gelege, Vlies bzw. Nonwoven oder Textilverbundstoff, insbesondere ein Vlies, sein. Zudem kann die Abdeckschicht 6 ein Flächengewicht im Bereich von 1 g/m² bis 200 g/m², insbesondere im Bereich von 5 g/m² bis 100 g/m², vorzugsweise im Bereich von 10 g/m² bis 50 g/m², aufweisen. Insbesondere kann die Abdeckschicht 6 ein Flächengewicht von höchstens 200 g/m², insbesondere höchstens 100 g/m², vorzugsweise höchstens 50 g/m², aufweisen.

Erfindungsgemäß kann der textile Träger 2 und/oder die Abdeckschicht 6, unabhängig voneinander, ein aus natürlichen und/oder synthetischen Fasern, vorzugsweise synthetischen Fasern (Chemiefasern), bestehendes textiles Flächengebilde sein. Insbesondere kann der textile Träger 2 und/oder die Abdeckschicht 6, unabhängig voneinander, ein textiles Flächengebilde mit oder aus natürlichen und/oder synthetischen Fasern, insbesondere aus der Gruppe von Polyestern (PES); Polyolefinen, wie Polyethylen (PE) und Polypropylen (PP), Polyvinylchlorid (CLF); Polyvinylidenchlorid (CLF); Acetat (CA); Triacetat (CTA); Polyacryl (PAN), Polyamid (PA); Polyaramiden; Polyvinylalkohol (PVAL); Polyurethanen; Polyvinylestern; (Meth-)Acrylaten; sowie deren Mischungen oder Kombinationen, sein. Zudem kann die Abdeckschicht 6 eine Dicke im Bereich von 0,001 bis 10 mm, insbesondere im Bereich 0,01 bis 5 mm, vorzugsweise im Bereich 0,01 bis 1 mm, aufweisen.

Weiterhin kann der textile Träger 2 und/oder die Abdeckschicht 6, unabhängig voneinander, eine Luftdurchlässigkeit von mindestens 150 l · m⁻² · s⁻¹, insbesondere mindestens 200 l · m⁻² · s⁻¹, vorzugsweise mindestens 250 l · m⁻² · s⁻¹, besonders bevorzugt mindestens 400 l · m⁻² · s⁻¹, ganz besonders bevorzugt mindestens 800 l · m⁻² · s⁻¹ oder mehr, bei einem Strömungswiderstand von 127 Pa aufweisen.

In diesem Zusammenhang kann es auch vorgesehen sein, dass ein dem erfindungsgemäßen Schutzmaterial 1 zugrundeliegender Verbund bzw. eine entsprechende Kombination aus textilem Träger 2 und Klebstoffschicht 3 eine Luftdurchlässigkeit von mindestens 125 l · m⁻² · s⁻¹, insbesondere mindestens 150 l · m⁻² · s⁻¹, vorzugsweise mindestens 200 l · m⁻² · s⁻¹, besonders bevorzugt mindestens 300 l m⁻² · s⁻¹, ganz besonders bevorzugt mindestens 700 l · m⁻² · s⁻¹ oder mehr, bei einem Strömungswiderstand von 127 Pa aufweist.

Das erfindungsgemäße Schutzmaterial 1 kann aufgrund seiner speziellen Konstruktion, insbesondere im Hinblick auf die Verwendung einer Klebstoffschicht auf Basis eines gebrochenen Klebstoffpolymerschaums grundsätzlich bereits auch Partikel- und/oder Aerosolfiltereigenschaften aufweisen. Diese Eigenschaft kann zudem noch weiterführend gesteigert werden, indem die Abdeckschicht 6 in spezieller Weise als Partikel- bzw. Aerosolfilterschicht ausgebildet ist.

Demnach kann es erfindungsgemäß vorgesehen sein, dass die Abdeckschicht 6 als ein HEPA-Filter (High Efficiency Penetration oder Particulate Air) oder ULPA-Filter (Ultra Low Penetration oder Particulate Air) ausgebildet ist. In diesem Zusammenhang kann die Abdeckschicht 6 als ein HEPA-Filter (High Efficiency Penetration oder Particulate Air) oder ULPA-Filter (Ultra Low Penetration oder Particulate Air) ausgebildet sein.

In diesem Zusammenhang kann die Abdeckschicht 6, insbesondere die Partikel- und/oder Aerosolfilterschicht, ein aus Textilfasern bestehendes textiles Flächengebilde sein. Insbesondere kann der mittlere Durchmesser der Textilfasern höchstens 50 µm, insbesondere höchstens 30 µm, vorzugsweise höchstens 20 µm, bevorzugt höchstens 10 µm, besonders bevorzugt höchstens 5 µm, ganz besonders bevorzugt höchstens 2 µm, betragen. Zudem kann der Durchmesser der Textilfasern im Bereich von 0,05 bis 50 µm, insbesondere 0,1 bis 50 µm, vorzugsweise 0,2 bis 30 µm, besonders bevorzugt 0,2 bis 20 µm, ganz besonders bevorzugt 0,5 bis 10 µm, liegen.

Zudem kann die Abdeckschicht 6, insbesondere die Partikel- und/oder Aerosolfilterschicht, ein aus Textilfasern bestehendes textiles Flächengebilde mit durch die Textilfasern begrenzten Poren oder Maschen sein, wobei das textile Flächengebilde eine mittlere Porengröße oder mittlere Maschenweite von höchstens 200 µm, insbesondere höchstens 100 µm, vorzugsweise höchstens 75 µm, besonders bevorzugt höchstens 50 µm, ganz besonders bevorzugt höchstens 40 µm, aufweist.

Zudem kann die Abdeckschicht 6, insbesondere die Partikel- und/oder Aerosolfilterschicht, ein aus Textilfasern bestehendes textiles Flächengebilde mit durch die Textilfasern begrenzten Poren oder Maschen sein, wobei das Verhältnis der mittleren Porengröße oder Maschenweite zum mittleren Durchmesser der Textilfasern im Bereich von 0,1 bis 2.000, insbesondere 1 bis 500, vorzugsweise 5 bis 350, besonders bevorzugt 10 bis 300, ganz besonders bevorzugt 25 bis 250, liegen kann.

In diesem Zusammenhang kann die Abdeckschicht 6, insbesondere die Partikel- und/oder Aerosolfilterschicht, einen mittleren Wirkungsgrad Eₘ nach DIN EN 779 (Juli 1993) von mindestens 40 %, insbesondere mindestens 50 %, vorzugsweise mindestens 70 %, besonders bevorzugt mindestens 90 %, ganz besonders bevorzugt mindestens 95 %, aufweisen. In diesem Zusammenhang kann die Partikel- und/oder Aerosolfilterschicht 6 einen mittleren Abscheidegrad Aₘ nach DIN EN 779 (Juli 1993) von mindestens 50 %, insbesondere mindestens 70 %, vorzugsweise mindestens 90 %, besonders bevorzugt mindestens 95 %, ganz besonders bevorzugt mindestens 99 %, aufweisen.

Die Abdeckschicht 6, insbesondere die Partikel- und/oder Aerosolfilterschicht, kann einen integralen Anfangsdurchlassgrad Dᵢ nach DIN EN 1822 (April 1998; DEHS-Aerosol, MPPS = 0,1 bis 0,3 µm) von höchstens 50%, insbesondere höchstens 40 %, vorzugsweise höchstens 30 %, besonders bevorzugt höchstens 20 %, ganz besonders bevorzugt höchstens 10 %, aufweisen.

Zudem kann die Abdeckschicht 6, insbesondere die Partikel- und/oder Aerosolfilterschicht, bei einer Anströmgeschwindigkeit von 0,1 m/s eine mittlere Abscheiderate gegenüber Partikeln und/oder Aerosolen mit Durchmessern im Bereich von 0,1 bis 0,3 µm von mindestens 80 %, insbesondere mindestens 90 %, vorzugsweise mindestens 95 %, aufweisen. Insbesondere kann die Partikel- und/oder Aerosolfilterschicht 6 bei einer Anströmgeschwindigkeit von 0,1 m/s eine mittlere Abscheiderate gegenüber Partikeln und/oder Aerosolen mit Durchmessern ≥ 2 µm, insbesondere ≥ 1,5 µm, von mindestens 95 %, insbesondere mindestens 98 %, bevorzugt mindestens 99 %, aufweisen.

Gemäß einer erfindungsgemäßen Ausführungsform, wie sie insbesondere in Fig. 2B dargestellt ist, kann es vorgesehen sein, dass das Schutzmaterial 1 nach der Erfindung mindestens zwei Abdeckschichten 6', 6", aufweist. In diesem Zusammenhang kann eine der Abdeckschichten 6', 6" als Partikel- und/oder Aerosolfilterschicht, insbesondere wie zuvor definiert, ausgebildet sein. In diesem Zusammenhang kann zudem die als Partikel- und/oder Aerosolfilterschicht ausgebildete Abdeckschicht 6' zwischen der Adsorptionsschicht 4 und der weiteren Abdeckschicht 6" angeordnet sein. Diesbezüglich kann auch auf Fig. 2B verwiesen werden.

Im Rahmen der vorliegenden Erfindung kann es zudem vorgesehen sein, dass das Schutzmaterial eine weitere (innere) Abdeckschicht aufweist. Die weitere Abdeckschicht kann dabei insbesondere auf der der Klebstoffschicht 3 abgewandten Seite des textilen Trägers 2 angeordnet sein. Diesbezüglich kann die (innere) Abdeckschicht mittels eines Haftklebstoffs, insbesondere Dispersionsklebstoffs, an den textilen Träger 2 befestigt bzw. zum Haften gebracht sein, und zwar insbesondere auf der der Klebstoffschicht 3 abgewandten Seite des Trägers 2. Hierzu kann der Haftkleber bzw. das Haftmittel diskontinuierlich bzw. punktförmig aufgetragen sein.

Bezüglich der für die weitere (innere) Abdeckschicht eingesetzten Materialien kann auf die obigen Ausführungen zu der ersten Abdeckschicht 6 verwiesen werden.

Das Schutzmaterial 1 nach der Erfindung weist insgesamt hervorragende Eigenschaften auf, wie nachfolgend angeführt:
So kann das Schutzmaterial 1 nach der Erfindung ein Gesamtflächengewicht im Bereich von 80 g/m² bis 500 g/m², insbesondere im Bereich von 90 g/m² bis 400 g/m², vorzugsweise im Bereich von 100 g/m² bis 250 g/m², aufweisen.

Zudem kann das Schutzmaterial 1 nach der Erfindung eine Gas- bzw. Luftdurchlässigkeit von mindestens 50 l · m⁻² · s⁻¹, insbesondere mindestens 100 l · m⁻² · s⁻¹, vorzugsweise mindestens 150 l · m⁻² · s⁻¹, bevorzugt mindestens 200 l · m⁻² · s⁻¹, besonders bevorzugt mindestens 250 l · m⁻² · s⁻¹, ganz besonders bevorzugt mindestens 350 I · m⁻² · s⁻¹, und/oder bis zu 10.000 I · m⁻² · s⁻¹ bei einem Strömungswiderstand von 127 Pa aufweisen.

Weiterhin kann das Schutzmaterial 1 nach der Erfindung eine Dicke d₁ im Bereich von 0,1 bis 15 mm, insbesondere im Bereich von 0,2 bis 10 mm, vorzugsweise im Bereich von 0,3 bis 5,0 mm, bevorzugt im Bereich von 0,4 bis 3,0 mm, aufweisen. Bei der Dicke d₁ handelt es sich um die Gesamtquerschnittsdicke des erfindungsgemäßen Schutzmaterial (vgl. insbesondere Fig. 1A).

Darüber hinaus weist das erfindungsgemäße Schutzmaterial auch eine hervorragende Schutzfunktion gegenüber Schad- bzw. Giftstoffen, insbesondere chemischen Kampfstoffen, auf: So kann das Schutzmaterial 1 nach der Erfindung insbesondere eine Barrierewirkung gegenüber Schad- und/oder Giftstoffen, insbesondere chemischen Kampfstoffen, insbesondere Bis[2-chlorethyl]sulfid, bestimmt nach Methode 2.2 der CRDC-SP-84010, von höchstens 4 µg/cm² pro 24 h, insbesondere höchstens 3,5 µg/cm² pro 24 h, vorzugsweise höchstens 3,0 µg/cm² pro 24 h, bevorzugt höchstens 2,5 µg/cm² pro 24 h, besonders bevorzugt höchstens 2,25 µg/cm² pro 24 h, ganz besonders bevorzugt höchstens 2 µg/cm² pro 24 h, aufweisen.

Die vorliegende Erfindung betrifft auch den erfindungsgemäßen Aspekt, wonach das textile Schutzmaterial 1 nach der Erfindung durch das nachfolgend beschriebene Verfahren zu seiner Herstellung erhältlich ist. Die vorliegende Erfindung betrifft somit auch ein textiles Schutzmaterial 1, insbesondere mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen, vorzugsweise ein textiles Adsorptionsfiltermaterial, wobei das textile Schutzmaterial 1 erhältlich ist durch das nachfolgend beschriebene Verfahren nach der Erfindung.

Weiterer Gegenstand der vorliegenden Erfindung - gemäß einem **weiteren** Aspekt der vorliegenden Erfindung - ist zudem ein Verfahren zur Herstellung des textilen Schutzmaterials nach der Erfindung mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen, vorzugsweise zur Herstellung des textilen Adsorptionsfiltermaterials nach der Erfindung, insbesondere wie zuvor definiert, wobei das Verfahren die nachfolgenden Schritte in der angegebenen Reihenfolge umfasst:
(a) Bereitstellung eines zweidimensionalen und/oder flächigen, luftdurchlässigen textilen Trägers in Form eines textilen Flächenmaterials;
(b) Aufbringen einer Klebstoffschicht auf den textilen Träger, wobei die Klebstoffschicht in Form einer aufgeschäumten, vorzugsweise unter mechanischem Energieeintrag aufgeschäumten, wässrig oder organisch basierten, vorzugsweise wässrig basierten, Lösung und/oder Dispersion eines Klebstoffpolymers aufgebracht wird und wobei die aufgeschäumte Lösung und/oder Dispersion des Klebstoffpolymers in einer Menge im Bereich von 10g/m² bis 150 g/m² auf den textilen Träger aufgebracht wird;
(c) Aufbringen und/oder zum Haften bringen einer Vielzahl einzelner Adsorberpartikel auf die in Schritt (b) erhaltene Klebstoffschicht, insbesondere so dass eine auf der Klebstoffschicht aufgebrachte Adsorptionsschicht resultiert, wobei die Adsorberpartikel in einer Menge im Bereich von 5 g/m² bis 150 g/m² eingesetzt werden;
(d) Trocknung und/oder Aushärtung, insbesondere Vernetzung, der Klebstoffschicht in Form der aufgeschäumten Lösung und/oder Dispersion des Klebstoffpolymers, einhergehend mit einer Brechung des durch die aufgeschäumte Lösung und/oder Dispersion des Klebstoffpolymers bereitgestellten Schaums, so dass die Klebstoffschicht als getrockneter und/oder ausgehärteter, insbesondere vernetzter, gebrochener Klebstoffpolymerschaum erhalten wird und/oder vorliegt.

Im Rahmen der vorliegenden Erfindung kann insbesondere in Verfahrensschritt (d) eine zumindest teilweise Brechung des Klebstoffpolymerschaum durchgeführt werden.

Das erfindungsgemäße Verfahren zielt in spezieller Art und Weise darauf ab, dass zunächst eine vorzugsweise nicht getrocknete bzw. nicht (vollständig) ausgehärtete Klebstoffschicht auf Basis einer aufgeschäumten, wässrig bzw. organisch basierten Lösung bzw. Dispersion eines Klebstoffpolymers auf den zuvor bereitgestellten textilen Träger aufgebracht wird. Auf die so auf dem Träger aufgebrachte und bereitgestellte aufgeschäumte Schicht in Form der Lösung bzw. Dispersion werden anschließend die Adsorberpartikel aufgebracht, wobei wiederum nachfolgend eine Trocknung bzw. Aushärtung der Klebstoffschicht in Form der Lösung bzw. Dispersion des Klebstoffpolymers zum Erhalt des getrockneten bzw. ausgehärteten und gebrochenen Klebstoffpolymerschaums durchgeführt wird.

Was die erfindungsgemäß vorgesehene definierte Brechung des Schaums anbelangt, so wird diese - ohne sich auf diese Theorie beschränken zu wollen - im Rahmen des erfindungsgemäßen Verfahrens insbesondere dadurch verursacht, dass bei der Trocknung bzw. Aushärtung der Klebstoffschicht aus der ausgeschäumten Lösung bzw. Dispersion des Klebstoffpolymers entweichendes Löse- bzw. Dispersionsmittel, insbesondere Wasser, zu einem Aufbrechen der Schaumblasen bzw. der zugrundeliegenden Schaumstrukturen (Stege, Wandungen, Lamellen und/oder dergleichen) führt.

Zudem kann das in Rede stehende Aufbrechen der Schaumstruktur auch durch mechanischen Energieeintrag hervorgerufen werden, beispielsweise bereits im Rahmen des Aufbringens der aufgeschäumten Lösung bzw. Dispersion auf den textilen Träger bzw. im Rahmen des Aufbringens der Adsorberpartikel auf die Klebstoffschicht (z. B. hervorgerufen durch ein Andrücken des Schaumes mittels eines Wischers bzw. Rakelmessers bzw. einer Walze bzw. der Adsorberpartikel auf die Klebstoffschicht).

Im Rahmen der Herstellung bzw. Bereitstellung des gebrochenen Klebstoffpolymerschaums erfolgt dabei insbesondere, wie zuvor angeführt, eine Zerstörung und/oder ein Platzen und/oder Kollabieren der dem Schaum zugrundeliegenden Schaumstoffblasen, wobei in diesem Zusammenhang eine Vielzahl an zerstörten bzw. gebrochenen bzw. kollabierten Wandungen bzw. Lamellen bzw. Stegen aus Klebstoffpolymer geschaffen werden, so dass hierdurch die zuvor aufgeschäumte Schicht insgesamt aufgebrochen bzw. gebrochen wird.

Dabei wird in völlig überraschenderweise die Stabilität des so resultierenden gebrochenen Klebstoffpolymerschaums nicht bzw. zumindest im Wesentlichen nicht verringert, was insbesondere - ohne sich auf diese Theorie beschränken zu wollen - mit der erfindungsgemäßen Verfahrensführung einhergeht, wonach gewissermaßen die Brechung bzw. die Zerstörung der Schaumstrukturen bei oder vor der Trocknung bzw. Aushärtung erfolgt, so dass eine mit der Trocknung bzw. Aushärtung einhergehende Stabilisierung der gebrochenen Strukturen vorliegt.

Im Rahmen des erfindungsgemäßen Verfahrens ist es bevorzugt, wenn in Verfahrensschritt (a) der textile Träger in Form eines textilen Flächengebildes, vorzugsweise in Form eines luftdurchlässigen Textilmaterials, bevorzugt in Form eines Gewebes, Gewirkes, Gestrickes, Geleges, Vlieses oder Textilverbundstoffs, eingesetzt wird.

Zudem sollte das Aufschäumen der in Verfahrensschritt (b) eingesetzten aufgeschäumten Lösung bzw. Dispersion durch Gas- und/oder Lufteintrag in die Lösung und/oder Dispersion des Klebstoffpolymers erfolgen. Insbesondere wird das Aufschäumen aus der zugrundeliegenden Lösung bzw. Dispersion zur Bereitstellung der aufgeschäumten Lösung bzw. Dispersion des Klebstoffpolymers vor deren Aufbringen auf den textilen Träger des Schutzmaterials durchgeführt. Insbesondere sollte der Gas- bzw. Lufteintrag dabei durch Eindüsen, Einrühren, Vibrationseintrag, Schütteleintrag, Einblasen und/oder durch Scherkrafteintrag in die Lösung und/oder Dispersion des Klebstoffpolymers erfolgen. Auch die erfindungsgemäß einsetzbaren Schaumbildner können die Schaumbildung hervorrufen bzw. diese unterstützen.

In diesem Zusammenhang sollte die aufgeschäumte Lösung bzw. Dispersion des Klebstoffpolymers auf eine Dichte im Bereich von 50 g/l bis 500 g/l, insbesondere im Bereich von 75 g/l bis 400 g/l, vorzugsweise im Bereich von 100 g/l bis 300 g/l, eingestellt werden. In diesem Zusammenhang kann die der Aufschäumung zugrundeliegende, nichtgeschäumte Lösung bzw. Dispersion des Klebstoffpolymers eine Dichte im Bereich von 800 g/l bis 1.200 g/l aufweisen.

Das zugrundeliegende Klebstoffpolymer sollte insbesondere ausgewählt werden aus der Gruppe von Polyacrylat (PA), Polymethacrylat (PMA), Polymethylmethacrylat (PMMA), Polycarbonat (PC), Polyurethan (PU) und Silikonen sowie Mischungen oder Kombinationen von mindestens zwei der vorgenannten Verbindungen, vorzugsweise Polyurethan (PU). Gemäß einer erfindungsgemäß bevorzugten Ausführungsform wird als Klebstoffpolymer ein Polyurethan (PU) eingesetzt.

Besonders gute Ergebnisse hinsichtlich der Ausbildung der geschäumten Lösung bzw. Dispersion und damit einhergehend auch der resultierenden Schicht des getrockneten bzw. ausgehärteten gebrochenen Klebstoffpolymerschaums werden erhalten, wenn die Lösung bzw. Dispersion des Klebstoffpolymers mindestens einen Schaumbildner und gegebenenfalls mindestens einen Schaumstabilisator und gegebenenfalls mindestens einen Vernetzer und gegebenenfalls mindestens einen Emulgator und gegebenenfalls mindestens einen Verdicker enthält. Hinsichtlich der zugrundeliegenden Mengenangaben kann auf obige Ausführungen zu dem erfindungsgemäßen Schutzmaterial verwiesen werden.

Insbesondere sollte die eingesetzte Lösung bzw. Dispersion des Klebstoffpolymers einen Feststoffgehalt, insbesondere in Form des Klebstoffpolymers, im Bereich von 20 Gew.-% bis 80 Gew.-%, insbesondere im Bereich von 30 Gew.-% bis 70 Gew.-%, vorzugsweise im Bereich von 40 Gew.-% bis 60 Gew.-%, bezogen auf die Lösung und/oder Dispersion des Klebstoffpolymers, aufweisen. Insbesondere sollte die erfindungsgemäß eingesetzte Lösung und/oder Dispersion des Klebstoffpolymers einen Löse- und/oder Dispersionsmittelgehalt, insbesondere Wassergehalt, im Bereich von 20 Gew.-% bis 80 Gew.-%, insbesondere im Bereich von 30 Gew.-% bis 70 Gew.-%, vorzugsweise im Bereich von 40 Gew.-% bis 60 Gew.-%, bezogen auf die Lösung und/oder Dispersion des Klebstoffpolymers, aufweisen.

Was das Aufbringen der Klebstoffschicht auf Basis der Lösung bzw. Dispersion auf den textilen Träger in Verfahrensschritt (b) anbelangt, so können diesbezüglich eine Vielzahl an Verfahren eingesetzt werden, welche dem Fachmann als solche jeweils wohlbekannt sind, so dass es diesbezüglich keiner weiterführenden Ausführungen bedarf. Insbesondere kann das Aufbringen der Klebstoffschicht auf den textilen Träger in Verfahrensschritt (b) mittels Aufrakeln durchgeführt werden. In diesem Zusammehang kann das Aufrakeln der Klebstoffschicht auf den textilen Träger mittels Walzenspaltrakeln (*Knife-over-Roll*), Luftrakeln (*Knife-on-Air*), Schablonenauftrag und/oder Auftrag unter Verwendung von Direkte-Rolle-auf-Rolle-Systemen (*Direct-Roll-on-Rolf*) durchgeführt werden. Zudem kann das Auftragen mittels eines offenen Rakelsystems (*Open Squegee System*) und/oder eines geschlossenen Rakelsystems (*Closed Squegee System*) durchgeführt werden. Gleichermaßen ist auch ein Aufwalzen der aufgeschäumten Dispersion bzw. Lösung auf den textilen Träger, insbesondere mit einer nachfolgenden Vergleichmäßigung bzw. Verteilung in Form eines Glattstreichens der aufgebrachten Schicht möglich. Das Aufbringen der Klebstoffschicht in Form der aufgeschäumten Lösung bzw. Dispersion des Klebstoffpolymers kann insbesondere bei Raumtemperatur erfolgen.

Insbesondere kann in Verfahrensschritt (b) derart vorgegangen werden, dass die aufgeschäumte Lösung und/oder Dispersion in einer Menge im Bereich von 10 g/m² bis 150 g/m², insbesondere im Bereich von 20 g/m² bis 100 g/m², vorzugsweise im Bereich von 40 g/m² bis 80 g/m², auf den textilen Träger aufgebracht wird (Nassgewicht bzw. Nassauftrag, d.h. Auftrag der nichtgetrockneten Lösung bzw. Dispersion).

Insbesondere kann in Verfahrensschritt (b) derart vorgegangen werden, dass die aufgeschäumte Lösung und/oder Dispersion des Klebstoffpolymers in einer Dicke im Bereich von 0,01 mm bis 2 mm, insbesondere im Bereich von 0,05 mm bis 1,5 mm, vorzugsweise im Bereich von 0,1 mm bis 0,75 mm, bevorzugt im Bereich von 0,15 mm bis 0,5 mm, auf den textilen Träger aufgebracht wird.

Was das erfindungsgemäße Verfahren weiterhin anbelangt, so kann in Verfahrensschritt (c) das Aufbringen und/oder zum Haften bringen der Adsorberpartikel mittels Aufstreuen und/oder Aufrieseln und/oder Auflegen der Adsorberpartikel auf die Klebstoffschicht durchgeführt werden, gegebenenfalls unter bzw. mit nachfolgendem Andrücken und/oder Aufdrücken der Adsorberpartikel auf die Klebstoffschicht. Das Andrücken bzw. Aufdrücken kann beispielsweise über eine Walze oder dergleichen erfolgen. Im Rahmen des Aufdrückens kann bereits auch eine zumindest teilweise Brechung des zugrundeliegenden Schaums vorliegen bzw. durchgeführt werden.

Zudem kann es in Verfahrensschritt (c) vorgesehen sein, dass die Adsorberpartikel derart auf die Klebstoffschicht aufgebracht und/oder zum Haften gebracht werden, dass eine zumindest im Wesentlichen vollflächige Belegung der Klebstoffschicht mit den Adsorberpartikeln resultiert bzw. dass mindestens 80 %, insbesondere mindestens 90 %, vorzugsweise mindestens 95 %, bevorzugt mindestens 99 %, bevorzugt mindestens 99,5 %, der Fläche der Klebstoffschicht mit den Adsorberpartikeln belegt wird. In diesem Zusammenhang kann erfindungsgemäß somit eine besonders dichte Belegung der Oberfläche der Klebstoffschicht realisiert werden, wobei sozusagen eine "Partikel-an-Partikel"-Belegung zum Erhalt einer quasigeschlossenen Schicht realisiert werden kann. Wie zuvor angeführt, werden die Adsorberteilchen bzw. -partikel auf der dem textilen Träger abgewandten Seite der Klebstoffschicht aufgebracht.

Weiterhin kann erfindungsgemäß derart vorgegangen werden, dass in Verfahrensschritt (d) die Trocknung und/oder Aushärtung bei einer Temperatur im Bereich von 30 °C bis 250 °C, insbesondere 50 °C bis 200 °C, vorzugsweise 70 °C bis 180 °C, bevorzugt 90 °C bis 160 °C, durchgeführt wird. Zudem kann in Verfahrensschritt (d) die Trocknung bzw. Aushärtung für eine Zeitdauer im Bereich von 0,1 min bis 15 min, insbesondere 0,5 min bis 10 min, vorzugsweise 1 min bis 5 min, durchgeführt werden. Sofern im Rahmen der erfindungsgemäßen Verfahrensführung vorrangig eine Trocknung der Klebstoffschicht vorgesehen ist, wird vorzugsweise bei niedrigeren Temperaturen verfahren, während bei einer zusätzlich vorgesehenen (Nach-)Vernetzung bzw. Aushärtung der Klebstoffschicht bei entsprechend höheren Temperaturen verfahren werden kann.

In diesem Zusammenhang können in Verfahrensschritt (d) die Trocknung und die Aushärtung, insbesondere Vernetzung, aufeinander abfolgend bzw. als separate Schritte durchgeführt werden. Insbesondere kann dabei die Aushärtung nach Durchführung der Trocknung durchgeführt werden. In diesem Zusammenhang kann die Trocknung bei einer Temperatur im Bereich von 30 °C bis 100 °C, insbesondere 50 °C bis 80 °C, erfolgen, insbesondere für eine Zeitdauer im Bereich von 0,1 min bis 15 min. Die Aushärtung kann bei einer Temperatur im Bereich von 100 °C bis 250 °C, insbesondere 120 °C bis 200 °C, durchgeführt werden, insbesondere für eine Zeitdauer im Bereich von 0,1 min bis 15 min.

Erfindungsgemäß kann somit in Verfahrensschritt (d) die Klebstoffschicht in Form einer luftdurchlässig und/oder diskontinuierlich ausgebildeten Schicht auf Basis des getrockneten und/oder ausgehärteten, insbesondere vernetzten, gebrochenen Klebstoffpolymerschaums erhalten werden.

Im Rahmen des erfindungsgemäßen Verfahrens kann es insbesondere nach Durchführung von Verfahrensschritt (d) vorgesehen sein, dass im Rahmen eines Verfahrensschritts (e) das Schutzmaterial mit mindestens einer Abdeckschicht versehen wird. In diesem Zusammenhang kann die Abdeckschicht auf der dem textilen Träger und/oder der Klebstoffschicht abgewandten Seite der Adsorptionsschicht angeordnet werden. Dabei kann die Abdeckschicht an der Klebstoffschicht und/oder der Adsorptionsschicht befestigt bzw. zum Haften gebracht werden, insbesondere durch Verwendung eines Haftklebstoffs, insbesondere Dispersionsklebstoffs, insbesondere wobei der Haftklebstoff diskontinuierlich aufgebracht wird.

Insgesamt wird im Rahmen der vorliegenden Erfindung ein effizientes Verfahren zur Herstellung des textilen Schutzmaterials nach der Erfindung bereitgestellt.

Weiterhin betrifft die vorliegende Erfindung - gemäß einem **weiteren** Aspekt der vorliegenden Erfindung - die Verwendung des textilen Schutzmaterials nach der Erfindung, wie zuvor definiert, zur Herstellung von Schutzausrüstungen und/oder Schutzgegenständen aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz (NBC-Einsatz) und/oder mit Schutzfunktion gegenüber radioaktiven Schad- bzw. Giftstoffen und/oder gegenüber biologischen Schad- bzw. Giftstoffen und/oder gegenüber chemischen Schad- bzw. Giftstoffen; und/oder

zur Herstellung von Filtern und Filtermaterialien aller Art, insbesondere zur Entfernung von Schad-, Geruchs- und Giftstoffen aller Art, vorzugsweise zur Entfernung von radioaktiven Schad- und/oder Giftstoffen und/oder von biologischen Schad- und/oder Giftstoffen und/oder von chemischen Schad- und/oder Giftstoffen, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

Außerdem ist Gegenstand der vorliegenden Erfindung - gemäß einem **weiteren** Aspekt der vorliegenden Erfindung - die Verwendung des textilen Schutzmaterial nach der Erfindung, wie zuvor definiert, als Schutzausrüstungen bzw. Schutzgegenstände aller Art nach der Erfindung, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzausrüstungen und/oder Schutzgegenstände für den ABC-Einsatz (NBC-Einsatz) und/oder mit Schutzfunktion gegenüber radioaktiven Schad- bzw. Giftstoffen und/oder gegenüber biologischen Schad- bzw. Giftstoffen und/oder gegenüber chemischen Schad- bzw. Giftstoffen, hergestellt unter Verwendung eines Schutzmaterials, insbesondere wie zuvor definiert, und/oder aufweisend ein Schutzmaterial, insbesondere wie zuvor definiert.

Schließlich ist weiterer Gegenstand der vorliegenden Erfindung - gemäß einem **weiteren** Aspekt der vorliegenden Erfindung - die Verwendung des textilen Schutzmaterial nach der Erfindung, wie zuvor definiert, als Filter und Filtermaterialien aller Art, insbesondere zur Entfernung von Schad-, Geruchs- und Giftstoffen aller Art, vorzugsweise zur Entfernung von radioaktiven Schad- bzw. Giftstoffen und/oder von biologischen Schad- bzw. Giftstoffen und/oder von chemischen Schad- bzw. Giftstoffen, insbesondere aus Luft- und/oder Gasströmen, wie Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung eines Schutzmaterials, insbesondere wie zuvor definiert, und/oder aufweisend ein Schutzmaterial, insbesondere wie zuvor definiert.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

Es werden unterschiedliche textile Schutzmaterialien hergestellt, nämlich zwei erfindungsgemäße Schutzmaterialien (Schutzmaterial A, B) sowie ein Vergleichsschutzmaterial (Schutzmaterial C).

Zur Herstellung der erfindungsgemäßen Schutzmaterialien A, B wird jeweils eine textile Trägerschicht mit einem Flächengewicht von circa 80 g/m² vollflächig mit einer zuvor unter mechanischem Energieeintrag aufgeschäumten, wässrig basierten Lösung bzw. Dispersion eines Klebstoffpolymers beschichtet, wobei die Klebstoffschicht in Form der aufgeschäumten Lösung bzw. Dispersion auf den Träger aufgerakelt wird. Das in Form eines Schaums aufgebrachte Material in Form der Lösung bzw. Dispersion weist eine Dichte von etwa 200 g/l bei einem Feststoffgehalt von etwa 50 %, bezogen auf die Lösung bzw. Dispersion, auf. Die Lösung bzw. Dispersion wird in einer Menge von etwa 60 g/m² (Nassgewicht) aufgetragen. Die so aufgebrachte Schicht weist eine Dicke von etwa 0,2 bis 0,4 mm auf. Zur Herstellung eines erfindungsgemäßen Schutzmaterials A wird dabei eine Lösung bzw. Dispersion eines Klebstoffpolymers auf Basis eines Polyurethans (PU) aufgetragen, während für das erfindungsgemäße Schutzmaterial B eine Lösung bzw. Dispersion eines Klebstoffpolymers auf Basis von Polymethacrylats (PMA) eingesetzt wird.

Auf die so aufgebrachte Klebstoffschicht wird nachfolgend jeweils eine partikelförmige Aktivkohle mit einem mittleren Teilchendurchmesser von etwa 0,05 mm und mit einer Beladungsmenge von etwa 35 g/m² durch Aufstreuen und leichtes Andrücken aufgebracht. Es erfolgt eine Trocknung bzw. Aushärtung der Lösung bzw. Dispersion des Klebstoffpolymers zur weiterführenden Fixierung der Adsorbentien und zur Ausbildung des getrockneten bzw. ausgehärteten gebrochenen Klebstoffpolymerschaums bzw. der ausgehärteten Klebstoffschicht mit dem gebrochenen Schaum. Die Trocknung bzw. Aushärtung erfolgt dabei bei Temperaturen zwischen 100 °C und 150 °C.

Es resultieren erfindungsgemäße textile Schutzmaterialien A und B mit einem Flächengewicht der getrockneten Klebstoffschicht in Form des gebrochenen Schaums von etwa 30 g/m² (Trockengewicht), wobei das textile Schutzmaterial A mit einer Klebstoffschicht in Form eines Polyurethans und das textile Schutzmaterial B mit einer Klebstoffschicht in Form eines Polymethacrylats (PMA) versehen ist.

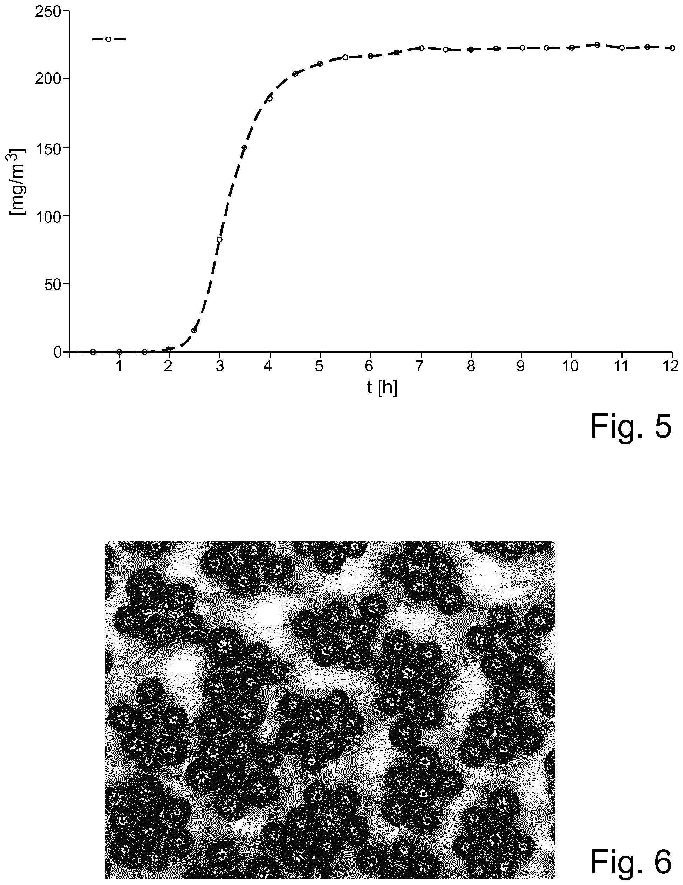

Weiterhin wird ein nichterfindungsgemäßes (Vergleichs-)Adsorptionsfiltermaterial C entsprechend Fig. 6 bereitgestellt, bei welchem auf einem textilen Träger (Flächengewicht etwa 80 g/m²) partikuläre Adsorbentien (mittlerer Teilchendurchmesser etwa 0,5 mm) in Form von Aktivkohle in einer Auftragsmenge von etwa 80 g/m² unter Verwendung eines diskontinuierlich-punktförmig aufgetragenen Haftmittels (homogen ausgebildeter, nichtgeschäumter Klebstoff auf Basis von Polyurethan) fixiert werden (Auftragsmenge des Klebstoffs etwa 50 g/m²), wobei ein Belegungsgrad des textilen Trägers mit den Adsorbentien von etwa 60 % resultiert. Auf dieser Basis resultiert ein Schutzmaterial in Form von Vergleichsmaterial C.

Bei allen drei Adsorptionsfiltermaterialien bzw. Schutzmaterialien A bis C wird die Schutzfunktion gegenüber Schad- bzw. Giftstoffen (hier konkret: Senfgas, HD) untersucht:
- Hierzu wird im Rahmen einer ersten Untersuchung die jeweilige Barrierewirkung gegenüber Senfgas im Rahmen eines sogenannten dynamischen Adsorptionstests (*"Dynamic Adsorption Test"*) bestimmt. Zu diesem Zweck lässt man bei konstantem Strömungswiderstand mit einer Strömungsgeschwindigkeit von circa 0,5 cm/s einen Senfgas enthaltenden Luftstrom (HD-Konzentration etwa 230 mg/m³) auf die jeweiligen Adsorptionsfiltermaterialien einwirken und bestimmt die flächenbezogene Durchbruchmenge nach verschiedenen Zeiträumen (bei definierter relativer Luftfeuchtigkeit und Temperatur). Die so erhaltenen Werte sind in Fig. 5 exemplarisch für das erfindungsgemäße Adsorptionsfiltermaterial A gezeigt.
   Für das weitere erfindungsgemäße Adsorptionsmaterial B werden zu Material A vergleichbare Werte ermittelt. Für das Vergleichsbeispiel C wird ein gegenüber den erfindungsgemäßen Schutzmaterialien A bzw. B früheres Auftreten eines Durchbruchs ermittelt, wobei der nachfolgende Anstieg der Durchbruchskurve höher bzw. steiler ist und im weiteren zeitlichen Verlauf die Durchbruchskonzentration im Vergleich zu A und B etwas vergrößert ist.
   Insgesamt weisen die untersuchten Materialien A, B sowie C gute Adsorptionseigenschaften auf, wobei in Bezug auf die erfindungsgemäßen Materialien A und B gegenüber dem Vergleichsmaterial C nochmals verbesserte Ergebnisse resultieren, und dies bei insgesamt geringerem Flächengewicht der erfindungsgemäßen Materialien A und B.
- In einer weiteren Untersuchung wird die Schutzfunktion gegenüber chemischen Kampfstoffen (ebenfalls Senfgas) auf Basis des sogenannten standardisierten Diffusionsströmungstests mit aufgelegten Tropfen ("*Laid Drop Diffusive Flow Test*") ermittelt. Hierzu werden die jeweiligen Adsorptionsfiltermaterialien (Probenfläche: jeweils 10cm²) in einer Testzelle über einer PE-Membran (10 µm), welche die menschliche Haut simuliert, eingespannt und Kampfstofftropfen (Senfgas, 8 Tropfen Senfgas mit einem Volumen von je 1 µl) auf die zu untersuchenden Materialien mit einer Kanüle aufgebracht. Der Luftstrom unter der Probe wird durch eine Waschflasche gezogen. Nach dem Versuch wird der kumulierte Durchbruch mittels Gaschromatographie in µg/m² gemessen; Mindestanforderung sind Werte von < 4 µg/m² (Testbedingungen: relative Luftfeuchtigkeit < 5 %, Temperatur 30 °C, 6 l/s Luftstrom unter der Probe, 24 h Versuchsdauer). Dieser Test simuliert die Diffusion von flüssigem Kampfstoff durch das textile Schutzmaterial ohne Konvektion und simuliert dabei die flächige Auflage der Schutzbekleidung auf der Haut, wobei letztere durch die PE-Membran simuliert wird.
   In diesem Zusammenhang wird im Rahmen des Senfgasdiffusionstests für das erfindungsgemäße Material A ein kumulierter Durchbruch [µm/cm²] von 3,3 und für das erfindungsgemäße Schutzmaterial B ein kumulierter Durchbruch [µm/cm²] von etwa 3,5 erreicht, während für das Vergleichsmaterial C ein diesbezüglicher Wert von etwa 3,7 ermittelt wird.

Die Versuchsergebnisse zeigen, dass die Schutzfunktion der erfindungsgemäßen Schutzmaterialien A, B zu dem Vergleichsmaterial nochmals verbessert ist, was die hervorragende Wirksamkeit des erfindungsgemäßen Adsorptionsfiltermaterials bzw. Schutzmaterials in Bezug auf die Schutzfunktion gegenüber chemischen Gift- bzw. Kampfstoffen bei gleichzeitig geringem Flächengewicht belegt.

In weiteren Versuchen werden zudem die mechanischen Eigenschaften bzw. die Stabilitätseigenschaften der textilen Schutzmaterialien A bis C untersucht:
- In einer ersten Untersuchung werden die jeweiligen Schutzmaterialien einem Scheuertest (*"scrub test"*) gemäß DIN ISO 5981 unterzogen. Für das erfindungsgemäße textile Schutzmaterial A kann hierbei kein nennenswerter Abrieb insbesondere in Form von Aktivkohlepartikeln beobachtet werden. Für das erfindungsgemäße Schutzmaterial B kann ein geringfügiger Abrieb in Form von einzelnen Aktivkohlepartikeln festgestellt werden. Für das Vergleichsmaterial C kann ebenfalls ein Abrieb festgestellt werden, wobei es sich hierbei gleichermaßen maßgeblich um Aktivkohlepartikel handelt. Die diesbezüglich abgeriebene Menge ist dabei größer als diejenige der untersuchten erfindungsgemäßen Schutzmaterialien A und B.
- Schließlich werden die textilen Schutzmaterialien einem Waschtest gemäß DIN EN ISO 5077 unterzogen. Die erfindungsgemäßen Schutzmaterialien A und B weisen dabei eine hohe Beständigkeit auf, wobei für das erfindungsgemäße textile Schutzmaterial B im Vergleich zu dem erfindungsgemäßen Schutzmaterial A schlechtere Werte ermittelt werden, auch wenn die Waschbeständigkeit für Material B insgesamt als gut einzustufen ist. Demgegenüber weist das Schutzmaterial C eine geringfügigere Waschbeständigkeit auf, auch wenn Material C insgesamt noch eine zufriedenstellende bis gute Waschbeständigkeit aufweist.

Die erfindungsgemäßen Schutzmaterialien A und B weisen somit insgesamt eine hohe Stabilität bzw. Integrität auf, wie anhand des Abrieb- und Waschtests belegt, wobei diesbezüglich gegenüber dem Vergleichmaterial C eine weiterführende Verbesserung vorliegt.

Darüber hinaus weisen die erfindungsgemäßen Schutzmaterialien A und B eine hervorragende Luftdurchlässigkeit auf. Diesbezüglich kann für das erfindungsgemäße Schutzmaterial A eine Luftdurchlässigkeit von etwa 420 l · m⁻² · s⁻¹ bei einem Strömungswiderstand von 127 Pa ermittelt werden, während der entsprechende Wert für das erfindungsgemäße Material B bei etwa 400 l · m⁻² · s⁻¹ liegt.

Insgesamt zeigen die zuvor angeführten Untersuchungen die hervorragenden Eigenschaften der auf Basis der erfindungsgemäßen Konzeption bereitgestellten Schutzmaterialien.

### Bezugszeichenliste:

- 1: Textiles Schutzmaterial
- 2: Textiler Träger
- 3: Klebstoffschicht
- 4: Adsorptionsschicht
- 5: Adsorberpartikel
- 6: Abdeckschicht
- 6': Erste Abdeckschicht
- 6": Zweite bzw. weitere Abdeckschicht
- d₁: Dicke des textilen Schutzmaterials
- d₂: Dicke des textilen Trägers
- d₃: Dicke der Klebstoffschicht
- d₄: Dicke der Adsorptionsschicht

## Patentansprüche

1. Textiles Schutzmaterial (1) mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen, vorzugsweise textiles Adsorptionsfiltermaterial,
wobei das textile Schutzmaterial (1) umfasst:
(a) einen zweidimensionalen und/oder flächigen, luftdurchlässigen textilen Träger (2) in Form eines textilen Flächenmaterials;
(b) eine auf den textilen Träger (2) aufgebrachte Klebstoffschicht (3), wobei die Klebstoffschicht (3) eine luftdurchlässige und diskontinuierlich ausgebildete Schicht auf Basis eines getrockneten und ausgehärteten, gebrochenen Klebstoffpolymerschaums ist und wobei die Klebstoffschicht (3) ein Flächengewicht im Bereich von 5 g/m² bis 60 g/m² aufweist; und
(c) eine an der Klebstoffschicht (3) zum Haften gebrachte Adsorptionsschicht (4), wobei die Adsorptionsschicht (4) eine Vielzahl einzelner Adsorberpartikel (5) umfasst oder hieraus gebildet ist, wobei die Adsorberpartikel (5) in einer Menge im Bereich von 5 g/m² bis 150 g/m² eingesetzt sind.

2. Schutzmaterial nach Anspruch 1,
wobei der gebrochene Klebstoffpolymerschaum eine Vielzahl getrockneter und ausgehärteter, insbesondere vernetzter, zerstörter und/oder geplatzter und/oder kollabierter Schaumblasen aufweist; und/oder
wobei der gebrochene Klebstoffpolymerschaum, insbesondere die getrockneten und ausgehärteten, insbesondere vernetzten, zerstörten und/oder geplatzten und/oder kollabierten Schaumblasen des gebrochenen Klebstoffschaums, eine Vielzahl an zerstörten und/oder gebrochenen und/oder kollabierten Wandungen und/oder Stegen aus Klebstoffpolymer aufweist bzw. aufweisen; und/oder
wobei der gebrochene Klebstoffpolymerschaum einen Anteil an zerstörten und/oder geplatzten und/oder kollabierten Schaumblasen von mindestens 10 %, insbesondere mindestens 30 %, vorzugsweise mindestens 50 %, bevorzugt mindestens 70 %, besonders bevorzugt mindestens 90 %, ganz besonders bevorzugt mindestens 95 %, bezogen auf die Gesamtanzahl an Schaumblasen in dem gebrochenen Klebstoffpolymerschaum, aufweist; und/oder
wobei der gebrochene Klebstoffpolymerschaum nicht geschlossen ausgebildet ist und/oder wobei der gebrochene Klebstoffpolymerschaum eine Vielzahl von insbesondere sich in dem gebrochenen Klebstoffpolymerschaum erstreckenden Durchbrechungen, Poren, Kanäle und/oder Öffnungen und/oder eine Vielzahl von insbesondere die jeweiligen Außenseiten des gebrochenen Klebstoffpolymerschaums und/oder der Klebstoffschicht (3) verbindenden Durchbrechungen, Poren, Kanäle und/oder Öffnungen aufweist; und/oder
wobei der gebrochene Klebstoffpolymerschaum zusammenhängend und/oder kohärent ausgebildet ist; und/oder
wobei der gebrochene Klebstoffpolymerschaum zumindest im Wesentlichen vollflächig und/oder ganzseitig auf dem Träger (2) aufgebracht ist.

3. Schutzmaterial nach Anspruch 1 oder 2,
wobei die Klebstoffschicht (3) in einer Menge im Bereich von 10g/m² bis 50g/m², vorzugsweise im Bereich von 20 g/m² bis 40 g/m², bevorzugt im Bereich von 25 g/m² bis 35 g/m², auf den textilen Träger (2) aufgebracht ist und/oder vorliegt und/oder wobei die Klebstoffschicht (3) ein Flächengewicht im Bereich von 10g/m² bis 50g/m², vorzugsweise im Bereich von 20 g/m² bis 40 g/m², bevorzugt im Bereich von 25 g/m² bis 35 g/m², aufweist; und/oder
wobei die Klebstoffschicht (3) in einer zumindest im Wesentlichen gleich großen flächenbezogenen Menge wie die Adsorptionsschicht aufgetragen ist und/oder wobei die Klebstoffschicht (3) ein zumindest im Wesentlichen gleich großes Flächengewicht wie die Adsorptionsschicht (4) aufweist; und/oder
wobei die Klebstoffschicht (3) in einer geringeren flächenbezogenen Menge als die Adsorptionsschicht aufgetragen ist und/oder wobei die Klebstoffschicht (3) ein geringeres Flächengewicht als die Adsorptionsschicht (4) aufweist; und/oder
wobei die Klebstoffschicht (3) eine Dicke d₃ von höchstens 1 mm, insbesondere höchstens 0,5 mm, vorzugsweise höchstens 0,3 mm, bevorzugt höchstens 0,2 mm, aufweist und/oder wobei die Klebstoffschicht (3) eine Dicke d₃ im Bereich von 0,01 mm bis 1 mm, insbesondere im Bereich von 0,05 mm bis 0,75 mm, vorzugsweise im Bereich von 0,08 mm bis 0,5 mm, bevorzugt im Bereich von 0,1 mm bis 0,3 mm, aufweist; und/oder
wobei die Klebstoffschicht (3) eine Dichte im Bereich von 100 g/l bis 500 g/l, insbesondere im Bereich von 150 g/l bis 400 g/l, vorzugsweise im Bereich von 200 g/l bis 350 g/l, aufweist; und/oder
wobei die Klebstoffschicht (3) teilweise in den textilen Träger (2) eingedrungen vorliegt und/oder wobei die Klebstoffschicht (3) sich in den textilen Träger (2) hineinerstreckt; und/oder
wobei die Klebstoffschicht (3) sich über mindestens 5 %, insbesondere mindestens 10%, vorzugsweise mindestens 20%, bevorzugt mindestens 30%, besonders bevorzugt mindestens 40 %, ganz besonders bevorzugt mindestens 50 %, der Dicke d₂ des textilen Trägers (2) in den textilen Träger (2) hineinerstreckt und/oder wobei die Klebstoffschicht (3) sich über höchstens 95 %, insbesondere höchstens 90 %, vorzugsweise höchstens 80 %, bevorzugt höchstens 70 %, der Dicke d₂ des textilen Trägers (2) in den textilen Träger (2) hineinerstreckt; und/oder
wobei der gebrochene Klebstoffpolymerschaum erhältlich ist durch Trocknung und/oder Aushärtung, insbesondere Vernetzung, einer aufgeschäumten, vorzugsweise unter mechanischem Energieeintrag aufgeschäumten, wässrig oder organisch basierten, vorzugsweise wässrig basierten, Lösung und/oder Dispersion des Klebstoffpolymers, insbesondere einhergehend mit einer zumindest teilweisen Brechung des durch die aufgeschäumte Lösung und/oder Dispersion des Klebstoffpolymers bereitgestellten Schaums, insbesondere wobei die Trocknung und/oder Aushärtung, insbesondere Vernetzung, in Gegenwart mindestens eines Schaumbildners und gegebenenfalls mindestens eines Schaumstabilisators und gegebenenfalls mindestens eines Vernetzers und gegebenenfalls mindestens eines Emulgators und gegebenenfalls mindestens eines Verdickers durchgeführt ist.

4. Schutzmaterial nach Anspruch 3,
wobei die Lösung und/oder Dispersion des Klebstoffpolymers eine wässrig oder organisch basierte, vorzugsweise wässrig basierte, Ausgangslösung und/oder - dispersion des Klebstoffpolymers enthält, insbesondere in Mengen im Bereich von 50 Gewichtsteilen bis 150 Gewichtsteilen, insbesondere im Bereich von 70 Gewichtsteilen bis 130 Gewichtsteilen, vorzugsweise im Bereich von 90 Gewichtsteilen bis 110 Gewichtsteilen, bezogen auf die Lösung bzw. Dispersion des Klebstoffpolymers, und/oder wobei die Ausgangslösung und/oder -dispersion des Klebstoffpolymers einen Feststoffgehalt, insbesondere in Form des Klebstoffpolymers, im Bereich von 20 Gew.-% bis 80 Gew.-%, insbesondere im Bereich von 30 Gew.-% bis 70 Gew.-%, vorzugsweise im Bereich von 40 Gew.-% bis 60 Gew.-%, bezogen auf die Lösung und/oder Dispersion des Klebstoffpolymers, aufweist; und/oder
wobei die Lösung und/oder Dispersion des Klebstoffpolymers den Schaumbildner in Mengen im Bereich von 0,25 Gewichtsteilen bis 10 Gewichtsteilen, insbesondere im Bereich von 0,5 Gewichtsteilen bis 5 Gewichtsteilen, vorzugsweise im Bereich von 0,75 Gewichtsteilen bis 2 Gewichtsteilen, bezogen auf die Lösung bzw. Dispersion des Klebstoffpolymers, enthält; und/oder
wobei der Schaumstabilisator ein insbesondere anionisches Fettsäuresalz ist und/oder wobei die Lösung und/oder Dispersion des Klebstoffpolymers den Schaumstabilisator in Mengen im Bereich von 2 Gewichtsteilen bis 25 Gewichtsteilen, insbesondere im Bereich von 3 Gewichtsteilen bis 20 Gewichtsteilen, vorzugsweise im Bereich von 5 Gewichtsteilen bis 10 Gewichtsteilen, bezogen auf die Lösung bzw. Dispersion des Klebstoffpolymers, enthält; und/oder
wobei der Vernetzer ein insbesondere blockiertes Isocyanat, vorzugsweise ein insbesondere blockiertes aliphatisches Polyisocyanat, ist; und/oder
wobei die Lösung und/oder Dispersion des Klebstoffpolymers den Vernetzer in Mengen im Bereich von 0,5 Gewichtsteilen bis 15 Gewichtsteilen, insbesondere im Bereich von 1 Gewichtsteil bis 10 Gewichtsteilen, vorzugsweise im Bereich von 3 Gewichtsteilen bis 8 Gewichtsteilen, bezogen auf die Lösung bzw. Dispersion des Klebstoffpolymers, enthält; und/oder
wobei der Emulgator ein insbesondere nichtionischer Polyglykolether, vorzugsweise ein insbesondere nichtionischer Arylpolyglykolether, ist, und/oder wobei die Lösung und/oder Dispersion des Klebstoffpolymers den Emulgator in Mengen im Bereich von 0,25 Gewichtsteilen bis 10 Gewichtsteilen, insbesondere im Bereich von 0,5 Gewichtsteilen bis 5 Gewichtsteilen, vorzugsweise im Bereich von 1 Gewichtsteil bis 3 Gewichtsteilen, bezogen auf die Lösung bzw. Dispersion des Klebstoffpolymers, enthält; und/oder
wobei die Lösung und/oder Dispersion des Klebstoffpolymers den Verdicker in Mengen im Bereich von 0,05 Gewichtsteilen bis 5 Gewichtsteilen, insbesondere im Bereich von 0,1 Gewichtsteilen bis 3 Gewichtsteilen, vorzugsweise im Bereich von 0,2 Gewichtsteilen bis 1 Gewichtsteil, bezogen auf die Lösung bzw. Dispersion des Klebstoffpolymers, enthält.

5. Schutzmaterial nach einem der vorangehenden Ansprüche,
wobei die Adsorptionsschicht (4) diskontinuierlich ausgebildet ist und/oder wobei die Adsorptionsschicht (4) als ein Adsorptionsflächenfilter ausgebildet ist; und/oder wobei die Adsorberpartikel (5) der Adsorptionsschicht (4) ausgewählt sind aus der Gruppe von
(i) insbesondere partikulärer Aktivkohle und/oder Aktivkohlepartikeln, vorzugsweise in Form von Aktivkohleteilchen in Kornform ("Kornkohle") oder Kugelform ("Kugelkohle");
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) lonenaustauscherharzen, insbesondere polydispersen und/oder monodispersen Kationen- und/oder Anionenaustauschern, insbesondere vom Geltyp und/oder makroporösen Typ;
(vi) anorganischen Oxiden, insbesondere Siliciumdioxiden, Silicagelen und/oder Aluminiumoxiden;
(vii) porösen organischen Polymeren und/oder porösen organisch-anorganischen Hybridpolymeren und/oder metallorganischen Gerüstmaterialien, insbesondere MOFs (*Metall Organic Framework*), COFs (*Covalent Organic Framework*), ZIFs (*Zeolithe Imidazolate Framework*), POMs (*Polymer Organic Material*) und/oder OFCs;
(viii) mineralischen Granulaten;
(ix) Klathraten; sowie
(x) deren Mischungen und/oder Kombinationen; und/oder
wobei die Adsorberpartikel (5) der Adsorptionsschicht (4) aus insbesondere partikulärer Aktivkohle und/oder Aktivkohlepartikel, vorzugsweise in Form von Aktivkohleteilchen in Kornform ("Kornkohle") oder Kugelform ("Kugelkohle"), gebildet sind und/oder hieraus bestehen; und/oder
wobei der Durchmesser der Adsorberpartikel (5), insbesondere der Aktivkohlepartikel, 0,005 mm bis 2,5 mm, vorzugsweise 0,01 mm bis 2 mm, bevorzugt 0,015 mm bis 0,5 mm, besonders bevorzugt 0,02 mm bis 0,3 mm, ganz besonders bevorzugt 0,03 mm bis 0,15 mm, beträgt und/oder wobei der mittlere Durchmesser, insbesondere der mittlere Durchmesser D₅₀, der Adsorberpartikel (5), insbesondere der Aktivkohlepartikel, 0,01 mm bis 2 mm, insbesondere 0,02 mm bis 1 mm, bevorzugt 0,03 mm bis 0,5 mm, besonders bevorzugt 0,04 mm bis 0,4 mm, ganz besonders bevorzugt 0,04 mm bis 0,2 mm, beträgt; und/oder
wobei die Adsorberpartikel (5), insbesondere die Aktivkohlepartikel, in einer Menge im Bereich von 10 g/m² bis 90 g/m², vorzugsweise 15 g/m² bis 50 g/m², bevorzugt 20 g/m² bis 40 g/m², eingesetzt sind und/oder wobei die Adsorptionsschicht (4) die Adsorberpartikel (5), insbesondere die Aktivkohlepartikel, in einer Menge im Bereich von 10 g/m² bis 90 g/m², vorzugsweise 15 g/m² bis 50 g/m², bevorzugt 20 g/m² bis 40 g/m², aufweist; und/oder
wobei die Absorptionsschicht (4) sich teilweise in die Klebstoffschicht (3) hineinerstreckt; und/oder
wobei die Absorptionsschicht (4) sich über mindestens 10 %, insbesondere mindestens 15 %, vorzugsweise mindestens 20 %, der Dicke d₃ der Klebstoffschicht (3) in die Klebstoffschicht (3) hineinerstreckt und/oder wobei die Absorptionsschicht (4) sich über höchstens 60 %, insbesondere höchstens 50 %, vorzugsweise höchstens 40 %, der Dicke d₃ der Klebstoffschicht (3) in die Klebstoffschicht (3) hineinerstreckt.

6. Schutzmaterial nach einem der vorangehenden Ansprüche,
wobei der textile Träger (2) als ein textiles Flächengebilde, vorzugsweise ein luftdurchlässiges Textilmaterial, bevorzugt ein Gewebe, Gewirke, Gestricke, Gelege, Vlies oder Textilverbundstoff, ausgebildet ist und/oder wobei der textile Träger (2) ein Flächengewicht im Bereich von 10 g/m² bis 400 g/m², insbesondere im Bereich von 20 g/m² bis 200 g/m², bevorzugt im Bereich von 30 g/m² bis 150 g/m², aufweist.

7. Schutzmaterial nach einem der vorangehenden Ansprüche,
wobei das Schutzmaterial mindestens eine Abdeckschicht (6) aufweist, insbesondere wobei die Abdeckschicht (6) auf der dem textilen Träger (2) und/oder der Klebstoffschicht (3) abgewandten Seite der Adsorptionsschicht (4) angeordnet ist und/oder wobei die Abdeckschicht (6) an der Adsorptionsschicht (4) und/oder der Klebstoffschicht (3), insbesondere an der Adsorptionsschicht (4), befestigt und/oder zum Haften gebracht ist,
insbesondere wobei die Abdeckschicht (6) ein textiles Flächengebilde, vorzugsweise ein luftdurchlässiges Textilmaterial, ist, insbesondere wobei das textile Flächengebilde ein Gewebe, Gewirke, Gestricke, Gelege, Vlies oder Textilverbundstoff, insbesondere ein Vlies, ist, und/oder wobei die Abdeckschicht (6) ein Flächengewicht im Bereich von 1 g/m² bis 200 g/m², insbesondere im Bereich von 5 g/m² bis 100 g/m², vorzugsweise im Bereich von 10 g/m² bis 50 g/m², aufweist und/oder wobei die Abdeckschicht (6) ein Flächengewicht von höchstens 200 g/m², insbesondere höchstens 100 g/m², vorzugsweise höchstens 50 g/m², aufweist; und/oder
insbesondere wobei die Abdeckschicht (6) als Partikel- und/oder Aerosolfilterschicht ausgebildet ist, insbesondere wobei die Abdeckschicht (6) als ein HEPA-Filter (High Efficiency Penetration oder Particulate Air) oder ULPA-Filter (Ultra Low Penetration oder Particulate Air) ausgebildet ist.

8. Schutzmaterial nach einem der vorangehenden Ansprüche,
wobei das Schutzmaterial (1) ein Gesamtflächengewicht im Bereich von 80 g/m² bis 500 g/m², insbesondere im Bereich von 90 g/m² bis 400 g/m², vorzugsweise im Bereich von 100 g/m² bis 250 g/m², aufweist und/oder wobei das Schutzmaterial (1) eine Gas- bzw. Luftdurchlässigkeit von mindestens 50 l·m⁻²·s⁻¹, insbesondere mindestens 100 l·m⁻²·s⁻¹, vorzugsweise mindestens 150 l·m⁻²·s⁻¹, bevorzugt mindestens 200 l·m⁻²·s⁻¹, besonders bevorzugt mindestens 250 l·m⁻²·s⁻¹, ganz besonders bevorzugt mindestens 350 l·m⁻²·s⁻¹, und/oder bis zu 10.000 l·m⁻²·s⁻¹ bei einem Strömungswiderstand von 127 Pa aufweist und/oder wobei das Schutzmaterial (1) eine Dicke d₁ im Bereich von 0,1 bis 15 mm, insbesondere im Bereich von 0,2 bis 10 mm, vorzugsweise im Bereich von 0,3 bis 5,0 mm, bevorzugt im Bereich von 0,4 bis 3,0 mm, aufweist.

9. Schutzmaterial nach einem der vorangehenden Ansprüche,
wobei das Schutzmaterial (1) eine Barrierewirkung gegenüber Schad- und/oder Giftsoffen, insbesondere chemischen Kampfstoffen, insbesondere Bis[2-chlorethyl]sulfid, bestimmt nach Methode 2.2 der CRDC-SP-84010, von höchstens 4 µg/cm² pro 24 h, insbesondere höchstens 3,5 µg/cm² pro 24 h, vorzugsweise höchstens 3,0 µg/cm² pro 24 h, bevorzugt höchstens 2,5 µg/cm² pro 24 h, besonders bevorzugt höchstens 2,25 µg/cm² pro 24 h, ganz besonders bevorzugt höchstens 2 µg/cm² pro 24 h, aufweist.

10. Verfahren zur Herstellung eines textilen Schutzmaterials mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen, vorzugsweise zur Herstellung eines textilen Adsorptionsfiltermaterials, insbesondere wie in einem der vorangehenden Ansprüche definiert, wobei das Verfahren die nachfolgenden Schritte in der angegebenen Reihenfolge umfasst:
(a) Bereitstellung eines zweidimensionalen und/oder flächigen, luftdurchlässigen textilen Trägers in Form eines textilen Flächenmaterials;
(b) Aufbringen einer Klebstoffschicht (3) auf den textilen Träger, wobei die Klebstoffschicht (3) in Form einer aufgeschäumten, vorzugsweise unter mechanischem Energieeintrag aufgeschäumten, wässrig oder organisch basierten, vorzugsweise wässrig basierten, Lösung und/oder Dispersion eines Klebstoffpolymers aufgebracht wird und wobei die aufgeschäumte Lösung und/oder Dispersion des Klebstoffpolymers in einer Menge im Bereich von 10 g/m² bis 150 g/m² auf den textilen Träger aufgebracht wird;
(c) Aufbringen und/oder zum Haften bringen einer Vielzahl einzelner Adsorberpartikel auf die in Schritt (b) erhaltene Klebstoffschicht (3), insbesondere so dass eine auf der Klebstoffschicht (3) aufgebrachte Adsorptionsschicht (4) resultiert, wobei die Adsorberpartikel (5) in einer Menge im Bereich von 5 g/m² bis 150 g/m² eingesetzt werden;
(d) Trocknung und/oder Aushärtung der Klebstoffschicht (3) in Form der aufgeschäumten Lösung und/oder Dispersion des Klebstoffpolymers, einhergehend mit einer Brechung des durch die aufgeschäumte Lösung und/oder Dispersion des Klebstoffpolymers bereitgestellten Schaums, so dass die Klebstoffschicht (3) als getrockneter und ausgehärteter, insbesondere vernetzter, gebrochener Klebstoffpolymerschaum erhalten wird und/oder vorliegt.

11. Verfahren nach Anspruch 10,
wobei in Verfahrensschritt (a) der textile Träger in Form eines textilen Flächengebildes, vorzugsweise in Form eines luftdurchlässigen Textilmaterials, bevorzugt in Form eines Gewebes, Gewirkes, Gestrickes, Geleges, Vlieses oder Textilverbundstoffs, eingesetzt wird; und/oder
wobei das Aufschäumen der in Verfahrensschritt (b) eingesetzten aufgeschäumten Lösung und/oder Dispersion des Klebstoffpolymers durch Gas- und/oder Lufteintrag in die Lösung und/oder Dispersion des Klebstoffpolymers erfolgt, insbesondere wobei der Gas- und/oder Lufteintrag durch Eindüsen, Einrühren, Vibrationseintrag, Schütteleintrag, Einblasen von Gas und/oder Luft und/oder durch Gas- und/oder Lufteintrag mittels Scherkrafteintrag in die Lösung und/oder Dispersion des Klebstoffpolymers erfolgt; und/oder
wobei die Lösung und/oder Dispersion des Klebstoffpolymers mindestens einen Schaumbildner und gegebenenfalls mindestens einen Schaumstabilisator und gegebenenfalls mindestens einen Vernetzer und gegebenenfalls mindestens einen Emulgator und gegebenenfalls mindestens einen Verdicker enthält; und/oder
wobei in Verfahrensschritt (b) das Aufbringen der Klebstoffschicht (3) auf den textilen Träger mittels Aufrakeln durchgeführt wird; und/oder
wobei in Verfahrensschritt (b) die aufgeschäumte Lösung und/oder Dispersion des Klebstoffpolymers in einer Menge im Bereich von 20 g/m² bis 100 g/m², vorzugsweise im Bereich von 40 g/m² bis 80 g/m², auf den textilen Träger aufgebracht wird; und/oder wobei in Verfahrensschritt (b) die aufgeschäumte Lösung und/oder Dispersion des Klebstoffpolymers in einer Dicke im Bereich von 0,01 mm bis 2 mm, insbesondere im Bereich von 0,05 mm bis 1,5 mm, vorzugsweise im Bereich von 0,1 mm bis 0,75 mm, bevorzugt im Bereich von 0,15 mm bis 0,5 mm, auf den textilen Träger aufgebracht wird.

12. Verfahren nach Anspruch 10 oder 11,
wobei in Verfahrensschritt (c) das Aufbringen und/oder zum Haften bringen der Adsorberpartikel mittels Aufstreuen und/oder Aufrieseln und/oder Auflegen der Adsorberpartikel auf die Klebstoffschicht (3) durchgeführt wird, gegebenenfalls unter und/oder mit nachfolgendem Andrücken und/oder Aufdrücken der Adsorberpartikel auf die Klebstoffschicht (3); und/oder
wobei in Verfahrensschritt (c) die Adsorberpartikel derart auf die Klebstoffschicht (3) aufgebracht und/oder zum Haften gebracht werden, dass eine zumindest im Wesentlichen vollflächige Belegung der Klebstoffschicht (3) mit den Adsorberpartikeln resultiert und/oder dass mindestens 80 %, insbesondere mindestens 90 %, vorzugsweise mindestens 95 %, bevorzugt mindestens 99 %, bevorzugt mindestens 99,5 %, der Fläche der Klebstoffschicht (3) mit den Adsorberpartikeln belegt wird; und/oder
wobei in Verfahrensschritt (d) die Trocknung und/oder Aushärtung bei einer Temperatur im Bereich von 30 °C bis 250 °C, insbesondere 50 °C bis 200 °C, vorzugsweise 70 °C bis 180 °C, bevorzugt 90 °C bis 160 °C, durchgeführt wird und/oder wobei in Verfahrensschritt (d) die Trocknung und/oder Aushärtung für eine Zeitdauer im Bereich von 0,1 min bis 15 min, insbesondere 0,5 min bis 10 min, vorzugsweise 1 min bis 5 min, durchgeführt wird; und/oder
wobei in Verfahrensschritt (d) die Trocknung und die Aushärtung, insbesondere Vernetzung, aufeinander abfolgend und/oder als separate Schritte durchgeführt werden, insbesondere wobei die Aushärtung nach Durchführung der Trocknung durchgeführt wird; und/oder
wobei in Verfahrensschritt (d) die Klebstoffschicht (3) in Form einer luftdurchlässig und diskontinuierlich ausgebildeten Schicht auf Basis des getrockneten und ausgehärteten, gebrochenen Klebstoffpolymerschaums erhalten wird.

13. Verwendung eines textilen Schutzmaterials, wie in einem der Ansprüche 1 bis 9 definiert,
zur Herstellung von Schutzausrüstung und/oder Schutzgegenständen aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz und/oder mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen; und/oder
zur Herstellung von Filtern und Filtermaterialien aller Art, insbesondere zur Entfernung von Schad-, Geruchs- und Giftstoffen aller Art, vorzugsweise zur Entfernung von radioaktiven Schad- und/oder Giftstoffen und/oder von biologischen Schad- und/oder Giftstoffen und/oder von chemischen Schad- und/oder Giftstoffen, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

14. Verwendung eines textilen Schutzmaterials, wie in einem der Ansprüche 1 bis 9 definiert, als Schutzausrüstungen und/oder Schutzgegenstände aller Art, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzausrüstungen und/oder Schutzgegenstände für den ABC-Einsatz und/oder mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen.

15. Verwendung eines textilen Schutzmaterials, wie in einem der Ansprüche 1 bis 9 definiert, als Filter und Filtermaterialien aller Art, insbesondere zur Entfernung von Schad-, Geruchs- und Giftstoffen aller Art, vorzugsweise zur Entfernung von radioaktiven Schad- und/oder Giftstoffen und/oder von biologischen Schad- und/oder Giftstoffen und/oder von chemischen Schad- und/oder Giftstoffen, insbesondere aus Luft- und/oder Gasströmen, wie Schutzmaskenfilter, Geruchsfilter, Flächenfilter, Luftfilter, insbesondere Filter für die Raumluftreinigung, adsorptionsfähige Trägerstrukturen und Filter für den medizinischen Bereich.

## Claims

1. A textile protective material (1) having a protective function with respect to radioactive harmful and/or toxic substances and/or with respect to biological harmful and/or toxic substances and/or with respect to chemical harmful and/or toxic substances, preferably a textile adsorption filter material,
wherein the textile protective material (1) comprises:
(a) a two-dimensional and/or sheet-like, air-permeable textile carrier (2) in the form of a textile planar material;
(b) an adhesive layer (3) applied to the textile carrier (2), wherein the adhesive layer (3) is an air-permeable and discontinuous layer based on a dried and cured, broken adhesive polymer foam, and wherein the adhesive layer (3) has a weight per unit area in the range of from 5 g/m² to 60 g/m²; and
(c) an adsorption layer (4) adhered to the adhesive layer (3), wherein the adsorption layer (4) comprises or is formed from a plurality of individual adsorber particles (5), wherein the adsorber particles (5) are used in an amount in the range of from 5 g/m² to 150 g/m².

2. The protective material according to claim 1,
wherein the broken adhesive polymer foam has a plurality of dried and cured, in particular crosslinked, destroyed and/or burst and/or collapsed foam bubbles; and/or
wherein the broken adhesive polymer foam, in particular the dried and cured, in particular crosslinked, destroyed and/or burst and/or collapsed broken adhesive foam bubbles of the broken adhesive foam has/have a plurality of destroyed and/or broken and/or collapsed walls and/or webs of adhesive polymer; and/or
wherein the broken adhesive polymer foam has a proportion of destroyed and/or burst and/or collapsed foam bubbles of at least 10%, in particular at least 30%, preferably at least 50%, more preferably at least 70%, particularly preferably at least 90% and very particularly preferably at least 95%, in relation to the total number of foam bubbles in the broken adhesive polymer foam; and/or
wherein the broken adhesive polymer foam is not closed and/or wherein the broken adhesive polymer foam has a plurality of apertures, pores, channels and/or openings in particular extending in the broken adhesive polymer foam and/or a plurality of apertures, pores, channels and/or openings in particular connecting the respective outer surfaces of the broken adhesive polymer foam and/or of the adhesive layer (3); and/or
wherein the broken adhesive polymer foam is contiguous and/or coherent; and/or
wherein the broken adhesive polymer foam is applied to the carrier (2) substantially over the entire area and/or the whole side.

3. The protective material according to claim 1 or 2,
wherein the adhesive layer (3) is applied and/or is present on the textile carrier (2) in an amount in the range of from 10 g/m² to 50 g/m², preferably in the range of from 20 g/m² to 40 g/m², more preferably in the range of from 25 g/m² to 35 g/m², and/or wherein the adhesive layer (3) has a weight per unit area in the range of from 10 g/m² to 50 g/m², preferably in the range of from 20 g/m² to 40 g/m², more preferably in the range of from 25 g/m² to 35 g/m²; and/or
wherein the adhesive layer (3) is applied in an at least substantially identical amount per unit area as the adsorption layer, and/or wherein the adhesive layer (3) has an at least substantially identical weight per unit area as the adsorption layer (4); and/or
wherein the adhesive layer (3) is applied in a smaller amount per unit area than the adsorption layer, and/or wherein the adhesive layer (3) has a lower weight per unit area than the adsorption layer (4); and/or
wherein the adhesive layer (3) has a thickness d₃ of at most 1 mm, in particular at most 0.5 mm, preferably at most 0.3 mm, more preferably at most 0.2 mm, and/or wherein the adhesive layer (3) has a thickness d₃ in the range of from 0.01 mm to 1 mm, in particular in the range of from 0.05 mm to 0.75 mm, preferably in the range of from 0.08 mm to 0.5 mm, more preferably in the range of from 0.1 mm to 0.3 mm; and/or
wherein the adhesive layer (3) has a density in the range of from 100 g/l to 500 g/l, in particular in the range of from 150 g/l to 400 g/l, preferably in the range of from 200 g/l to 350 g/l; and/or
wherein the adhesive layer (3) has partly penetrated into the textile carrier (2), and/or wherein the adhesive layer (3) extends into the textile carrier (2); and/or
wherein the adhesive layer (3) extends into the textile carrier (2) across at least 5%, in particular at least 10%, preferably at least 20%, more preferably at least 30%, particularly preferably at least 40% and very particularly preferably at least 50% of the thickness d₂ of the textile carrier (2), and/or wherein the adhesive layer (3) extends into the textile carrier (2) across at most 95%, in particular at most 90%, preferably at most 80% and more preferably at most 70% of the thickness d₂ of the textile carrier (2); and/or
wherein the broken adhesive polymer foam is obtainable by drying and/or curing, in particular crosslinking, a foamed, preferably mechanically foamed, aqueous or organic-based, preferably aqueous-based, solution and/or dispersion of the adhesive polymer, in particular in conjunction with an at least partial breaking of the foam provided by the foamed solution and/or dispersion of the adhesive polymer, in particular wherein the drying and/or curing, in particular crosslinking, has been carried out in the presence of at least one foam-former and optionally at least one foam stabiliser and optionally at least one crosslinker and optionally at least one emulsifier and optionally at least one thickener.

4. The protective material according to claim 3,
wherein the solution and/or dispersion of the adhesive polymer contains an aqueous- or organic-based, preferably aqueous-based, starting solution and/or dispersion of the adhesive polymer, in particular in amounts in the range of from 50 parts by weight to 150 parts by weight, in particular in the range of from 70 parts by weight to 130 parts by weight, preferably in the range of from 90 parts by weight to 110 parts by weight, in relation to the solution and/or dispersion of the adhesive polymer, and/or wherein the starting solution and/or dispersion of the adhesive polymer has a solids content, in particular in the form of the adhesive polymer, in the range of from 20 % by weight to 80 % by weight, in particular in the range of from 30 % by weight to 70 % by weight, preferably in the range of from 40 % by weight to 60 % by weight, in relation to the solution and/or dispersion of the adhesive polymer; and/or
wherein the solution and/or dispersion of the adhesive polymer contains the foam-former in amounts in the range of from 0.25 parts by weight to 10 parts by weight, in particular in the range of from 0.5 parts by weight to 5 parts by weight, preferably in the range of from 0.75 parts by weight to 2 parts by weight, in relation to the solution and/or dispersion of the adhesive polymer; and/or
wherein the foam stabiliser is an in particular anionic fatty acid salt, and/or wherein the solution and/or dispersion of the adhesive polymer contains the foam stabiliser in amounts in the range of from 2 parts by weight to 25 parts by weight, in particular in the range of from 3 parts by weight to 20 parts by weight, preferably in the range of from 5 parts by weight to 10 parts by weight, in relation to the solution and/or dispersion of the adhesive polymer; and/or
wherein the crosslinker is an in particular blocked isocyanate, preferably an in particular blocked aliphatic polyisocyanate; and/or
wherein the solution and/or dispersion of the adhesive polymer contains the crosslinker in amounts in the range of from 0.5 parts by weight to 15 parts by weight, in particular in the range of from 1 part by weight to 10 parts by weight, preferably in the range of from 3 parts by weight to 8 parts by weight, in relation to the solution and/or dispersion of the adhesive polymer; and/or
wherein the emulsifier is an in particular nonionic polyglycol ether, preferably an in particular nonionic aryl polyglycol ether, and/or wherein the solution and/or dispersion of the adhesive polymer contains the emulsifier in amounts in the range of from 0.25 parts by weight to 10 parts by weight, in particular in the range of from 0.5 parts by weight to 5 parts by weight, preferably in the range of from 1 part by weight to 3 parts by weight, in relation to the solution and/or dispersion of the adhesive polymer; and/or
wherein the solution and/or dispersion of the adhesive polymer contains the thickener in amounts in the range of from 0.05 parts by weight to 5 parts by weight, in particular in the range of from 0.1 parts by weight to 3 parts by weight, preferably in the range of from 0.2 parts by weight to 1 part by weight, in relation to the solution and/ dispersion of the adhesive polymer.

5. The protective material according to any one of the preceding claims,
wherein the adsorption layer (4) is discontinuous, and/or wherein the adsorption layer (4) is configured as an adsorptive sheet filter; and/or
wherein the adsorber particles (5) of the adsorption layer (4) are selected from the group of
(i) in particular particulate activated carbon and/or activated carbon particles, preferably in the form of activated carbon particles in granule form ("granulocarbon") or sphere form ("spherocarbon");
(ii) zeolites, in particular natural and/or synthetic zeolites;
(iii) molecular sieves, in particular zeolitic molecular sieves, synthetic molecular sieves and/or in particular synthetic molecular sieves based on carbon, oxides and/or glasses;
(iv) metal oxide and/or metal particles;
(v) ion exchanger resins, in particular polydisperse and/or monodisperse cation and/or anion exchangers, in particular of the gel type and/or macroporous type;
(vi) inorganic oxides, in particular silicon dioxides, silica gels and/or aluminium oxides;
(vii) porous organic polymers and/or porous organic-inorganic hybrid polymers and/or organometallic framework materials, in particular MOFs (*Metall Organic Framework*), COFs (*Covalent Organic Framework*), ZIFs (*Zeolithe Imidazolate Framework*), POMs (*Polymer Organic Material*) and/or OFCs;
(viii) mineral granules;
(ix) clathrates; and also
(x) mixtures and/or combinations thereof; and/or
wherein the adsorber particles (5) of the adsorption layer (4) are formed and/or consist of in particular particulate activated carbon and/or activated carbon particles, preferably in the form of activated carbon particles in granular form ("granulocarbon") or spherical form ("spherocarbon"); and/or
wherein the diameter of the adsorber particles (5), in particular of the activated carbon particles, is in the range of from 0.005 mm to 2.5 mm, preferably 0.01 mm to 2 mm, more preferably 0.015 mm to 0.5 mm, particularly preferably 0.02 mm to 0.3 mm, very particularly preferably 0.03 mm to 0.15 mm, and/or wherein the average diameter, in particular the average diameter D₅₀, of the adsorber particles (5), in particular of the activated carbon particles, is in the range of from 0.01 mm to 2 mm, in particular 0.02 mm to 1 mm, more preferably 0.03 mm to 0.5 mm, particularly preferably 0.04 mm to 0.4 mm and very particularly preferably 0.04 mm to 0.2 mm; and/or
wherein the adsorber particles (5), in particular the activated carbon particles, are used in an amount in the range of from 10 g/m² to 90 g/m², preferably from 15 g/m² to 50 g/m², more preferably from 20 g/m² to 40 g/m², and/or wherein the adsorption layer (4) includes the adsorber particles (5), in particular the activated carbon particles, in an amount in the range of from 10 g/m² to 90 g/m², preferably from 15 g/m² to 50 g/m², more preferably from 20 g/m² to 40 g/m²; and/or
wherein the adsorption layer (4) extends partly into the adhesive layer (3); and/or wherein the adsorption layer (4) extends into the adhesive layer (3) across at least 10%, in particular at least 15%, preferably at least 20% of the thickness d₃ of the adhesive layer (3), and/or wherein the adsorption layer (4) extends into the adhesive layer (3) across at most 60%, in particular at most 50%, preferably at most 40% of the thickness d₃ of the adhesive layer (3).

6. The protective material according to any one of the preceding claims,
wherein the textile carrier (2) is configured as a textile sheet material, preferably an air-permeable textile material, preferably a woven, knitted, crocheted, laid, nonwoven or composite fabric, and/or wherein the textile carrier (2) has a weight per unit area in the range of from 10 g/m² to 400 g/m², in particular in the range of from 20 g/m² to 200 g/m², preferably in the range of from 30 g/m² to 150 g/m².

7. The protective material according to any one of the preceding claims,
wherein the protective material has at least one covering layer (6), in particular wherein the covering layer (6) is disposed on the side of the adsorption layer (4) which faces away from the textile carrier (2) and/or the adhesive layer (3), and/or wherein the covering layer (6) is secured and/or adhered to the adsorption layer (4) and/or the adhesive layer (3), in particular to the adsorption layer (4),
in particular wherein the covering layer (6) is a textile sheet material, preferably an air-permeable textile material, in particular wherein the textile sheet material is a woven, knitted, crocheted, laid, nonwoven or composite fabric, in particular a nonwoven fabric, and/or wherein the covering layer (6) has a weight per unit area in the range of from 1 g/m² to 200 g/m², in particular in the range of from 5 g/m² to 100 g/m², preferably in the range of from 10 g/m² to 50 g/m², and/or wherein the covering layer (6) has a weight per unit area of at most 200 g/m², in particular at most 100 g/m², preferably at most 50 g/m²; and/or
in particular wherein the covering layer (6) is designed as a particle and/or aerosol filtering layer, in particular wherein the covering layer (6) is designed as a high-efficiency penetration or particulate air (HEPA) filter or as an ultra-low penetration or particulate air (ULPA) filter.

8. The protective material according to any one of the preceding claims,
wherein the protective material (1) has a total weight per unit area in the range of from 80 g/m² to 500 g/m², in particular in the range of from 90 g/m² to 400 g/m², preferably in the range of from 100 g/m² to 250 g/m², and/or wherein the protective material (1) has a gas or air permeability of at least 50 l·m⁻²·s⁻¹, in particular at least 100 l·m⁻²·s⁻¹, preferably at least 150 l·m⁻²·s⁻¹, more preferably at least 200 l·m⁻²·s⁻¹, particularly preferably at least 250 l·m⁻²·s⁻¹ and very particularly preferably at least 350 l·m⁻²·s⁻¹, and/or up to 10,000 l·m⁻²·s⁻¹ at a flow resistance of 127 Pa, and/or wherein the protective material (1) has a thickness d₁ in the range of from 0.1 to 15 mm, in particular in the range of from 0.2 to 10 mm, preferably in the range of from 0.3 to 5.0 mm, more preferably in the range of from 0.4 to 3.0 mm.

9. The protective material according to any one of the preceding claims,
wherein the protective material (1) has a barrier effect with respect to harmful and/or toxic substances, in particular chemical warfare agents, in particular bis[2-chloroethyl] sulfide, as determined by method 2.2 of CRDC-SP-84010, of at most 4 µg/cm² per 24 h, in particular at most 3.5 µg/cm² per 24 h, preferably at most 3.0 µg/cm² per 24 h, more preferably at most 2.5 µg/cm² per 24 h, particularly preferably at most 2.25 µg/cm² per 24 h, very particularly preferably at most 2 µg/cm² per 24 h.

10. A method for producing a textile protective material having a protective function with respect to radioactive harmful and/or toxic substances and/or with respect to biological harmful and/or toxic substances and/or with respect to chemical harmful and/or toxic substances, preferably for producing a textile adsorption filter material, in particular as defined in any one of the preceding claims, wherein the method comprises the following steps in the stated order:
(a) providing a two-dimensional and/or sheet-like, air-permeable textile carrier in the form of a textile sheet-like material;
(b) applying an adhesive layer (3) to the textile carrier, wherein the adhesive layer (3) is applied in the form of a foamed, preferably mechanically foamed, aqueous- or organic-based, preferably aqueous-based, solution and/or dispersion of an adhesive polymer, and wherein the foamed solution and/or dispersion of the adhesive polymer is applied to the textile carrier in an amount in the range of from 10 g/m² to 150 g/m²;
(c) applying and/or adhering a plurality of individual adsorber particles on the adhesive layer (3) obtained in step (b), in particular such that the result is an adsorption layer (4) applied on the adhesive layer (3), wherein the adsorber particles (5) are used in an amount in the range of from 5 g/m² to 150 g/m²;
(d) drying and/or curing the adhesive layer (3) in the form of the foamed solution and/or dispersion of the adhesive polymer, in conjunction with some breaking of the foam provided by the foamed solution and/or dispersion of the adhesive polymer so that the adhesive layer (3) is obtained and/or present as dried and cured, in particular crosslinked, broken adhesive polymer foam.

11. The method according to claim 10,
wherein in method step (a) the textile carrier is used in the form of a textile sheet material, preferably in the form of an air-permeable textile material, more preferably in the form of a woven, knitted, crocheted, laid, nonwoven or composite fabric; and/or
wherein the foamed adhesive polymer solution and/or dispersion used in method step (b) is foamed by introduction of gas and/or air into the solution and/or dispersion of the adhesive polymer, in particular wherein the gas and/or air introduction is effected by gas and/or air being introduced into the solution and/or dispersion of the adhesive polymer by injection, stirring, vibration, shaking, blowing and/or shear force; and/or
wherein the solution and/or dispersion of the adhesive polymer contains at least one foam-former and optionally at least one foam stabiliser and optionally at least one crosslinker and optionally at least one emulsifier and optionally at least one thickener; and/or
wherein in method step (b) the adhesive layer (3) is applied to the textile carrier by knife-coating; and/or
wherein in method step (b) the foamed solution and/or dispersion of the adhesive polymer is applied to the textile carrier in an amount in the range of from 20 g/m² to 100 g/m², preferably from 40 g/m² to 80 g/m².
wherein in method step (b) the foamed solution and/or dispersion of the adhesive polymer is applied to the textile carrier in a thickness in the range of from 0.01 mm to 2 mm, in particular in the range of from 0.05 mm to 1.5 mm, preferably in the range of from 0.1 mm to 0.75 mm, more preferably in the range of from 0.15 mm to 0.5 mm.

12. The method according to claim 10 or 11,
wherein in method step (c) the adsorber particles are applied and/or adhered by means of sprinkling and/or trickling and/or laying the adsorber particles on the adhesive layer (3), optionally by and/or with subsequent pressing of the adsorber particles against and/or onto the adhesive layer (3); and/or
wherein the adsorber particles are applied and/or adhered to the adhesive layer (3) in method step (c) such that an at least substantially full-area covering of the adhesive layer (3) with the adsorber particles results, and/or such that at least 80%, in particular at least 90%, preferably at least 95%, more preferably at least 99%, more preferably at least 99.5% of the area of the adhesive layer (3) becomes covered by the adsorber particles; and/or
wherein in method step (d) the drying and/or curing are/is performed at a temperature in the range of from 30°C to 250°C, in particular 50°C to 200°C, preferably 70°C to 180°C, preferably 90°C to 160°C, and/or wherein in method step (d) the drying and/or curing are/is performed for a period in the range of from 0.1 min to 15 min, in particular 0.5 min to 10 min, preferably 1 min to 5 min; and/or
wherein in method step (d) the drying and curing, in particular crosslinking, are performed in succession and/or as separate steps, in particular wherein the curing is performed after the drying is performed; and/or
wherein in method step (d) the adhesive layer (3) is obtained in the form of an air-permeable and/or discontinuous layer based on the dried and cured, broken adhesive polymer foam.

13. Use of a textile protective material, as defined in any one of claims 1 to 9,
in the manufacture of protective equipment and/or protective articles of any kind, in particular protective clothing, in particular for the civilian or military sector, such as protective suits, protective gloves, protective footwear, protective socks, head protective clothing and the like, and of protective coverings of any kind, preferably any aforementioned protective materials for CBRN usage and/or having a protective function with respect to radioactive harmful and/or toxic substances and/or with respect to biological harmful and/or toxic substances and/or with respect to chemical harmful and/or toxic substances; and/or
in the manufacture of filters and filtering materials of any kind, in particular for removal of harmful, odorous and toxic substances of any kind, preferably for removal of radioactive harmful and/or toxic substances and/or of biological harmful and/or toxic substances and/or of chemical harmful and/or toxic substances, in particular from air and/or gas streams, such as CBRN respirator filters, odour filters, sheet filters, air filters, in particular filters for indoor air cleaning, adsorption-capable carrier structures and filters for the medical sector.

14. Use of a textile protective material, as defined in any one of claims 1 to 9, as protective equipment and/or protective articles of any kind, in particular protective apparel, in particular for the civilian or military sector, such as protective suits, protective gloves, protective footwear, protective socks, head protective clothing and the like, and of protective coverings, preferably any aforementioned protective equipment and/or protective articles for CBRN usage and/or having a protective function with respect to radioactive harmful and/or toxic substances and/or with respect to biological harmful and/or toxic substances and/or with respect to chemical harmful and/or toxic substances.

15. Use of a textile protective material, as defined in any one of claims 1 to 9, as filters and filtering materials of any kind, in particular for removal of harmful, odorous and toxic substances of any kind, preferably for removal of radioactive harmful and/or toxic substances and/or of biological harmful and/or toxic substances and/or of chemical harmful and/or toxic substances, in particular from air and/or gas streams, such as respirator filters, odour filters, sheet filters, air filters, in particular filters for indoor air cleaning, adsorption-capable carrier structures and filters for the medical sector.

## Revendications

1. Matériau textile protecteur (1) ayant une fonction de protection vis-à-vis des substances nocives et/ou toxiques radioactives et/ou vis-à-vis des substances nocives et/ou toxiques biologiques et/ou vis-à-vis des substances nocives et/ou toxiques chimiques, de préférence matériau textile pour filtre à adsorption,
le matériau textile protecteur (1) comprenant :
(a) un support textile (2), perméable à l'air, bidimensionnel et/ou plan, sous forme d'un matériau textile plan ;
(b) une couche adhésive (3), appliquée sur le support textile (2), la couche adhésive (3) étant une couche perméable à l'air et de structure discontinue, à base d'une mousse polymère adhésive rompue, séchée et durcie, et la couche adhésive (3) présentant une masse surfacique située dans la plage de 5 g/m² à 60 g/m²; et
(c) une couche d'adsorption (4), appliquée sur la couche adhésive (3) pour adhérer à celle-ci, la couche d'adsorption (4) comprenant une pluralité de particules adsorbantes individuelles (5) ou étant formée à partir de celles-ci, les particules adsorbantes (5) étant utilisées en une quantité située dans la plage de 5 g/m² à 150 g/m².

2. Matériau protecteur selon la revendication 1,
dans lequel la mousse polymère adhésive rompue présente une pluralité de bulles de mousse séchées et durcies, en particulier réticulées, détruites et/ou éclatées et/ou affaissées ; et/ou
dans lequel la mousse polymère adhésive rompue, en particulier les bulles de mousse séchées et durcies, en particulier réticulées, détruites et/ou éclatées et/ou affaissées de la mousse adhésive rompue présente une pluralité de parois et/ou de traverses détruites et/ou rompues et/ou affaissées, en polymère adhésif ; et/ou
dans lequel la couche polymère adhésive rompue présente une proportion de bulles de mousse détruites et/ou éclatées et/ou affaissées d'au moins 10 %, en particulier d'au moins 30 %, de préférence d'au moins 50 %, préférentiellement d'au moins 70 %, d'une manière particulièrement préférée d'au moins 90 %, d'une manière tout particulièrement préférée d'au moins 95 %, rapporté au nombre total de bulles de mousse dans la mousse polymère adhésive rompue ; et/ou
dans lequel la mousse polymère adhésive rompue est conçue non fermée et/ou dans lequel la mousse polymère adhésive rompue présente une pluralité de percements, de pores, de canaux et/ou d'ouvertures s'étendant en particulier dans la mousse polymère adhésive rompue, et/ou une pluralité de percements, pores, canaux et/ou ouvertures reliant en particulier les faces extérieures respectives de la mousse polymère adhésive rompue et/ou de la couche adhésive (3) ; et/ou
dans lequel la mousse polymère adhésive rompue est conçue de manière continue et/ou cohérente ; et/ou
dans lequel la mousse polymère adhésive rompue est appliquée au moins pour l'essentiel sur toute la surface et/ou sur toute la face du support (2).

3. Matériau protecteur selon la revendication 1 ou 2,
dans lequel la couche adhésive (3) est appliquée et/ou est présente sur le support textile (2) en une quantité située dans la plage de 10 g/m² à 50 g/m², de préférence dans la plage de 20 g/m² à 40 g/m², préférentiellement dans la plage de 25 g/m² à 35 g/m², et/ou dans lequel la couche adhésive (3) présente une masse surfacique située dans la plage de 10 g/m² à 50 g/m², de préférence dans la plage de 20 g/m² à 40 g/m², préférentiellement dans la plage de 25 g/m² à 35 g/m² ; et/ou
dans lequel la couche adhésive (3) est appliquée en une quantité, rapportée à la surface, au moins pour l'essentiel égale à celle de la couche d'adsorption, et/ou dans lequel la couche adhésive (3) présente une masse surfacique au moins pour l'essentiel égale à celle de la couche d'adsorption (4) ; et/ou
dans lequel la couche adhésive (3) est appliquée en une quantité, rapportée à la surface, inférieure à celle de la couche d'adsorption, et/ou dans lequel la couche adhésive (3) présente une masse surfacique inférieure à celle de la couche d'adsorption (4) ; et/ou
dans lequel la couche adhésive (3) présente une épaisseur d₃ d'au plus 1 mm, en particulier d'au plus 0,5 mm, de préférence d'au plus 0,3 mm, préférentiellement d'au plus 0,2 mm, et/ou dans lequel la couche adhésive (3) présente une épaisseur d₃ située dans la plage de 0,01 mm à 1 mm, en particulier dans la plage de 0,05 mm à 0,75 mm, de préférence dans la plage de 0,08 mm à 0,5 mm, préférentiellement dans la plage de 0,1 mm à 0,3 mm ; et/ou
dans lequel la couche adhésive (3) présente une masse volumique située dans la plage de 100 g/l à 500 g/l, en particulier dans la plage de 150 g/l à 400 g/l, de préférence dans la plage de 200 g/l à 350 g/l ; et/ou
dans lequel la couche adhésive (3) se présente partiellement enfoncée dans le support textile (2) et/ou dans lequel la couche adhésive (3) s'étend dans le support textile (2) ; et/ou
dans lequel la couche adhésive (3) s'étend dans le support textile (2) sur au moins 5 %, en particulier sur au moins 10 %, de préférence sur au moins 20 %, préférentiellement sur au moins 30 %, d'une manière particulièrement préférée sur au moins 40 %, d'une manière tout particulièrement préférée sur au moins 50 % de l'épaisseur d₂ du support textile (2), et/ou dans lequel la couche adhésive (3) s'étend dans le support textile (2) sur au plus 95 %, en particulier sur au plus 90 %, de préférence sur au plus 80 %, préférentiellement sur au plus 70 % de l'épaisseur d₂ du support textile (2) ; et/ou
dans lequel la mousse polymère adhésive rompue peut être obtenue par séchage et/ou durcissement, en particulier par réticulation, d'une solution et/ou d'une dispersion du polymère adhésif, moussées, de préférence moussées par apport d'une énergie mécanique, à base aqueuse ou organique, de préférence à base aqueuse, en particulier conjointement avec une rupture au moins partielle de la mousse fournie par la solution et/ou la dispersion du polymère adhésif moussées, en particulier le séchage et/ou le durcissement, en particulier la réticulation, étant mis en oeuvre en présence d'au moins un agent moussant et éventuellement d'au moins un stabilisateur de mousse et éventuellement d'au moins un agent de réticulation et éventuellement d'au moins un émulsifiant et éventuellement d'au moins un épaississant.

4. Matériau protecteur selon la revendication 3,
dans lequel la solution et/ou la dispersion du polymère adhésif contient une solution et/ou une dispersion de départ à base aqueuse ou organique, de préférence à base aqueuse, en particulier en des quantités situées dans la plage de 50 parties en poids à 150 parties en poids, en particulier dans la plage de 70 parties en poids à 130 parties en poids, de préférence dans la plage de 90 parties en poids à 110 parties en poids, rapporté à la solution ou à la dispersion du polymère adhésif, et/ou dans lequel la solution et/ou la dispersion de départ du polymère adhésif présente une teneur en extrait sec, en particulier sous la forme du polymère adhésif, située dans la plage de 20 % en poids à 80 % en poids, en particulier dans la plage de 30 % en poids à 70 % en poids, de préférence dans la plage de 40 % en poids à 60 % en poids, rapporté à la solution et/ou à la dispersion du polymère adhésif ; et/ou
dans lequel la solution et/ou la dispersion du polymère adhésif contient l'agent moussant en des quantités situées dans la plage de 0,25 partie en poids à 10 parties en poids, en particulier dans la plage de 0,5 partie en poids à 5 parties en poids, de préférence dans la plage de 0,75 partie en poids à 2 parties en poids, par rapport à la solution ou à la dispersion du polymère adhésif ; et/ou
dans lequel le stabilisateur de mousse est un sel d'acide gras, en particulier anionique, et/ou dans lequel la solution et/ou la dispersion du polymère adhésif contient le stabilisateur de mousse en des quantités situées dans la plage de 2 parties en poids à 25 parties en poids, en particulier dans la plage de 3 parties en poids à 20 parties en poids, de préférence dans la plage de 5 parties en poids à 10 parties en poids, rapporté à la solution ou à la dispersion du polymère adhésif ; et/ou
dans lequel l'agent de réticulation est un isocyanate en particulier bloqué, de préférence un polyisocyanate aliphatique en particulier bloqué ; et/ou
dans lequel la solution et/ou la dispersion du polymère adhésif contiennent l'agent de réticulation en des quantités situées dans la plage de 0,5 partie en poids à 15 parties en poids, en particulier dans la plage de 1 partie en poids à 10 parties en poids, de préférence dans la plage de 3 parties en poids à 8 parties en poids, rapporté à la solution ou à la dispersion du polymère adhésif ; et/ou
dans lequel l'émulsifiant est un polyglycol éther en particulier non ionique, en particulier un arylpolyglycol éther en particulier non ionique, et/ou dans lequel la solution et/ou la dispersion du polymère adhésif contiennent l'émulsifiant en des quantités situées dans la plage de 0,25 partie en poids à 10 parties en poids, en particulier dans la plage de 0,5 partie en poids à 5 parties en poids, de préférence dans la plage de 1 partie en poids à 3 parties en poids, rapporté à la solution ou à la dispersion du polymère adhésif ; et/ou
dans lequel la solution et/ou la dispersion du polymère adhésif contiennent l'épaississant en des quantités situées dans la plage de 0,05 partie en poids à 5 parties en poids, en particulier dans la plage de 0,1 partie en poids à 3 parties en poids, de préférence dans la plage de 0,2 partie en poids à 1 partie en poids, rapporté à la solution ou à la dispersion du polymère adhésif.

5. Matériau protecteur selon l'une quelconque des revendications précédentes,
dans lequel la couche d'adsorption (4) est conçue de manière discontinue, et/ou dans lequel la couche d'adsorption (4) est conçue comme un filtre plat à adsorption ; et/ou
dans lequel les particules adsorbantes (5) de la couche d'adsorption (4) sont choisies dans le groupe
(i) du charbon actif en particulier particulaire et/ou des particules de charbon actif, de préférence sous forme de particules de charbon actif sous forme de grains (« charbon granulé ») ou de sphères (« charbon sphérique ») ;
(ii) des zéolites, en particulier des zéolites naturelles et/ou synthétiques ;
(iii) des tamis moléculaires, en particulier des tamis moléculaires zéolitiques, des tamis moléculaires synthétiques et/ou en particulier des tamis moléculaires synthétiques à base de carbone, d'oxydes et/ou de verres ;
(iv) des particules d'oxyde métallique et/ou métalliques ;
(v) des résines échangeuses d'ions, en particulier des échangeurs de cations et/ou d'anions, polydispersés et/ou monodispersés, en particulier du type gel et/ou du type macroporeux ;
(vi) des oxydes inorganiques, en particulier des dioxydes de silicium, des gels de silice et/ou des oxydes d'aluminium ;
(vii) des polymères organiques poreux et/ou des polymères hybrides organiques-inorganiques poreux et/ou des réseaux organométalliques, en particulier les MOF (*Metall Organic Framework*), les COF (*Covalent Organic Framework*), les ZIF (*Zeolithe Imidazolate Framework*), les POM (*Polymer Organic Material*) et/ou les OFC ;
(viii) des granulés minéraux ;
(ix) des clathrates ; ainsi que
(x) des mélanges et/ou combinaisons de ceux-ci ; et/ou
dans lequel les particules adsorbantes (5) de la couche d'adsorption (4) sont formées de charbon actif en particulier particulaire et/ou de particules de charbon actif, de préférence sous forme de particules de charbon actif sous forme de grains (« charbon granulé ») ou de sphères (« charbon sphérique ») et/ou sont constituées de ceux-ci ; et/ou
dans lequel le diamètre des particules adsorbantes (5), en particulier des particules de charbon actif, est de 0,005 mm à 2,5 mm, de préférence de 0,01 mm à 2 mm, préférentiellement de 0,015 mm à 0,5 mm, d'une manière particulièrement préférée de 0,02 mm à 0,3 mm, d'une manière tout particulièrement préférée de 0,03 mm à 0,15 mm ; et/ou dans lequel le diamètre moyen en particulier le diamètre moyen D₅₀, des particules adsorbantes (5), en particulier des particules de charbon actif, est de 0,01 mm à 2 mm, en particulier de 0,02 mm à 1 mm, préférentiellement de 0,03 mm à 0,5 mm, d'une manière particulièrement préférée de 0,04 mm à 0,4 mm, d'une manière tout particulièrement préférée de 0,04 mm à 0,2 mm ; et/ou
dans lequel les particules adsorbantes (5), en particulier les particules de charbon actif, sont utilisées en une quantité située dans la plage de 10 g/m² à 90 g/m², de préférence de 15 g/m² à 50 g/m², préférentiellement de 20 g/m² à 40 g/m², et/ou dans lequel la couche d'adsorption (4) comprend les particules adsorbantes (5), en particulier les particules de charbon actif, en une quantité située dans la plage de 10 g/m² à 90 g/m², de préférence de 15 g/m² à 50 g/m², préférentiellement de 20 g/m² à 40 g/m²; et/ou
dans lequel la couche d'absorption (4) s'étend partiellement dans la couche adhésive (3) ; et/ou
dans lequel la couche d'absorption (4) s'étend dans la couche adhésive (3) sur au moins 10 %, en particulier sur au moins 15 %, de préférence sur au moins 20 % de l'épaisseur d₃ de la couche adhésive (3), et/ou dans lequel la couche d'absorption (4) s'étend dans la couche adhésive (3) sur au plus 60 %, en particulier sur au plus 50 %, de préférence sur au plus 40 % de l'épaisseur d₃ de la couche adhésive (3).

6. Matériau protecteur selon l'une quelconque des revendications précédentes,
dans lequel le support textile (2) est conçu comme une étoffe textile, en particulier comme un matériau textile perméable à l'air, de préférence un tissu, un tricot, un article en maille, une grille, un non-tissé ou un composite textile, et/ou dans lequel le support textile (2) présente une masse surfacique située dans la plage de 10 g/m² à 400 g/m², en particulier dans la plage de 20 g/m² à 200 g/m², préférentiellement dans la plage de 30 g/m² à 150 g/m².

7. Matériau protecteur selon l'une quelconque des revendications précédentes,
dans lequel le matériau protecteur présente au moins une couche de couverture (6), en particulier dans lequel la couche de couverture (6) est disposée sur la face de la couche d'adsorption (4) opposée au support textile (2) et/ou à la couche adhésive (3), et/ou dans lequel la couche de couverture (6) est fixée à la couche d'adsorption (4) et/ou à la couche adhésive (3), en particulier à la couche d'adsorption (4), et/ou est appliquée pour adhérer à celle-ci,
en particulier dans lequel la couche de couverture (6) est une étoffe textile, en particulier un matériau textile perméable à l'air, en particulier dans lequel l'étoffe textile est un tissu, un tricot, un article en maille, une grille, un non-tissé ou un composite textile, en particulier un non-tissé, et/ou dans lequel la couche de couverture (6) présente une masse surfacique située dans la plage de 1 g/m² à 200 g/m², en particulier dans la plage de 5 g/m² à 100 g/m², de préférence dans la plage de 10 g/m² à 50 g/m², et/ou dans lequel la couche de couverture (6) présente une masse surfacique d'au plus 200 g/m², en particulier d'au plus 100 g/m², de préférence d'au plus 50 g/m²; et/ou
en particulier dans lequel la couche de couverture (6) est conçue comme une couche de filtre à particules et/ou à aérosol, en particulier dans lequel la couche de couverture (6) est conçue comme un filtre HEPA (High Efficiency Penetration ou Particulate Air) ou un filtre ULPA (Ultra Low Penetration ou Particulate Air).

8. Matériau protecteur selon l'une quelconque des revendications précédentes,
dans lequel le matériau protecteur (1) présente une masse surfacique totale située dans la plage de 80 g/m² à 500 g/m², en particulier dans la plage de 90 g/m² à 400 g/m², de préférence dans la plage de 100 g/m² à 250 g/m², et/ou dans lequel le matériau protecteur (1) présente une perméabilité aux gaz ou à l'air d'au moins 50 l·m⁻²·s⁻¹, en particulier d'au moins 100 l·m⁻²·s^{-1,} de préférence d'au moins 150 l·m⁻²·s⁻¹, préférentiellement d'au moins 200 l·m⁻²·s⁻¹, d'une manière particulièrement préférée d'au moins 250 l·m⁻²·s⁻¹, d'une manière tout particulièrement préférée d'au moins 350 l·m⁻²·s⁻¹, et/ou jusqu'à 10 000 l·m⁻²·s⁻¹ pour une résistance à l'écoulement de 127 Pa, et/ou dans lequel le matériau protecteur (1) présente une épaisseur d₁ située dans la plage de 0,1 à 15 mm, en particulier dans la plage de 0,2 à 10 mm, de préférence dans la plage de 0,3 à 5,0 mm, préférentiellement dans la plage de 0,4 à 3,0 mm.

9. Matériau protecteur selon l'une quelconque des revendications précédentes,
dans lequel le matériau protecteur (1) présente un effet barrière vis-à-vis des substances nocives et/ou toxiques, en particulier des armes chimiques, en particulier du sulfure de bis[2-chloroéthyle], déterminé par la méthode 2.2 de CRDC-SP-84010, d'au plus 4 µg/cm² par 24 h, en particulier d'au plus 3,5 µg/cm² par 24 h, de préférence d'au plus 3,0 µg/cm² par 24 h, préférentiellement d'au plus 2,5 µg/cm² par 24 h, d'une manière particulièrement préférée d'au plus 2,25 µg/cm² par 24 h, d'une manière tout particulièrement préférée d'au plus 2 µg/cm² par 24 h.

10. Procédé de fabrication d'un matériau textile protecteur ayant une fonction de protection vis-à-vis des substances nocives et/ou toxiques radioactives et/ou des substances nocives et/ou toxiques biologiques et/ou vis-à-vis des substances nocives et/ou toxiques chimiques, de préférence pour la fabrication d'un matériau textile pour filtre à adsorption, en particulier tel que défini dans l'une quelconque des revendications précédentes, le procédé comprenant les étapes suivantes, dans l'ordre indiqué, à savoir :
(a) la fourniture d'un support textile perméable à l'air, bidimensionnel et/ou plan, sous forme d'un matériau textile plan ;
(b) l'application d'une couche adhésive (3) sur le support textile, la couche adhésive (3) étant appliquée sous forme d'une solution et/ou d'une dispersion d'un polymère adhésif, moussées, de préférence moussées par apport d'une énergie mécanique, à base aqueuse ou organique, de préférence à base aqueuse, et la solution et/ou la dispersion du polymère adhésif moussées étant appliquées en une quantité située dans la plage de 10 g/m² à 150 g/m² sur le support textile ;
(c) l'application et/ou la mise à adhérer d'une pluralité de particules adsorbantes individuelles sur la couche adhésive (3) obtenue à l'étape (b), en particulier de telle sorte qu'il en résulte une couche d'adsorption (4) appliquée sur la couche adhésive (3), les particules adsorbantes (5) étant utilisées en une quantité située dans la plage de 5 g/m² à 150 g/m²;
(d) le séchage et/ou le durcissement de la couche adhésive (3) sous forme de la solution et/ou de la dispersion moussées du polymère adhésif, conjointement avec une rupture de la mousse fournie par la solution et/ou la dispersion moussées du polymère adhésif, de telle sorte que la couche adhésive (3) soit obtenue sous la forme d'une mousse polymère adhésive rompue, séchée et durcie, en particulier réticulée, et/ou se présente sous cette forme.

11. Procédé selon la revendication 10,
dans lequel, à l'étape (a), le support textile est utilisé sous forme d'une étoffe textile, de préférence sous forme d'un matériau textile perméable à l'air, de préférence sous forme d'un tissu, d'un tricot, d'un article en maille, d'une grille, d'un non-tissé ou d'un composite textile ; et/ou
dans lequel le moussage de la solution et/ou de la dispersion du polymère adhésif moussées utilisées à l'étape (b) est réalisé par introduction d'un gaz et/ou d'air dans la solution et/ou dans la dispersion du polymère adhésif, en particulier dans lequel l'introduction du gaz et/ou de l'air est réalisée par injection par une buse, délayage, introduction par vibration, introduction par agitation, insufflation d'un gaz et/ou d'air et/ou par introduction d'un gaz et/ou d'air par apport d'une force de cisaillement dans la solution et/ou dans la dispersion du polymère adhésif ; et/ou
dans lequel la solution et/ou la dispersion du polymère adhésif contiennent au moins un agent moussant et éventuellement au moins un stabilisateur de mousse et éventuellement au moins un agent de réticulation et éventuellement au moins un émulsifiant et éventuellement au moins un épaississant ; et/ou
dans lequel, à l'étape (b), l'application de la couche adhésive (3) sur le support textile est mise en oeuvre par application à la racle ; et/ou
dans lequel, à l'étape (b), la solution et/ou la dispersion moussées sont appliquées sur le support textile en une quantité située dans la plage de 20 g/m² à 100 g/m², de préférence dans la plage de 40 g/m² à 80 g/m²; et/ou
dans lequel, à l'étape (b), la solution et/ou la dispersion moussées du polymère adhésif sont appliquées sur le support textile sur une épaisseur située dans la plage de 0,01 mm à 2 mm, en particulier dans la plage de 0,05 mm à 1,5 mm, de préférence dans la plage de 0,1 mm à 0,75 mm, préférentiellement dans la plage de 0,15 mm à 0,5 mm.

12. Procédé selon la revendication 10 ou 11,
dans lequel, à l'étape (c), l'application et/ou la mise à adhérer des particules adsorbantes sont réalisées par saupoudrage et/ou ruissellement et/ou enduction des particules adsorbantes sur la couche adhésive (3), éventuellement en même temps, et/ou après coup, par application des particules adsorbantes par une pression contre et/ou sur la couche adhésive (3) ; et/ou
dans lequel, à l'étape (c), les particules adsorbantes sont appliquées sur la couche adhésive (3) et/ou y sont mises à adhérer de telle sorte qu'il en résulte une occupation au moins pour l'essentiel sur toute la surface de la couche adhésive (3) par les particules adsorbantes, et/ou qu'au moins 80 %, en particulier au moins 90 %, de préférence au moins 95 %, préférentiellement au moins 99 %, préférentiellement au moins 99,5 % de la surface de la couche adhésive (3) soient occupés par les particules adsorbantes ; et/ou
dans lequel, à l'étape (d), le séchage et/ou le durcissement sont mis en oeuvre à une température située dans la plage de 30 °C à 250 °C, en particulier de 50 °C à 200 °C, de préférence de 70 °C à 180 °C, préférentiellement de 90 °C à 160 °C, et/ou dans lequel, à l'étape (d), le séchage et/ou le durcissement sont mis en oeuvre pendant une durée située dans la plage de 0,1 min à 15 min, en particulier de 0,5 min à 10 min, de préférence de 1 min à 5 min ; et/ou
dans lequel, à l'étape (d), le séchage et le durcissement, en particulier la réticulation, sont mis en oeuvre successivement et/ou sous forme d'étapes distinctes, en particulier dans lequel le durcissement est mis en oeuvre après mise en oeuvre du séchage ; et/ou
dans lequel, à l'étape (d), la couche adhésive (3) est obtenue sous forme d'une couche conçue perméable à l'air et discontinue, à base de la mousse polymère adhésive rompue, séchée et durcie.

13. Utilisation d'un matériau textile protecteur tel que défini dans l'une des revendications 1 à 9,
pour la fabrication d'un équipement de protection et/ou d'objets de protection de tous types, en particulier de vêtements de protection, en particulier pour le domaine civil ou militaire, tels que des combinaisons de protection, des gants de protection, des chaussures de protection, des chaussettes de protection, des vêtements de protection de la tête et analogues, et des capuchons de protection de tous types, de préférence tous les matériaux de protection mentionnés ci-dessus pour une utilisation NRBC et/ou ayant une fonction de protection vis-à-vis des substances nocives et/ou toxiques radioactives et/ou vis-à-vis des substances nocives et/ou toxiques biologiques et/ou vis-à-vis des substances nocives et/ou toxiques chimiques ; et/ou
pour la fabrication de filtres et de matériaux filtrants de tous types, en particulier pour éliminer les substances nocives, malodorantes et toxiques de tous types, de préférence pour éliminer des substances nocives et/ou toxiques radioactives et/ou des substances nocives et/ou toxiques biologiques et/ou des substances nocives et/ou toxiques chimiques, en particulier de flux d'air et/ou de gaz, tels que les filtres pour masques de protection NRBC, les filtres anti-odeur, les filtres de surface, les filtres à air, en particulier les filtres pour la purification de l'air ambiant, les structures supports adsorbantes et les filtres pour le domaine médical.

14. Utilisation d'un matériau textile protecteur tel que défini dans l'une des revendications 1 à 9, en tant qu'équipements de protection et/ou objets de protection de tous types, en particulier pour le domaine civil ou militaire, en particulier les vêtements de protection, tels que les combinaisons de protection, les gants de protection, les chaussures de protection, les chaussettes de protection, les vêtements de protection de la tête et analogues, ainsi que les capuchons de protection, de préférence tous les équipements de protection et/ou objets de protection mentionnés ci-dessus pour une utilisation NRBC et/ou ayant une fonction de protection vis-à-vis des substances nocives et/ou toxiques radioactives et/ou vis-à-vis des substances nocives et/ou toxiques biologiques et/ou vis-à-vis des substances nocives et/ou toxiques chimiques.

15. Utilisation d'un matériau textile protecteur tel que défini dans l'une des revendications 1 à 9, en tant que filtres et matériaux filtrants de tous types, en particulier pour éliminer des substances nocives, malodorantes et toxiques de tous types, de préférence pour éliminer des substances nocives et/ou toxiques radioactives et/ou des substances nocives et/ou toxiques biologiques et/ou des substances nocives et/ou toxiques chimiques, en particulier à partir de flux d'air et/ou de gaz, tels que les filtres pour masques de protection, les filtres anti-odeur, les filtres de surface, les filtres à air, en particulier les filtres pour la purification de l'air ambiant, les structures supports adsorbantes et les filtres pour le domaine médical.
